# EUROPEAN PATENT APPLICATION

(11) **EP 4 653 127 A1**
(43) Date of publication of application: **26.11.2025**
(21) Application number: 23917418.8
(22) Date of filing: 16.01.2023
(51) Int. Cl.: B23K 26/34, B23K 26/21

(54) **DATA GENERATION METHOD, DATA STRUCTURE, MANUFACTURING METHOD, AND ADDITIVE MANUFACTURING DEVICE**

(71) Applicant: NIKON CORPORATION, Tokyo 140-8601 (JP)
(72) Inventor: MURATA, Hiromichi, Tokyo 140-8601 (JP); FUNATSU, Takayuki, Tokyo 140-8601 (JP); ICHIJO, Tsukasa, Tokyo 140-8601 (JP); MOMOSE, Atsumi, Tokyo 140-8601 (JP); DOI, Ryosuke, Tokyo 140-8601 (JP); KITSUDA, Shin, Tokyo 140-8601 (JP)
(74) Representative: Hoffmann Eitle
(86) International application number: PCT/JP2023/001033
(87) International publication number: WO 2024/154203

(57) **Abstract**

A data generation method generates processing control information to be used by an additive manufacturing apparatus to build a build object including a plurality of layers. The data generation method includes: acquiring first bead width information, which is information for building a bead with a first width and which is inputted by a user; acquiring second bead width information, which is information for building a bead with a second width and which is inputted by the user; and generating the processing control information including first path information indicating a path for building the build object with the first width in a first layer of the plurality of layers, and second path information indicating a path for building the build object with the second width in the first layer, based on the first bead width information and the second bead width information.

## Description

### Technical Field

The present invention relates to technical fields of a data generation method of generating data to be used to build a build object, a data structure, as well as a processing method and an additive manufacturing apparatus that uses the generated data.

### Background Art

As this type of method, there is proposed a method of generating a plurality of slice images from three-dimensional data on an object and of generating a tool path of a three-dimensional build apparatus based on the plurality of slice images (see Patent Literature 1).

### Citation List

### Patent Literature

Patent Literature 1: US2019/212717A1

### Summary of Invention

A first aspect provides a data generation method for generating processing control information to be used by an additive manufacturing apparatus to build a build object including a plurality of layers, the data generation method including: acquiring first bead width information, which is information for building a bead with a first width and which is inputted by a user; acquiring second bead width information, which is information for building a bead with a second width that is different from the first width and which is inputted by the user; and generating the processing control information including first path information indicating a path for building the build object with the first width in a first layer of the plurality of layers, and second path information indicating a path for building the build object with the second width in the first layer, based on the first bead width information and the second bead width information.

A second aspect provides a data generation method for generating processing control information to be used by an additive manufacturing apparatus to build a build object, the additive manufacturing apparatus including a processing head including at least a material supply port for supplying a build material for building the build object, the data generation method including: generating the processing control information including first path information indicating a first path for building a bead by using a first build material, second path information indicating a second path for building a bead by using a second build material that is different from the first build material, and information for moving the processing head to a position for changing the build material supplied from the material supply port from the first build material to the second build material, after the additive manufacturing apparatus builds a bead based on the first path information and before the additive manufacturing apparatus builds a bead based on the second path information.

A third aspect provides a data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method including: acquiring information, which is inputted by a user, about a melting area that is at least a part of a portion added by the additive manufacturing apparatus and that is melted by being irradiated with the processing beam or a melting beam that is different from the processing beam without supplying the build material; and generating the processing control information including first path information indicating a path for performing additive manufacturing by supplying the build material to the position that is irradiated with the processing beam, and second path information indicating a path for irradiating the melting area with the processing beam or a melting beam that is different from the processing beam.

A fourth aspect provides a data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method including: acquiring information, which is inputted by a user, about a measurement area for performing measurement of at least one of a surface and an inside of a build object built by the additive manufacturing apparatus; and generating the processing control information including first path information indicating a path for performing additive manufacturing by supplying the build material to the position that is irradiated with the processing beam, and second path information indicating a path for moving a measurement apparatus that measures the measurement area.

A fifth aspect provides a data generation method including: reading management information including first data indicating correspondence between model information indicating a three-dimensional model of a build object and condition information indicating a build condition of a processing apparatus that builds the build object; reading the model information and the condition information indicated by the first data included in the management information; and generating parameter information including a variable parameter, as a part of processing control information for controlling the processing apparatus, based on the three-dimensional model indicated by the model information and the build condition indicated by the condition information associated with the model information.

A sixth aspect provides a data generation method for generating processing control information to be used by an additive manufacturing apparatus to build a build object including a plurality of layers, the data generation method including: acquiring first bead width information, which is information for building a bead with a first width and which is inputted by a user; automatically setting second bead width information, which is information for building a bead with a second width that is different from the first width; and generating the processing control information including first path information indicating a path for building the build object with the first width in a first layer of the plurality of layers, and second path information indicating a path for building the build object with the second width in the first layer, based on the first bead width information and the second bead width information.

A seventh aspect provides a data generation method for generating processing control information to be used by an additive manufacturing apparatus to build a build object, the additive manufacturing apparatus including a processing head including at least a material supply port for supplying a build material for building the build object, the data generation method including: generating the processing control information including first path information indicating a first path for building a bead by using a first build material, second path information indicating a second path for building a bead by using a second build material that is different from the first build material, and information for moving the processing head to a position that is different from a build start position of a bead based on the second path information, after the additive manufacturing apparatus builds a bead based on the first path information and before the additive manufacturing apparatus builds the bead based on the second path information.

An eighth aspect provides a data generation method for generating processing control information to be used by an additive manufacturing apparatus to build a build object, the additive manufacturing apparatus including a processing head, which includes at least a beam irradiation apparatus that applies a first processing beam for building the build object and a material supply port for supplying a build material to a position that is irradiated with the first processing beam, the data generation method including: acquiring information about an additional processing area in which at least a part of a portion added by the additive manufacturing apparatus is processed by being irradiated with the first processing beam or a second processing beam that is different from the first processing beam without supplying the build material; and generating the processing control information including first path information indicating a path for performing additive manufacturing by supplying the build material to the position that is irradiated with the first processing beam, and second path information indicating a path for irradiating the additional processing area with the first processing beam or the second processing beam that is different from the first processing beam.

A ninth aspect provides a data generation method including: setting first bead width information, which is information for building a bead with a first width; setting second bead width information, which is information for building a bead with a second width that is different from the first width; and generating the processing control information including first path information indicating a path for building a build object with the first width, and second path information indicating a path for building the build object with the second width, based on the first bead width information and the second bead width information.

A tenth aspect provides a data generation method for generating processing control information to be used by an additive manufacturing apparatus to build a build object, the additive manufacturing apparatus including a processing head including at least a material supply port for supplying a build material for building the build object, the data generation method including: generating the processing control information including first path information indicating a first path for building a bead by using a first build material, second path information indicating a second path for building a bead by using a second build material that is different from the first build material, and information for moving the processing head, after the additive manufacturing apparatus builds a bead based on the first path information and before the additive manufacturing apparatus builds a bead based on the second path information.

An eleventh aspect provides a data generation method for generating processing control information to be used by an additive manufacturing apparatus to build a build object, the additive manufacturing apparatus including a processing head, which includes at least a beam irradiation apparatus that applies a first processing beam for building the build object and a material supply port for supplying a build material to a position that is irradiated with the first processing beam, the data generation method including: generating the processing control information including first path information indicating a path for performing additive manufacturing by supplying the build material to the position that is irradiated with the first processing beam, and second path information indicating a path for additional processing to be performed by applying the first processing beam or a second processing beam that is different from the first processing beam.

A twelfth aspect provides a data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method including: generating the processing control information including first path information indicating a path for performing additive processing by supplying the build material to the position that is irradiated with the first processing beam, and second path information indicating a path for performing measurement of at least one of a surface and an inside of a build object.

A thirteenth aspect provides a data structure, including first data indicating correspondence between model information indicating a three-dimensional model of a build object and condition information indicating a build condition of a processing apparatus that builds the build object.

A fourteenth aspect provides a processing method using the processing control information generated by the data generation method provided by the ninth aspect, the processing method including: building a bead with the first width, based on the first path information included in the processing control information; and building a bead with the second width, based on the second path information included in the processing control information.

A fifteenth aspect provides a processing method using the processing control information generated by the data generation method provided by the tenth aspect, the processing method including: building a bead by using the first build material supplied from the material supply port, based on the first path information included in the processing control information; building a bead by using the second build material supplied from the material supply port, based on the second path information included in the processing control information; and moving the processing head based on the information for moving the processing head, which is included in the processing control information, after the bead based on the first path information is built and before the bead based on the second path information is built.

A sixteenth aspect provides a processing method using the processing control information generated by the data generation method provided by the eleventh aspect, the processing method including: performing the additive manufacturing by supplying the build material from the material supply port to the position that is irradiated with the first processing beam by the beam irradiation apparatus, based on the first path information included in the processing control information; and performing the additional processing by the beam irradiation apparatus applying the first processing beam or the second processing beam, based on the second path information included in the processing control information.

A seventeenth aspect provides a processing method using the processing control information generated by the data generation method provided by the twelfth aspect, the processing method including: performing the additive manufacturing by supplying the build material from the material supply port to the position that is irradiated with the processing beam by the beam irradiation apparatus, based on the first path information included in the processing control information; and performing the measurement of at least one of the surface and the inside of the build object, based on the second path information included in the processing control information.

An eighteenth aspect provides an additive manufacturing apparatus that uses the processing control information generated by the data generation method provided by the ninth aspect, the additive manufacturing apparatus including: a processing head; and a control apparatus that controls the processing head, wherein the control apparatus controls the processing head to build a bead with the first width, based on the first path information included in the processing control information, and controls the processing head to build a bead with the second width, based on the second path information included in the processing control information.

A nineteenth aspect provides an additive manufacturing apparatus that uses the processing control information generated by the data generation method provided by the tenth aspect, the additive manufacturing apparatus including: a processing head including a material supply port for supplying a build material; and a control apparatus that controls the processing head, wherein the control apparatus controls the processing head to build a bead by supplying the first build material from the material supply port, based on the first path information included in the processing control information, controls the processing head to build a bead by supplying the second build material from the material supply port, based on the second path information included in the processing control information, and moves the processing head to a position that is different from a build start position of a bead based on the second path information, based on the information for moving the processing head, which is included in the processing control information, after a bead based on the first path information is built and before the bead based on the second path information is built.

A twentieth aspect provides an additive manufacturing apparatus that uses the processing control information generated by the data generation method provided by the eleventh aspect, the additive manufacturing apparatus including: a processing head, which includes a beam irradiation apparatus that applies a first processing beam for building a build object and a material supply port for supplying a build material; and a control apparatus that controls the processing head, wherein the control apparatus controls the processing head to perform additive manufacturing by supplying the build material from the material supply port to a position that is irradiated with the first processing beam by the beam irradiation apparatus, based on the first path information included in the processing control information, and controls the processing head to perform additional processing by the beam irradiation apparatus applying the first processing beam or a second processing beam that is different from the first processing beam, based on the second path information included in the processing control information.

A twenty-first aspect provides an additive manufacturing apparatus that uses the processing control information generated by the data generation method provided by the twelfth aspect, the additive manufacturing apparatus including: a processing head, which includes a beam irradiation apparatus that applies a processing beam for building a build object and a material supply port for supplying a build material; and a control apparatus that controls the processing head, wherein the control apparatus controls the processing head to perform additive manufacturing by supplying the build material from the material supply port to a position that is irradiated with the processing beam by the beam irradiation apparatus, based on the first path information included in the processing control information, and controls the processing head to perform measurement of at least one of a surface and an inside of the build object, based on the second path information included in the processing control information.

A twenty-second aspect provides an additive manufacturing apparatus including: a processing head including a material supply port for supplying a build material for building a build object; and a control apparatus that controls the processing head, wherein the control apparatus controls the processing head to build a bead by supplying a first build material from the material supply port, based on first path information indicating a first path for building a bead by using the first build material, controls the processing head to build a bead by supplying a second build material that is different from the first build material, from the material supply port, based on second path information indicating a second path for building a bead by using the second build material, and moves the processing head to a position for changing the build material supplied from the material supply port from the first build material to the second build material, based on information for moving the processing head, after a bead based on the first path information is built and before a bead based on the second path information is built.

A twenty-third aspect provides an additive manufacturing apparatus including: a processing head including a material supply port for supplying a build material for building a build object; and a control apparatus that controls the processing head, wherein the control apparatus controls the processing head to build a bead by supplying a first build material from the material supply port, based on first path information indicating a first path for building a bead by using the first build material, controls the processing head to build a bead by supplying a second build material that is different from the first build material, from the material supply port, based on second path information indicating a second path for building a bead by using the second build material, and moves the processing head, based on information for moving the processing head, after a bead based on the first path information is built and before a bead based on the second path information is built.

An operation and another advantage of the present invention will be apparent from an example embodiment described below.

### Brief Description of Drawings

[FIG. 1] FIG. 1 is a cross-sectional view illustrating a configuration of a processing system.
[FIG. 2] FIG. 2 is a block diagram illustrating a configuration of the processing system.
[FIG. 3] FIG. 3 is a diagram illustrating a configuration of an irradiation optical system.
[FIG. 4] FIG. 4(a) is a plan view illustrating a movement trajectory of a target irradiation area in a processing unit area, and FIG. 4(b) is a plan view illustrating a movement trajectory of the target irradiation area on a build surface.
[FIG. 5] Each of FIG. 5(a) and FIG. 5(b) is a plan view illustrating a movement trajectory of the target irradiation area in the processing unit area, and FIG. 5(c) is a plan view illustrating a movement trajectory of the target irradiation area on the build surface.
[FIG. 6] Each of FIG. 6(a) to FIG. 6(e) is a cross-sectional view illustrating an aspect in which a certain area on a workpiece is irradiated with processing light and a build material is supplied thereto.
[FIG. 7] FIG. 7(a) is a plan view illustrating a target movement trajectory of the processing unit area, and FIG. 7(b) is a plan view illustrating a liner build object that is built on the build surface in a case where the processing unit area moves along the target movement trajectory illustrated in FIG. 7(a).
[FIG. 8] Each of FIG. 8(a) to FIG. 8(c) is a cross-sectional view that illustrates a process for building a three-dimensional build object.
[FIG. 9] FIG. 9 is a conceptual diagram illustrating an example of data flow.
[FIG. 10] FIG. 10 is a diagram illustrating an example of a three-dimensional build object including a plurality of parts.
[FIG. 11] FIG. 11 is a flowchart illustrating an example of data flow.
[FIG. 12] FIG. 12 is a block diagram illustrating a configuration of an information processing apparatus.
[FIG. 13] FIG. 13 is a diagram illustrating an example of a screen relating to bead width information presented to a user.
[FIG. 14] FIG. 14 is a flowchart illustrating an example of operation of the information processing apparatus.
[FIG. 15] FIG. 15 is a diagram illustrating an example of a cross section of a layered structural object indicated by slice data.
[FIG. 16] FIG. 16 is a diagram illustrating an example of a path for building a bead.
[FIG. 17] FIG. 17 is a diagram for describing processing for switching a build material.
[FIG. 18] FIG. 18 is a flowchart illustrating another example of the operation of the information processing apparatus.
[FIG. 19] FIG. 19 is a diagram illustrating an example of a material switching position related to the processing for switching the build material.
[FIG. 20] FIG. 20 is a diagram illustrating an example of a melting area.
[FIG. 21] FIG. 21 is a flowchart illustrating another example of the operation of the information processing apparatus.
[FIG. 22] FIG. 22(a) is a cross-sectional view of a pipe built by a first time point, and FIG. 22(b) is a cross-sectional view of a pipe built by a second time point, which is before the first time point
[FIG. 23] FIG. 23 is a flowchart illustrating another example of the operation of the information processing apparatus.
[FIG. 24] FIG. 24(a) is a diagram illustrating an example of a path indicated by measurement path information when a measuring device is an imaging apparatus, and FIG. 24(b) is a diagram illustrating an example of the path indicated by the measurement path information when the measuring device is a laser scanner.
[FIG. 25] FIG. 25 is a conceptual diagram illustrating an example of a method of generating the measurement path information when measurement path information associated with one piece of three-dimensional model information is used as measurement path information related to another piece of three-dimensional model information.

### Description of Example embodiments

Hereinafter, with reference to drawings, a data generation method, a data structure, a processing method, and an additive manufacturing apparatus according to an example embodiment will be described.

### (1) Processing System SYS

First, a processing system SYS that is configured to process a workpiece W that is one example of an object will be described. The processing system SYS may perform an additive manufacturing based on a Laser Metal Deposition (LMD). The Laser Metal Deposition may be referred to as Direct Energy Deposition (DED). The additive manufacturing based on the Laser Metal Deposition is an additive manufacturing for building a build object that is integrated with the workpiece W or separatable from the workpiece W by melting a build material M supplied to the workpiece W with processing light EL (namely, an energy beam in a form of light). The processing system SYS may be referred to as an additive manufacturing apparatus as it performs the additive manufacturing.

Moreover, in the below-described description, a positional relationship of various components included in the processing system SYS will be described by using an XYZ rectangular coordinate system that is defined by an X-axis, a Y-axis and a Z-axis that are orthogonal to one another. Note that each of an X-axis direction and a Y-axis direction is assumed to be a horizontal direction (namely, a predetermined direction in a horizontal plane) and a Z-axis direction is assumed to be a vertical direction (namely, a direction that is orthogonal to the horizontal plane, and substantially a vertical direction) in the below-described description, for convenience of the description. Moreover, rotational directions (in other words, inclination directions) around the X-axis, the Y-axis and the Z-axis are referred to as a θX direction, a θY direction and a θZ direction, respectively. Here, the Z-axis direction may be a gravity direction. Moreover, an XY plane may be a horizontal direction.

### (1-1) Entire Configuration of Processing System SYS

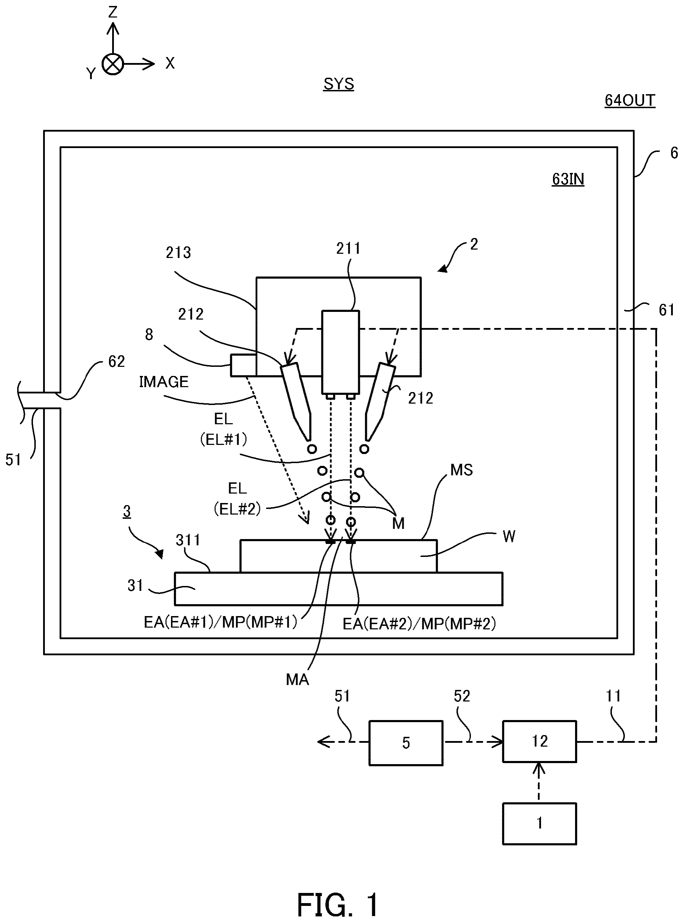

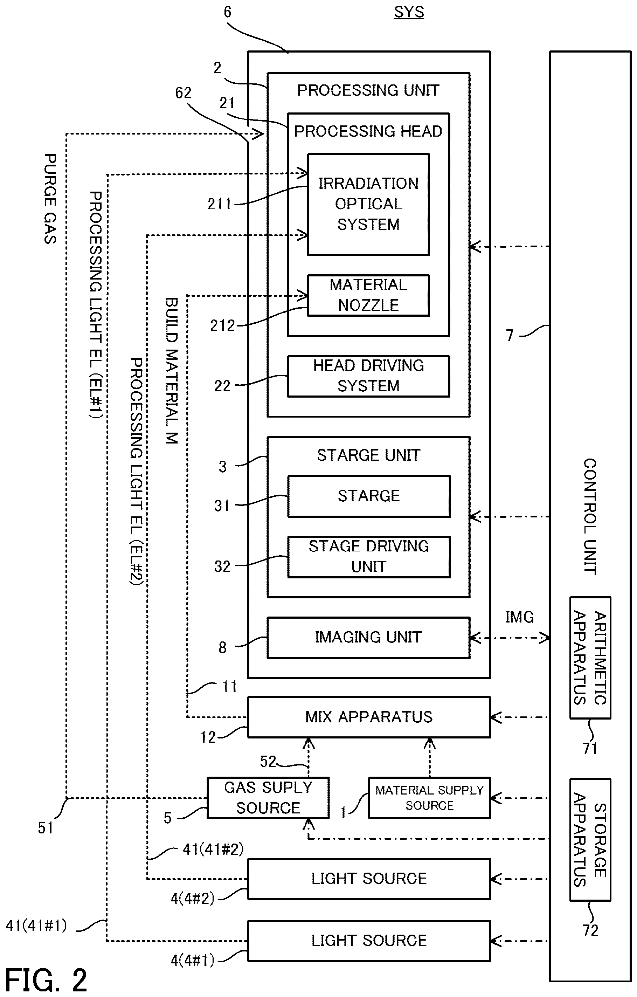

With reference to FIG. 1 and FIG. 2, a configuration of the processing system SYS will be described. FIG. 1 is a cross-sectional view that schematically illustrates the configuration of the processing system SYS. FIG. 2 is a system configuration diagram illustrating a system configuration of the processing system SYS.

The processing system SYS is configured to perform the additive manufacturing on the workpiece W. The processing system SYS is configured to build the build object integrated with (or separatable from) the workpiece W by performing the additive manufacturing on the workpiece W. In this case, the additive manufacturing performed on the workpiece W corresponds to a processing for adding, to the workpiece W, the build object integrated with (or separatable from) the workpiece W. Note that the build object may mean any object built by the processing system SYS. For example, the processing system SYS is configured to build a three-dimensional build object ST (namely, a three-dimensional build object having a size in each of three-dimensional directions, a solid object, in other words, a build object having a size in the X-axis direction, the Y-axis direction, and the Z-axis direction) as one example of the build object.

In a case where the workpiece W is a below-described stage 31, the processing system SYS is configured to perform the additive manufacturing on the stage 31. In a case where the workpiece W is a placed object that is an object placed on the stage 31, the processing system SYS is configured to perform the additive manufacturing on the placed object. The placed object placed on the stage 31 may be another three-dimensional build object ST built by the processing system SYS (namely, an existing structural object). Note that FIG. 1 illustrates an example in which the workpiece W is the existing structural object placed on the stage 31. Moreover, in the below-described description, the example in which the workpiece W is the existing structural object placed on the stage 31 will be described.

The workpiece W may be an item that needs to be repaired having a missing part. In this case, the processing system SYS may perform a repair processing for repairing the item that needs to be repaired by performing the additive manufacturing for building the build object for filling in the missing part. Namely, the additive manufacturing performed by the processing system SYS may include the additive manufacturing for adding, to the workpiece W, the build object for filling in the missing part.

As described above, the processing system SYS is configured to perform the additive manufacturing based on the Laser Metal Deposition. Namely, it can be said that the processing system SYS is a 3D printer that builds an object by using an Additive Layer Manufacturing technique. Note that the Additive Layer Manufacturing technique may be referred to as a Rapid Prototyping, a Rapid Manufacturing, or an Additive Manufacturing.

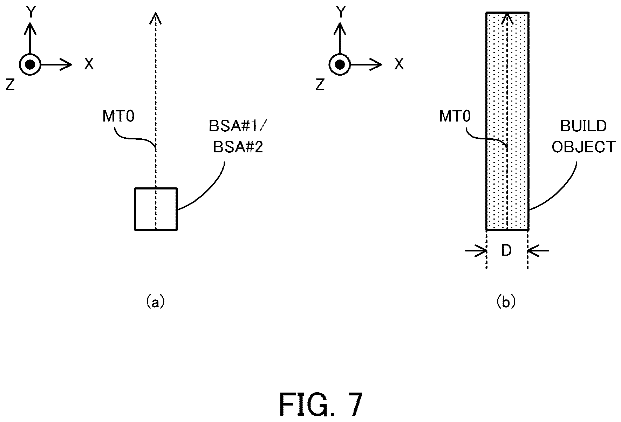

The processing system SYS that uses the Additive Layer Manufacturing technique builds the three-dimensional build object ST in which a plurality of structural layers SL (see FIG. 7 below) are stacked by forming the plurality of structural layers SL in sequence. In this case, the processing system SYS first sets a surface of the workpiece W to be a build surface MS on which the build object is actually built, and builds a first structural layer SL on the build surface MS. Then, the processing system SYS sets a surface of the first structural layer SL to be a new build surface MS, and builds a second structural layer SL on the build surface MS. Then, the processing system SYS repeats the same operation to build the three-dimensional build object ST in which the plurality of structural layers SL are stacked.

The processing system SYS performs the additive manufacturing by processing the build material M with the processing light EL that is an energy beam. The build material M is a material that is molten by an irradiation with the processing light EL having a predetermined intensity or more intensity. At least one of a metal material and a resin material is usable as the build material M, for example. At least one of a material including copper, a material including tungsten, and a material including stainless steel is one example of the metal material. However, another material that is different from the metal material and the resin material may be used as the build material M. The build material M is a powder-like material. Namely, the build material M is a powdery material. However, the build material M may not be the powdery material. For example, at least one of a wire-like build material and a gas-like build material may be used as the build material M.

The workpiece W may be also an object including a material that is molten by an irradiation with the processing light EL having a predetermined intensity or more intensity. The material of the workpiece W may be the same as or may be different from the build material M. At least one of a metal material and a resin material is usable as the material of the workpiece W, for example. At least one of a material including copper, a material including tungsten, and a material including stainless steel is one example of the metal material. However, another material that is different from the metal material and the resin material may be used as the material of the workpiece W.

In order to perform the additive manufacturing, the processing system SYS includes a material supply source 1, a processing unit 2, a stage unit 3, a light source 4, a gas supply source 5, a control unit 7, and an imaging unit 8 as illustrated in FIG. 1 and FIG. 2. The processing unit 2 and the stage unit 3 may be contained in a chamber space 63IN in a housing 6. In this case, the processing system SYS may perform the additive manufacturing in the chamber space 63IN. Note that at least one of the processing unit 2 and the stage unit 3 may not be contained in the chamber space 63IN in the housing 6.

The material supply source 1 is configured to supply the build material M to the processing unit 2. The material supply source 1 supplies, to the processing unit 2, the build material M the amount of which is necessary for performing the additive manufacturing per unit time by supplying the build material M the amount of which is based on the necessary amount.

The processing unit 2 builds the build object by processing the build material M supplied from the material supply source 1. In order to build the build object, the processing unit 2 includes a processing head 21, and a head driving system 22. Furthermore, the processing head 21 includes an irradiation optical system 211, and a plurality of material nozzles 212. However, the processing head 21 may include a plurality of irradiation optical systems 211. The processing head 21 may include a single material nozzle 212.

The irradiation optical system 211 is an optical system for emitting the processing light EL. Specifically, the irradiation optical system 211 is optically connected to the light source 4 that emits (generates) the processing light EL through a light transmitting member 41. At least one of an optical fiber and a light pipe is one example of the light transmitting member 41.

In the example illustrated in FIG. 1 and FIG. 2, the processing system SYS includes two light sources 4 (specifically, light sources 4#1 and 4#2), and the irradiation optical system 211 are optically connected to the light sources 4#1 and 4#2 through the light transmitting members 41#1 and 41#2, respectively. The irradiation optical system 211 emits both of the processing light EL transmitted from the light source 4#1 through the light transmitting member 41#1 and the processing light EL transmitted from the light source 4#2 through the light transmitting member 41#2. Incidentally, in the below-described description, in a case where it is necessary to distinguish the two processing lights EL emitted from the irradiation optical system 211, the processing light EL generated by the light source 4#1 is referred to as "processing light EL#1", and the processing light EL generated by the light source 4#2 is referred to as "processing light EL#2", as necessary.

However, the processing system SYS may include a single light source 4 instead of the plurality of light sources 4. The irradiation optical system 211 may emit single processing light EL instead of emitting the plurality of processing lights EL.

The irradiation optical system 211 emits the processing lights EL in a downward direction (namely, toward a -Z side) from the irradiation optical system 211. The stage 31 is positioned below the irradiation optical system 211. In a case where the workpiece W is placed on the stage 31, the irradiation optical system 211 irradiates the build surface MS with the emitted processing lights EL. Specifically, the irradiation optical system 211 is configured to irradiate a target irradiation area (a target irradiation position) EA, which is set on the build surface MS as an area that is irradiated with the processing lights EL (typically, in which the lights are condensed), with the processing lights EL. Incidentally, in the below-described description, in a case where it is necessary to distinguish two target irradiation areas EA that are irradiated with the two processing lights EL by the irradiation optical system 211, respectively, the target irradiation area EA that is irradiated with the processing light EL#1 by the irradiation optical system 211 is referred to as a "target irradiation area EA#1" and the target irradiation area EA that is irradiated with the processing light EL#2 by the irradiation optical system 211 is referred to as a "target irradiation area EA#2", as necessary. Furthermore, a state of the irradiation optical system 211 is switchable between a state where the target irradiation areas EA are irradiated with the processing lights EL and a state where the target irradiation areas EA are not irradiated with the processing lights EL under the control of the control unit 7. Note that a direction of the processing lights EL emitted from the irradiation optical system 211 is not limited to a direct downward direction (namely, coincident with the -Z-axis direction), and may be a direction that is inclined with respect to the Z-axis by a predetermined angle, for example. Namely, a third optical system 216 described below (alternatively, a fθ lens 2162 described below) is not limited to an optical system that is telecentric on the object side, but may be an optical system that is non-telecentric on the object side.

The irradiation optical system 211 may form a melt pool MP on the build surface MS by irradiating the build surface MS with the processing light EL. For example, the irradiation optical system 211 may form a melt pool MP#1 on the build surface MS by irradiating the build surface MS with the processing light EL#1. For example, the irradiation optical system 211 may form a melt pool MP#2 on the build surface MS by irradiating the build surface MS with the processing light EL#2. The melt pool MP#1 and the melt pool MP#2 may be integrated. Alternatively, the melt pool MP#1 and the melt pool MP#2 may be separated from each other. However, the melt pool MP#1 may not be formed on the build surface MS by the irradiation with the processing light EL#1. The melt pool MP#2 may not be formed on the build surface MS by the irradiation with the processing light EL#2. The irradiation optical system 211 may be referred to as a beam irradiation apparatus as it applies the processing light EL (namely, an energy beam in a form of light).

The material nozzle 212 supplies (for example, injects, jets, blows out or sprays) the build material M. The material nozzle 212 is physically connected to the material supply source 1, which is a supply source of the build material M, through a supply pipe 11 and a mix apparatus 12. The material nozzle 212 supplies the build material M supplied from the material supply source 1 through the supply pipe 11 and the mix apparatus 12. The material nozzle 212 may pressure-feed the build material M supplied from the material supply source 1 through the supply pipe 11. Namely, the build material M from the material supply source 1 and gas for feeding (namely, pressure-feed gas, and inert gas such as Nitrogen or Argon, for example) may be mixed by the mix apparatus 12 and then pressure-fed to the material nozzle 212 through the supply pipe 11. As a result, the material nozzle 212 supplies the build material M together with the gas for feeding. Purge gas supplied from the gas supply source 5 is used as the gas for feeding, for example. However, gas supplied from a gas supply source that is different from the gas supply source 5 may be used as the gas for feeding.

Note that the material nozzle 212 is illustrated to have a tube-like shape in FIG. 1, however, a shape of the material nozzle 212 is not limited to this shape. The material nozzle 212 supplies the build material M in a downward direction (namely, toward the -Z side) from the material nozzle 212. The stage 31 is positioned below the material nozzle 212. In a case where the workpiece W is placed on the stage 31, the material nozzle 212 supplies the build material M toward the build surface MS. Note that a supply direction of the build material M supplied from the material nozzle 212 is a direction that is inclined with respect to the Z-axis by a predetermined angle (as one example, an acute angle), however, it may be the -Z-axis direction (namely, a direct downward direction).

The material nozzle 212 may supply the build material M to a position that is irradiated with at least one of the processing lights EL#1 and EL#2 (namely, at least one of the target irradiation areas EA#1 and EA#2). Therefore, the material nozzle 212 and the irradiation optical system 211#1 and 211#2 may be aligned so that a target supply area MA, which is set on the build surface MS as an area to which the material nozzle 212 supplies the build material M, overlaps with at least one of the target irradiation areas EA#1 and EA#2 at least partially. A size of the target supply area MA may be larger than, may be smaller than, or may be the same as a size of at least one of the target irradiation areas EA#1 and EA#2.

The material nozzle 212 may supply the build material M to the melt pool MP. Specifically, the material nozzle 212 may supply the build material M to at least one of the melt pool MP#1 and the melt pool MP#2. However, the material nozzle 212 may not supply the build material M to the melt pool MP. For example, the processing system SYS may melt the build material M by the processing light EL emitted from the irradiation optical system 211 before the build material M from the material nozzle 212 reaches the workpiece W, and make the molten build material M adhere to the workpiece W. The material nozzle 212 may be referred to as a material supply port as it supplies the build material M.

The irradiation optical system 211 and the material nozzle 212 may be contained in a head housing 213 of the processing head 21. The head housing 213 is a housing in which a housing space for containing the irradiation optical system 211 and the material nozzle 212 is formed. In this case, the irradiation optical system 211 and the material nozzles 212 may be contained in the housing space in the head housing 213.

The head driving system 22 moves the processing head 21 under the control of the control unit 7. Namely, the head driving system 22 moves the irradiation optical system 211 and the material nozzle 212 under the control of the control unit 7. The head driving system 22 moves the processing head 21 along at least one of the X-axis direction, the Y-axis direction, the Z-axis direction, the θX direction, the θY direction, and the θZ direction, for example. Incidentally, an operation for moving the processing head 21 along at least one of the θX direction, the θY direction, and the θZ direction may be considered to be equivalent to an operation for rotating the processing head 21 around at least one of a rotational axis along the X-axis, a rotational axis along the Y-axis, and a rotational axis along the Z-axis.

When the head driving system 22 moves the processing head 21, a relative positional relationship between the processing head 21 and each of the stage 31 and the workpiece W placed on the stage 31 changes. As a result, a positional relationship between the irradiation optical system 211 of the processing head 21 and each of the stage 31 and the workpiece W changes. Therefore, the head driving system 22 may be considered to serve as a position change apparatus that is configured to change the positional relationship between the irradiation optical system 211 and each of the stage 31 and the workpiece W. Furthermore, when the positional relationship between the processing head 21 and each of the stage 31 and the workpiece W changes, a relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS on which the additive manufacturing is performed). In this case, the head driving system 22 may be considered to move the processing head 21 so that each of the target irradiation areas EA#1 and EA#2 and the target supply area MA moves on the build surface MS.

The stage unit 3 includes the bed 30, the stage 31, and a stage driving system 32. The stage 31 may be referred to as a table.

The workpiece W is placed on the stage 31. Specifically, the workpiece W is placed on a stage placement surface 311 that is one surface (for example, a surface facing toward the +Z side) of the stage 31. The stage 31 is configured to support the workpiece W placed on the stage 31. The stage 31 may be configured to hold the workpiece W placed on the stage 31. In this case, the stage 31 may include at least one of a mechanical chuck, an electro-static chuck, and a vacuum chuck to hold the workpiece W. Alternatively, the stage 31 may not be configured to hold the workpiece W placed on the stage 31. In this case, the workpiece W may be placed on the stage 31 without a clamp. Moreover, the workpiece W may be attached to a holding member, and the holding member to which the workpiece W is attached may be placed on the stage 31. The above-described irradiation optical system 211 emits each of the processing lights EL#1 and EL#2 in at least a part of a period during which the workpiece W is placed on the stage 31. Furthermore, the above-described material nozzle 212 supplies the build material M in at least a part of the period during which the workpiece W is placed on the stage 31.

The stage driving system 32 moves the stage 31. For example, the stage driving system 32 moves the stage 31 along at least one of the X-axis direction, the Y-axis direction, the Z-axis direction, the θX direction, the θY direction, and the θZ direction. Incidentally, an operation for moving the stage 31 along at least one of the θX direction, the θY direction, and the θZ direction may be considered to be equivalent to an operation for rotating the stage 31 around at least one of a rotational axis along the X-axis (namely, an A-axis), a rotational axis along the Y-axis (namely, a B-axis), and a rotational axis along the Z-axis (namely, a C-axis).

When the stage driving system 32 moves the stage 31, the relative positional relationship between the processing head 21 and each of the stage 31 and the workpieces W changes. As a result, the positional relationship between the irradiation optical system 211 of the processing head 21 and each of the stage 31 and the workpiece W changes. Therefore, the stage driving system 32 may be considered to serve as a position change apparatus that is configured to change the positional relationship between the irradiation optical system 211 and each of the stage 31 and the workpiece W, as with the head driving system 22. Furthermore, when the positional relationship between the processing head 21 and each of the stage 31 and the workpiece W changes, the relative positional relationship between the workpiece W and each of the target irradiation areas EA#1 and EA#2 and the target supply area MA also changes. Namely, each of the target irradiation areas EA#1 and EA#2 and the target supply area MA moves along at least one of the X-axis direction, the Y-axis direction, the Z-axis direction, the θX direction, the θY direction, and the θZ direction on the surface of the workpiece W (more specifically, the build surface MS). In this case, the stage driving system 32 may be considered to move the stage 31 so that each of the target irradiation areas EA#1 and EA#2 and the target supply area MA moves on the build surface MS.

The light source 4 emits at least one of infrared light, visible light, and ultraviolet light as the processing light EL, for example. However, other type of light may be used as the processing light EL. The processing light EL may include a plurality of pulsed lights (namely, a plurality of pulsed beams). The processing light EL may be a laser light. In this case, the light source 4 may include a semiconductor laser such as a laser light source (for example, a Laser Diode (LD)). At least one of a fiber laser, a CO₂ laser, a YAG laser, an Excimer laser and the like may be used as the laser light source. However, the processing light EL may not be the laser light. The light source 4 may include any light source (for example, at least one of a LED (Light Emitting Diode), a discharge lamp and the like).

As described above, the processing system SYS includes the plurality of light sources 4 (specifically, the light sources 4#1 and 4#2). In this case, a characteristic of the processing light EL#1 emitted by the light source 4#1 may be the same as a characteristic of the processing light EL#2 emitted by the light source 4#2. For example, a wavelength of the processing light EL#1 (typically, a peak wavelength that is a wavelength at which an intensity is maximum in a wavelength band of the processing light EL#1) may be the same as the wavelength (typically, a peak wavelength) of the processing light EL#2. For example, the wavelength band (typically, a range of wavelengths at which the intensity is equal to or higher than a certain value) of the processing light EL#1 may be the same as the wavelength band of the processing light EL#2. For example, the intensity of the processing light EL#1 may be the same as the intensity of the processing light EL#2. For example, an absorption rate of the workpiece W (alternatively, an object whose surface is the build surface MS, the same is applied in the below-described description) to the processing light EL#1 may be the same as an absorption rate of the workpiece W to the processing light EL#2. Especially, the absorption rate of the workpiece W to the peak wavelength of the processing light EL#1 may be the same as the absorption rate of the workpiece W to the peak wavelength of the processing light EL#2. Alternatively, the characteristic of the processing light EL#1 emitted by the light source 4#1 may be different from the characteristic of the processing light EL#2 emitted by the light source 4#2. For example, the wavelength (typically, the peak wavelength) of the processing light EL#1 may be different from the wavelength (typically, the peak wavelength) of the processing light EL#2. For example, the wavelength band of the processing light EL#1 may be different from the wavelength band of the processing light EL#2. For example, the intensity of the processing light EL#1 may be different from the intensity of the processing light EL#2. For example, the absorption rate of the workpiece W to the processing light EL#1 may be different from the absorption rate of the workpiece W to the processing light EL#2. Especially, the absorption rate of the workpiece W to the peak wavelength of the processing light EL#1 may be different from the absorption rate of the workpiece W to the peak wavelength of the processing light EL#2.

Incidentally, the processing system SYS illustrated in FIG. 2 includes the plurality of (e.g., two) light sources 4. However, the processing system SYS may not include the plurality of light sources 4. The processing system SYS may include a single light source 4. As one example, the processing system may include, as the single light source, a light source that emits (supplies) a wide wavelength band or a plurality of wavelengths of light. In this case, the processing system SYS may generate the processing light EL#1 and the processing light EL#2 whose wavelengths are different from each other by performing a wavelength division on the light emitted from this light source.

The gas supply source 5 is a source of the purge gas for purging the chamber space 63IN in the housing 6. The purge gas includes inert gas. At least one of Nitrogen gas and Argon gas is one example of the inert gas. The gas supply source 5 is connected to the chamber space 63IN through a supply port 62 formed in a wall member 61 of the housing 6 and a supply pipe 51 connecting the gas supply source 5 to the supply port 62. The gas supply source 5 supplies the purge gas to the chamber space 63IN through the supply pipe 51 and the supply port 62. As a result, the chamber space 63IN becomes a space purged by the purge gas. The purge gas supplied to the chamber space 63IN may be discharged from a non-illustrated outlet port formed in the wall member 61. Note that the gas supply source 5 may be a tank that stores the inert gas. In a case where the purge gas is the Nitrogen gas, the gas supply source 5 may be a Nitrogen gas generation apparatus that generates the Nitrogen gas by using air as material.

In a case where the material nozzle 212 supplies the build material M together with the purge gas as described above, the gas supply source 5 may supply the purge gas to the mix apparatus 12 to which the build material M is supplied from the material supply source 1. Specifically, the gas supply source 5 may be connected to the mix apparatus 12 through a supply pipe 52 that connects the gas supply source 5 and the mix apparatus 12. As a result, the gas supply source 5 supplies the purge gas to the mix apparatus 12 through the supply pipe 52. In this case, the build material M from the material supply source 1 may be supplied (specifically, pressure-fed) to the material nozzle 212 through the supply pipe 11 by the purge gas supplied from the gas supply source 5 through the supply pipe 52. Namely, the gas supply source 5 may be connected to the material nozzle 212 through the supply pipe 52, the mix apparatus 12 and the supply pipe 11. In this case, the material nozzle 212 supplies the build material M together with the purge gas for pressure-feeding the build material M.

The control unit 7 is configured to control an operation of the processing system SYS. For example, the control unit 7 may control the processing unit 2 (for example, at least one of the processing head 21 and the head driving system 22) of the processing system SYS to perform the additive manufacturing on the workpiece W. For example, the control unit 7 may control the stage unit 3 (for example, stage driving system 32) of the processing system SYS to perform the additive manufacturing on the workpiece W. For example, the control unit 7 may control the material supply source 1 of the processing system SYS to perform the additive manufacturing on the workpiece W. For example, the control unit 7 may control the light source 4 of the processing system SYS to perform the additive manufacturing on the workpiece W. For example, the control unit 7 may control the gas supply source 5 of the processing system SYS to perform the additive manufacturing on the workpiece W.

The control unit 7 may include a processor 71 and a storage apparatus 72. The processor 71 may include at least one of a CPU (Central Processing unit) and a GPU (Graphic Processing unit), for example. The storage apparatus 72 may include a memory. The control unit 7 serves as an apparatus for controlling the operation of the processing system SYS by means of the processor 71 executing a computer program. The computer program is a computer program that allows the processor 71 to execute (namely, to perform) a below-described operation that should be executed by the control unit 7. Namely, the computer program is a computer program that allows the control unit 7 to function so as to make the processing system SYS execute the below-described operation. The computer program executed by the processor 71 may be recorded in the storage apparatus 72 (namely, a recording medium) of the control unit 7, or may be recorded in any recording medium (for example, a hard disk or a semiconductor memory) that is built in the control unit 7 or that is attachable to the control unit 7. Alternatively, the processor 71 may download the computer program that should be executed from an apparatus positioned at an outside of the control unit 7 through a network interface. Incidentally, the storage apparatus 72 may be referred to as a recording apparatus.

The control unit 7 may control an emitting aspect of the processing light EL by the irradiation optical system 211. The emitting aspect may include at least one of the intensity of the processing light EL and emitting timing of the processing light EL, for example. In a case where the processing light EL includes the plurality of pulsed lights, the emitting aspect may include at least one of an ON time of the pulsed light, an emission cycle of the pulsed light and a ratio (what we call a duty ratio) of a length of the ON time of the pulsed light and a length of the emission cycle of the pulsed light, for example. Furthermore, the control unit 7 may control a movement aspect of the processing head 21 by the head driving system 22. The control unit 7 may control a movement aspect of the stage 31 by the stage driving system 32. The movement aspect may include at least one of a movement distance, a movement speed, a movement direction, and a movement timing (a movement period), for example. Moreover, the control unit 7 may control a supply aspect of the build material M by the material nozzle 212. The supply aspect may include at least one of the supplied amount (especially, the supplied amount per unit time) and a supply timing (a supply period).

The control unit 7 may not be positioned in the processing system SYS. For example, the control unit 7 may be positioned at the outside of the processing system SYS as a server or the like. In this case, the control unit 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485, and USB may be used as the wired network. A network using a parallel-bus-type interface may be used as the wired network. A network using an interface that is compatible to Ethernet such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control unit 7 and the processing system SYS may be configured to transmit and receive various information through the network. Moreover, the control unit 7 may be configured to transmit information such as a command and a control parameter to the processing system SYS through the network. The processing system SYS may include a reception apparatus that is configured to receive the information such as the command and the control parameter from the control unit 7 through the network. The processing system SYS may include a transmission apparatus that is configured to transmit the information such as the command and the control parameter to the control unit 7 through the network (namely, an output apparatus that is configured to output information to the control unit 7). Alternatively, a first control apparatus that is configured to perform a part of the arithmetic processing performed by the control unit 7 may be positioned in the processing system SYS and a second control apparatus that is configured to perform another part of the arithmetic processing performed by the control unit 7 may be positioned at the outside of the processing system SYS.

An arithmetic model that is buildable by machine learning may be implemented in the control unit 7 by the processor 71 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The control unit 7 may control the operation of the processing system SYS by using the arithmetic model. Namely, the operation for controlling the operation of the processing system SYS may include an operation for controlling the operation of the processing system SYS by using the arithmetic model. Note that the arithmetic model that has been built by off-line machine learning using training data may be implemented in the control unit 7. Moreover, the arithmetic model implemented in the control unit 7 may be updated by online machine learning on the control unit 7. Alternatively, the control unit 7 may control the operation of the processing system SYS by using the arithmetic model implemented in an apparatus positioned at an outside of the control unit 7 (namely, an apparatus positioned at an outside of the processing system SYS), in addition to or instead of the arithmetic model implemented on the control unit 7.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control unit 7. The recording medium may include a device that is configured to record the computer program (for example, a device for a universal use or a device for an exclusive use in which the computer program is embedded to be executable in a form of at least one of a software, a firmware, and the like). Moreover, various arithmetic processing or functions included in the computer program may be realized by a logical processing block that is realized in the control unit 7 by means of the control unit 7 (namely, a computer) executing the computer program, may be realized by a hardware such as a predetermined gate array (a FPGA, an ASIC) of the control unit 7, or may be realized in a form in which the logical process block and a partial hardware module that realizes a partial element of the hardware are combined.

The imaging unit 8 is an imaging apparatus that is configured to image an imaging target object under the control of the control unit 7. Therefore, the imaging unit 8 may include a camera that is configured to image the imaging target object. The camera may include an imaging element. The imaging element may include a CCD (Charged Coupled Device) sensor. The imaging element may include a CMOS (Complementary Metal Oxide Semiconductor) sensor. In this case, the imaging unit 8 may image the imaging target object by optically receiving light from the imaging target object with the imaging element. Namely, the imaging unit 8 may image the imaging target object by exposing the imaging element with the light from the imaging target object. Incidentally, an "exposure of the imaging element with the light from the imaging target object" may be referred to as an "exposure (exposure of the imaging target object) by the imaging element (namely, by the imaging unit 8)".

The imaging target object may include at least a part of the workpiece W. The imaging target object may include at least a part of the build object built by the processing system SYS. Especially, the imaging target object may include at least a part of the object on which the build surface MS is set. As described above, the build surface MS is set on the surface of the workpiece W or the structural layer SL. Therefore, the imaging target object may include at least a part of the workpiece W or the structural layer SL.

As described above, the melt pool MP is formed on the build surface MS by the processing light EL. In this case, the imaging unit 8 may be configured to image the melt pool MP. Namely, the imaging unit 8 may be configured to image an area that includes the melt pool MP (namely, an area on the build surface MS that includes the melt pool MP). In the below-described description, an example in which the imaging unit 8 images the melt pool MP will be described. Namely, in the below-described description, an example in which the imaging unit 8 images the area that includes the melt pool MP (namely, the area on the build surface MS that includes the melt pool MP) will be described.

The imaging unit 8 may be attached to the processing head 21. For example, as illustrated in FIG. 1, the imaging unit 8 may be attached to the head housing 213 of the processing head 21. In this case, when the processing head 21 moves by the head driving system 22, the imaging unit 8 attached to the processing head 21 also moves together with the processing head 21. In this case, a relative positional relationship between the processing head 21 and the imaging unit 8 is fixed. However, the imaging unit 8 may not to be attached to the processing head 21. The imaging unit 8 may be attached to an object different from the processing head 21.

The imaging unit 8 generates an image in which the imaging target object is captured by imaging the imaging target object. In the present example embodiment, the imaging unit 8 generates the image in which the melt pool MP is captured because the imaging unit 8 images the melt pool MP as described above. In the below-described description, the image generated by the imaging unit 8 (namely, the image in which the melt pool MP is captured) is referred to as a "melt pool image IMG".

The imaging unit 8 may output the generated melt pool image IMG to the control unit 7. The control unit 7 may control the processing system SYS based on the melt pool image IMG. For example, the control unit 7 may control the processing unit 2 (for example, at least one of the processing head 21 and the head driving system 22) to perform the additive manufacturing on the workpiece W based on the melt pool image IMG. For example, the control unit 7 may control the stage unit 3 (for example, the stage driving system 32) to perform the additive manufacturing on the workpiece W based on the melt pool image IMG. For example, the control unit 7 may control the material supply source 1 to perform the additive manufacturing on the workpiece W based on the melt pool image IMG. For example, the control unit 7 may control the light source 4 to perform the additive manufacturing on the workpiece W based on the melt pool image IMG. For example, the control unit 7 may control the gas supply source 5 to perform the additive manufacturing on the workpiece W based on the melt pool image IMG.

The imaging unit 8 may be referred to as a light receiving apparatus as it receives light from the imaging target object including at least a part of the workpiece W or at least a part of the structural layer SL, or from the melt pool MP. The imaging unit 8 may be referred to as a detection apparatus that detects light from the imaging target object including at least a part of the workpiece W or at least a part of the structural layer SL, or from the melt pool MP. The imaging unit 8 may measure the imaging target object including at least a part of the workpiece W or at least a part of the structural layer SL, or the melt pool MP. In this case, the imaging unit 8 may be referred to as a measurement apparatus.

### (1-2) Configuration of Irradiation Optical System 211

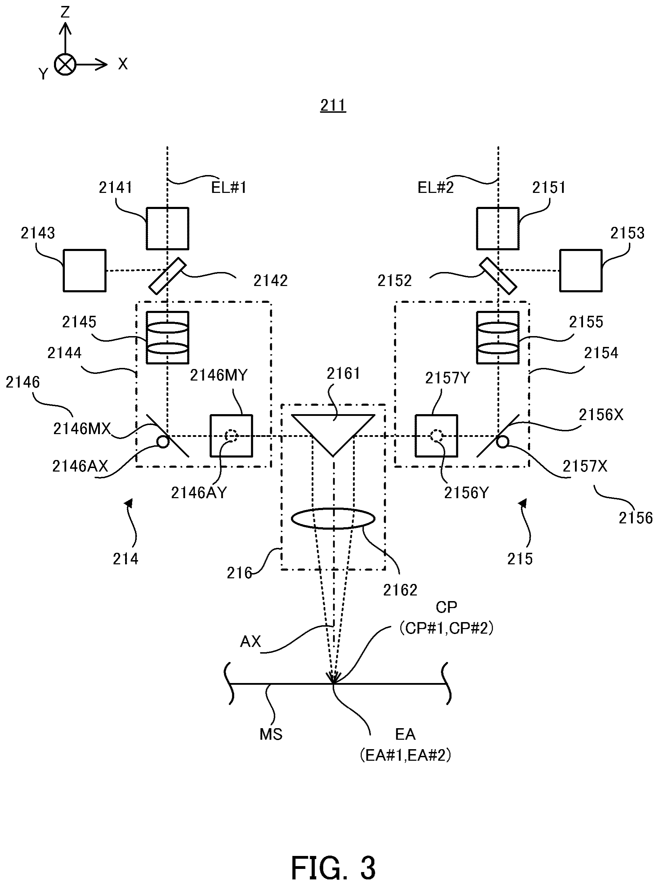

With reference to FIG. 3, a configuration of the irradiation optical system 211 will be described. FIG. 3 is a diagram illustrating the configuration of the irradiation optical system 211.

As illustrated in FIG. 3, the irradiation optical system 211 includes a first optical system 214, a second optical system 215, and the third optical system 216. The first optical system 214 is an optical system into which the processing light EL#1 emitted from the light source 4#1 enters. The first optical system 214 is an optical system that emits the processing light EL#1 emitted from the light source 4#1 toward the third optical system 216. The second optical system 215 is an optical system into which the processing light EL#2 emitted from the light source 4#2 enters. The second optical system 215 is an optical system that emits the processing light EL#2 emitted from the light source 4#2 toward the third optical system 216. The third optical system 216 is an optical system into which the processing light EL#1 emitted from the first optical system 214 and the processing light EL#2 emitted from the second optical system 215 enter. The third optical system 216 is an optical system that emits the processing light EL#1 emitted from the first optical system 214 and the processing light EL#2 emitted from the second optical system 215 toward the build surface MS.

The first optical system 214 includes a collimator lens 2141, a parallel plate 2142, a power meter 2143, and a Galvano scanner 2144. The Galvano scanner 2144 includes a focus control optical system 2145 and a Galvano mirror 2146. However, the first optical system 214 may not include at least one of the collimator lens 2141, the parallel plate 2142, the power meter 2143, and the Galvano scanner 2144. The Galvano scanner 2144 may not include at least one of the focus control optical system 2145 and the Galvano mirror 2146.

The processing light EL#1 emitted from the light source 4#1 enters the collimator lens 2141. The collimator lens 2141 converts the processing light EL#1 that has entered the collimator lens 2141 into collimated light. Incidentally, in a case where the processing light EL#1 emitted from the light source 4#1 is collimated light (namely, the processing light EL#1 that is the collimated light enters the first optical system 214), the first optical system 214 may not include the collimator lens 2141. The processing light EL#1 that has been converted to the collimated light by the collimator lens 2141 enters the parallel plate 2142. A part of the processing light EL#1 that has entered the parallel plate 2142 passes through the parallel plate 2142. Another part of the processing light EL#1 that has entered the parallel plate 2142 is reflected by the parallel plate 2142.

The processing light EL#1 that has passed through the parallel plate 2142 enters the Galvano scanner 2144. Specifically, the processing light EL#1 that has passed through the parallel plate 2142 enters the focus control optical system 2145 of the Galvano scanner 2144.

The focus control optical system 2145 is an optical member that is configured to change a condensed position CP of the processing light EL#1 (in the below-described description, it is referred to as a "condensed position CP#1"). Specifically, the focus control optical system 2145 is configured to change the condensed position CP#1 of the processing light EL#1 along an irradiation direction of the processing light EL#1 with which the build surface MS is irradiated. In the example illustrated in FIG. 3, the irradiation direction of the processing light EL#1 with which the build surface MS is irradiated is a direction whose main component is the Z-axis direction. In this case, the focus control optical system 2145 is configured to change the condensed position CP#1 of the processing light EL#1 along the Z-axis direction. Moreover, since the irradiation optical system 211 irradiates the build surface MS with the processing light EL from a position above the workpiece W, the irradiation direction of the processing light EL#1 is a direction that intersects the build surface MS (for example, the surface of the workpiece W or the structural layer SL). Therefore, the focus control optical system 2145 may be considered to be configured to change the condensed position CP#1 of the processing light EL#1 along the direction that intersects the build surface MS (for example, the surface of the workpiece W or the structural layer SL). The focus control optical system 2145 may be considered to be configured to change the condensed position CP#1 of the processing light EL#1 along a direction of an optical axis AX of the irradiation optical system 211 (typically, the third optical system 216).

Incidentally, the irradiation direction of the processing light EL#1 may mean an irradiation direction of the processing light EL#1 emitted from the third optical system 216. In this case, the irradiation direction of the processing light EL#1 may be the same as a direction along an optical axis of the third optical system 216. The irradiation direction of the processing light EL#1 may be the same as a direction along an optical axis of a terminal optical member, which is positioned at a position closest to the build surface MS, among optical members of the third optical system 216. The terminal optical member may be the fθ lens 2162 described below. Moreover, in a case where the below-described fθ lens 2162 includes a plurality of optical members, the terminal optical member may be an optical member, which is positioned at a position closest to the build surface MS, among the plurality of optical members of the fθ lens 2162.

The focus control optical system 2145 may include a plurality of lenses that are aligned along the irradiation direction of the processing light EL#1, for example. In this case, the focus control optical system 2145 may change the condensed position CP#1 of the processing light EL#1 by moving at least one of the plurality of lenses along its optical axis direction.

When the focus control optical system 2145 changes the condensed position CP#1 of the processing light EL#1, a positional relationship between the condensed position CP#1 of the processing light EL#1 and the build surface MS changes. Especially, a positional relationship between the condensed position CP#1 of the processing light EL#1 and the build surface MS in the irradiation direction of the processing light EL#1 changes. Therefore, the focus control optical system 2145 may be considered to change the positional relationship between the condensed position CP#1 of the processing light EL#1 and the build surface MS by changing the condensed position CP#1 of the processing light EL#1 by the focus control optical system 2145.

Incidentally, as described above, the Galvano scanner 2144 may not include the focus control optical system 2145. Even in this case, when the positional relationship between the irradiation optical system 211 and the build surface MS in the irradiation direction of the processing light EL#1 changes, the positional relationship between the condensed position CP#1 of the processing light EL#1 and the build surface MS in the irradiation direction of the processing light EL#1 changes. Therefore, even in a case where the Galvano scanner 2144 does not include the focus control optical system 2145, the processing system SYS may change the positional relationship between the condensed position CP#1 of the processing light EL#1 and the build surface MS in the irradiation direction of the processing light EL#1. For example, the processing system SYS may change the positional relationship between the condensed position CP#1 of the processing light EL#1 and the build surface MS in the irradiation direction of the processing light EL#1 by using the head driving system 22 to move the processing head 21 along the irradiation direction of the processing light EL#1. For example, the processing system SYS may change the positional relationship between the condensed position CP#1 of the processing light EL#1 and the build surface MS in the irradiation direction of the processing light EL#1 by using the stage driving system 32 to move the stage 31 along the irradiation direction of the processing light EL#1.

The processing light EL#1 that has been emitted from the focus control optical system 2145 enters the Galvano mirror 2146. The Galvano mirror 2146 changes an emitting direction of the processing light EL#1 emitted from the Galvano mirror 2146 by deflecting the processing light EL#1. Therefore, the Galvano mirror 2146 may be referred to as a deflection optical system. When the emitting direction of the processing light EL#1 emitted from the Galvano mirror 2146 is changed, a position from which the processing head 21 emits the processing light EL#1 is changed. When the position from which the processing head 21 emits the processing light EL#1 is changed, the target irradiation area EA#1 that is irradiated with the processing light EL#1 on the build surface MS moves. Namely, an irradiation position that is irradiated with the processing light EL#1 on the build surface MS moves. Therefore, the Galvano mirror 2146 may be considered to serve as an irradiation position movement apparatus that is configured to move the irradiation position of the processing light EL#1 on the build surface MS.

Especially, when the emitting direction of the processing light EL#1 emitted from the Galvano mirror 2146 is changed, the irradiation position of the processing light EL#1 relative to the processing head 21 that includes the Galvano mirror 2146 is changed. Therefore, the Galvano mirror 2146 may be considered to serve as a position change apparatus that is configured to change the irradiation position of the processing light EL#1 relative to the processing head 21.

The Galvano mirror 2146 includes an X scanning mirror 2146MX, an X scanning motor 2146AX, a Y scanning mirror 2146MY, and a Y scanning motor 2146AY, for example. The processing light EL#1 that has been emitted from the focus control optical system 2145 enters the X scanning mirror 2146MX. The X scanning mirror 2146MX reflects the processing light EL#1 that has entered the X scanning mirror 2146MX toward the Y scanning mirror 2146MY. The Y scanning mirror 2146MY reflects the processing light EL#1 that has entered the Y scanning mirror 2146MY toward the third optical system 216. Incidentally, each of the X scanning mirror 2146MX and the Y scanning mirror 2146MY may be referred to as a Galvano mirror.

The X scanning motor 2146AX swings or rotates the X scanning mirror 2146MX around a rotational axis along the Y-axis. As a result, an angle of the X scanning mirror 2146MX relative to an optical path of the processing light EL#1 entering the X scanning mirror 2146MX is changed. In this case, the build surface MS is scanned with the processing light EL#1 along the X-axis direction due to the swing or the rotation of the X scanning mirror 2146MX. Namely, the target irradiation area EA#1 (namely, the irradiation position of the processing light EL#1) moves along the X-axis direction on the build surface MS.

The Y scanning motor 2146AY swings or rotates the Y scanning mirror 2146MY around a rotational axis along the X-axis. As a result, an angle of the Y scanning mirror 2146MY relative to an optical path of the processing light EL#1 entering the Y scanning mirror 2146MY is changed. In this case, the build surface MS is scanned with the processing light EL#1 along the Y-axis direction due to the swing or the rotation of the Y scanning mirror 2146MY. Namely, the target irradiation area EA#1 (namely, the irradiation position of the processing light EL#1) moves along the Y-axis direction on the build surface MS.

In the present example embodiment, a virtual area in which the Galvano mirror 2146 moves the target irradiation area EA#1 on the build surface MS is referred to as a processing unit area BSA (especially, the processing unit area BSA#1). In this case, the target irradiation area EA#1 may be considered to move on a surface (a first surface) of the build surface MS that overlaps with the processing unit area BSA#1. Specifically, the virtual area in which the Galvano mirror 2146 moves the target irradiation area EA#1 on the build surface MS in a state where a positional relationship between the irradiation optical system 211 and the build surface MS is fixed (namely, is not changed) is referred to as the processing unit area BSA (especially, the processing unit area BSA#1). The processing unit area BSA#1 indicates a virtual area (in other words, a range) in which the processing head 21 actually performs the additive manufacturing by using the processing light EL#1 in a state where the positional relationship between the irradiation optical system 211 and the build surface MS is fixed. The processing unit area BSA#1 indicates a virtual area (in other words, a range) that is actually scanned by the processing head 21 with the processing light EL#1 in a state where the positional relationship between the irradiation optical system 211 and the build surface MS is fixed. The processing unit area BSA#1 indicates an area (in other words, a range) in which the target irradiation area EA#1 actually moves in a state where the positional relationship between the irradiation optical system 211 and the build surface MS is fixed. Therefore, the processing unit area BSA#1 may be regarded as a virtual area that is determined with respect to the processing head 21 (especially, the irradiation optical system 211). Namely, the processing unit area BSA#1 may be regarded as a virtual area positioned at a position that is determined with respect to the processing head 21 (especially, the irradiation optical system 211) on the build surface MS. Incidentally, a maximum area in which the Galvano mirror 2146 is allowed to move the target irradiation area EA#1 on the build surface MS in a state where the positional relationship between the irradiation optical system 211 and the build surface MS is fixed may be referred to as the processing unit area BSA#1.

In this case, the processing system SYS may move the target irradiation area EA#1 in the processing unit area BSA#1 by using the Galvano mirror 2146. Therefore, an operation for deflecting the processing light EL#1 by using the Galvano mirror 2146 may be considered to be equivalent to an operation for moving the target irradiation area EA#1 in the processing unit area BSA#1. Furthermore, as described above, the melt pool MP#1 is formed by irradiating the target irradiation area EA#1 with the processing light EL#1. In this case, the processing system SYS may be considered to move the melt pool MP#1 in the processing unit area BSA#1 by using the Galvano mirror 2146. Therefore, the operation for deflecting the processing light EL#1 by using the Galvano mirror 2146 may be considered to be equivalent to an operation for moving the melt pool MP#1 in the processing unit area BSA#1. Namely, the operation for moving the target irradiation area EA#1 in the processing unit area BSA#1 may be considered to be equivalent to the operation for moving the melt pool MP#1 in the processing unit area BSA#1.

Incidentally, as described above, even when at least one of the processing head 21 and the stage 31 moves, the target irradiation area EA#1 moves on the build surface MS. However, when at least one of the processing head 21 and the stage 31 moves, the relative positional relationship between the Galvano mirror 2146 and the build surface MS changes. As a result, the processing unit area BSA#1 that is determined with respect to the processing head 21 (namely, the processing unit area BSA#1 in which the Galvano mirror 2146 moves the target irradiation area EA#1 on the build surface MS) moves on the build surface MS. Therefore, in the present example embodiment, an operation for moving at least one of the processing head 21 and the stage 31 may be considered to be equivalent to an operation for moving the processing unit area BSA#1 relative to the build surface MS.

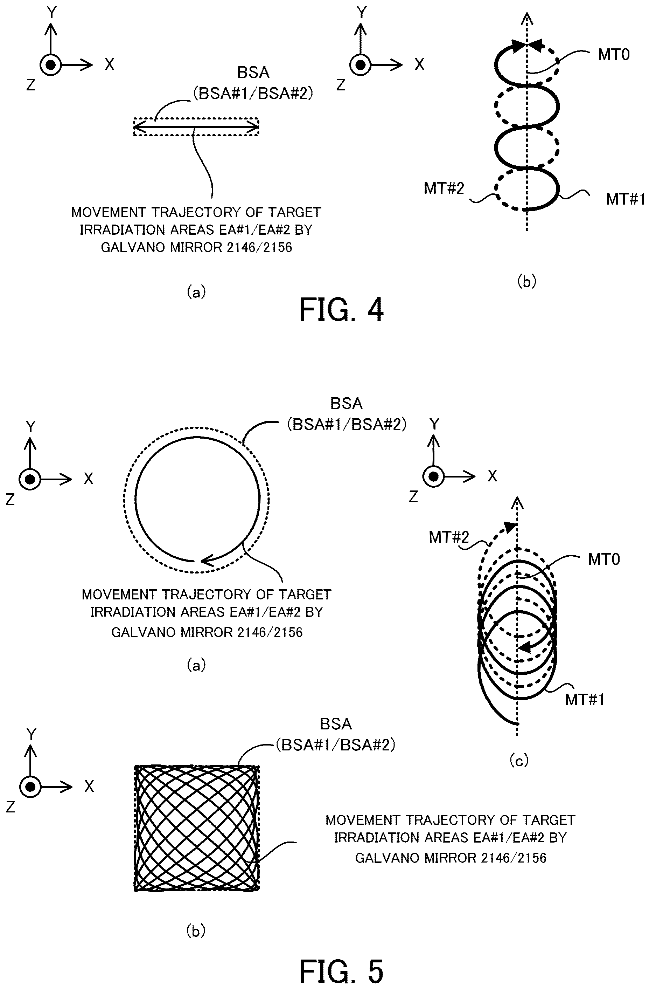

As one example of the operation for moving the target irradiation area EA#1 in the processing unit area BSA#1, as illustrated in FIG. 4(a), the Galvano mirror 2146 may deflect the processing light EL#1 so that the target irradiation area EA#1 moves along a single direction, which is along the build surface MS, in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a single scanning direction in a coordinate system that is determined with respect to the processing unit area BSA#1. Especially, the Galvano mirror 2146 may deflect the processing light EL#1 so that the target irradiation area EA#1 periodically moves back and forth along the single scanning direction in the processing unit area BSA#1. Namely, the Galvano mirror 2146 may deflect the processing light EL#1 so that the target irradiation area EA#1 periodically moves back and forth along an axis, which is along the single scanning direction, in the processing unit area BSA#1. In this case, a shape of the processing unit area BSA#1 in which the target irradiation area EA#1 moves may be a rectangular shape whose longitudinal direction is a movement direction of the target irradiation area EA#1.

As another example of the operation for moving the target irradiation area EA#1 in the processing unit area BSA#1, as illustrated in FIG. 5(a) and FIG. 5(b), the Galvano mirror 2146 may deflect the processing light EL#1 so that the target irradiation area EA#1 moves along a plurality of directions, each of which is along the build surface BSA#1, in the processing unit area BSA#1 under the assumption that the processing unit area BSA#1 is stationary (namely, does not move) on the build surface MS. Namely, the Galvano mirror 2146 may deflect the processing light EL#1 so that the target irradiation area EA#1 moves along a plurality of directions in the coordinate system that is determined with respect to the processing unit area BSA#1. Especially, the Galvano mirror 2146 may deflect the processing light EL#1 so that the target irradiation area EA#1 periodically moves back and forth along each of a plurality of scanning directions in the processing unit area BSA#1. Namely, the Galvano mirror 2146 may deflect the processing light EL#1 so that the target irradiation area EA#1 periodically moves back and forth along an axis, which is along each of the plurality of scanning directions, in the processing unit area BSA#1.

FIG. 5(a) illustrates an example in which the target irradiation area EA#1 moves back and forth along each of the X-axis direction and the Y-axis direction in the processing unit area BSA#1 so that a movement trajectory of the target irradiation area EA#1 in the processing unit area BSA#1 is a circular shape. In this case, the shape of the processing unit area BSA#1 in which the target irradiation area EA#1 moves may be a circular shape . FIG. 5(b) illustrates an example in which the target irradiation area EA#1 moves back and forth along each of the X-axis direction and the Y-axis direction in the processing unit area BSA#1 so that the movement trajectory of the target irradiation area EA#1 in the processing unit area BSA#1 is a net-like shape. In this case, the shape of the processing unit area BSA#1 in which the target irradiation area EA#1 moves may be a rectangular shape.

Incidentally, an operation for periodically moving the target irradiation area EA#1 on the build surface MS as illustrated in each of FIG. 4(a), FIG. 5(a) and FIG. 5(b) may be referred to as a wobbling operation. In other words, an operation for periodically moving (in other words, deflecting) the processing light EL#1 so that the target irradiation area EA#1 periodically moves on the build surface MS may be referred to as the wobbling operation.

The control unit 7 may move at least one of the processing head 21 and the stage 31 so that the processing unit area BSA#1 moves on the build surface MS in a period during which the target irradiation area EA#1 is moved in the processing unit area BSA#1 by using the Galvano mirror 2146. Namely, the control unit 7 may control at least one of the head driving system 22 and the stage driving system 32 so that the processing unit area BSA#1 moves on the build surface MS in the period during which the target irradiation area EA#1 is moved in the processing unit area BSA#1 by using the Galvano mirror 2146.

For example, in the example illustrated in FIG. 4(a), the control unit 7 may control at least one of the head driving system 22 and the stage driving system 32 so that the processing unit area BSA#1 moves along a target movement trajectory MTO that intersects (is orthogonal to, in some cases) the movement direction (namely, the scanning direction) of the target irradiation area EA#1 in the processing unit area BSA#1. Conversely, the control unit 7 may control the Galvano mirror 2146 so that the target irradiation area EA#1 periodically moves along a scanning direction that intersects (is orthogonal to, in some cases) the target movement trajectory MTO of the processing unit area BSA#1 on the build surface MS. As a result, the target irradiation area EA#1 may move on the build surface MS along a movement trajectory MT#1 illustrated in FIG. 4(b). Specifically, the target irradiation area EA#1 may move along the scanning direction intersecting the target movement trajectory MT0 while moving along target movement trajectory MT0 of the processing unit area BSA#1. Namely, the target irradiation area EA#1 may move along the wave-shaped (for example, sinusoidal wave-shaped) movement trajectory MT#1 that oscillates around the target movement trajectory MTO.

For example, in the example illustrated in FIG. 5(a) or FIG. 5(b), the control unit 7 may control at least one of the head driving system 22 and the stage driving system 32 so that the processing unit area BSA#1 moves along the target movement trajectory MTO that extends along at least one of a direction that is along the movement direction (namely, the scanning direction) of the target irradiation area EA#1 in the processing unit area BSA#1 and a direction that intersects (is orthogonal to, in some cases) the movement direction of the target irradiation area EA#1 in the processing unit area BSA#1. Conversely, the control unit 7 may control the Galvano mirror 2146 so that the target irradiation area EA#1 periodically moves along each of a scanning direction that is along the target movement trajectory MTO of the processing unit area BSA#1 on the build surface MS and a scanning direction that intersects (is orthogonal to, in some cases) the target movement trajectory MTO. Incidentally, FIG. 5(c) illustrates the movement trajectory MT#1 of the target irradiation area EA#1 on the build surface MS in a case where the processing unit area BSA#1 illustrated in FIG. 5(a) moves along the target movement trajectory MTO on the build surface MS.

In a case where the build surface MS is irradiated with the processing light EL#1 in a unit of the processing unit area BSA#1, the melt pool MP#1 is formed in at least a part of the processing unit area BSA#1. As a result, the build object is built in the processing unit area BSA#1. Here, as described above, the processing unit area BSA#1 is the area that has a width along a direction that intersects the movement direction of the processing unit area BSA#1 on the build surface MS (specifically, a direction along which the target movement trajectory MT0 extends). In this case, the build object that has a width along the direction intersecting the target movement trajectory MT0 of the processing unit area BSA#1 is built on the build surface MS. For example, in the example illustrated in FIG. 4(a) and FIG. 4(b), the build object that has a width along the X-axis direction and that extends along the Y-axis direction is built. For example, in the example illustrated in FIG. 5(a) and FIG. 5(c), the build object that has a width along the X-axis direction and that extends along the Y-axis direction is built.

In a case where the build surface MS is irradiated with the processing light EL#1 in a unit of the processing unit area BSA#1, the Galvano mirror 2146 scans the processing unit area BSA#1 with the processing light EL#1. Therefore, there is a lower possibility that an amount of the energy transferred from the processing light EL#1 to the processing unit area BSA#1 varies in the processing unit area BSA#1, compared to a case where the build surface MS is irradiated with the processing light EL#1 without using the Galvano mirror 2146. Namely, it is possible to uniform the amount of the energy transferred from the processing light EL#1 to the processing unit area BSA#1. As a result, the processing system SYS can build the build object on the build surface MS with relatively high build accuracy.

However, the processing system SYS may not irradiate the build surface MS with the processing light EL#1 in a unit of the processing unit area BSA#1. The processing system SYS may irradiate the build surface MS with the processing light EL#1 without using the Galvano mirror 2146. In this case, the target irradiation area EA#1 may move on the build surface MS due to the movement of at least one of the processing head 21 and the stage 31.

Back in FIG. 3, the processing light EL#1 that has been reflected by the parallel plate 2142 enters the power meter 2143. The power meter 2143 is configured to detect the intensity of the processing light EL#1 that has entered the power meter 2143. For example, the power meter 2143 may include a light receiving element that detects the processing light EL#1 as light. Alternatively, the amount of the energy generated by the processing light EL#1 is larger as the intensity of the processing light EL#1 is higher. As a result, the amount of heat generated by the processing light EL#1 is larger. Therefore, the power meter 2143 may detect the intensity of the processing light EL#1 by detecting the processing light EL#1 as heat. In this case, the power meter 2143 may include a heat detection element that detects the heat of the processing light EL#1.

As described above, the processing light EL#1 that has been reflected by the parallel plate 2142 enters the power meter 2143. Therefore, the power meter 2143 detects the intensity of the processing light EL#1 that has been reflected by the parallel plate 2142. Since the parallel plate 2142 is positioned on the optical path of the processing light EL#1 between the light source 4#1 and the Galvano mirror 2146, the power meter 2143 may be considered to detect the intensity of the processing light EL#1 propagating in the optical path between the light source 4#1 and the Galvano mirror 2146. In this case, the power meter 2143 can stably detect the intensity of the processing light EL#1 without being affected by the deflection of the processing light EL#1 by the Galvano mirror 2146. However, the position of the power meter 2143 is not limited to the example illustrated in FIG. 3. For example, the power meter 2143 may detect the intensity of the processing light EL#1 propagating in the optical path between the Galvano mirror 2146 and the build surface MS. The power meter 2143 may detect the intensity of the processing light EL#1 propagating in the optical path in the Galvano mirror 2146.

A detected result by the power meter 2143 is output to the control unit 7. The control unit 7 may control (in other words, change) the intensity of the processing light EL#1 based on the detected result by the power meter 2143 (namely, the detected result of the intensity of the processing light EL#1). For example, the control unit 7 may control the intensity of the processing light EL#1 so that the intensity of the processing light EL#1 on the build surface MS is a desired intensity. In order to control the intensity of the processing light EL#1, the control unit 7 may control the light source 4#1 to change the intensity of the processing light EL#1 emitted from the light source 4#1 based on the detected result by the power meter 2143, for example. As a result, the processing system SYS can appropriately build the build object on the build surface MS by irradiating the build surface MS with the processing light EL#1 having an appropriate intensity.

As described above, the processing light EL#1 has an intensity that is capable of melting the build material M. Therefore, there is a possibility that the processing light EL#1 entering the power meter 2143 has an intensity that is capable of melting the build material M. However, if the processing light EL#1 that has an intensity that is capable of melting the build material M enters the power meter 2143, there is a possibility that the power meter 2143 is damaged by the processing light EL#1. Therefore, the processing light EL#1 having an intensity that is not high enough to damage the power meter 2143 may enter the power meter 2143. In other words, the first optical system 214 may reduce the intensity of the processing light EL#1 entering the power meter 2143 so that the processing light EL#1 having an intensity that is not high enough to damage the power meter 2143 enters the power meter 2143.

For example, in order to reduce the intensity of the processing light EL#1 entering the power meter 2143, a reflectance of the parallel plate 2142 relative to the processing light EL#1 may be set to be an appropriate value. Specifically, the intensity of the processing light EL#1 entering the power meter 2143 is lower as the reflectance of the parallel plate 2142 relative to the processing light EL#1 is lower. Therefore, the reflectance of the parallel plate 2142 may be set to a value that is low enough to realize a state where the processing light EL#1 has an intensity that is not high enough to damage the power meter 2143 enters the power meter 2143. For example, the reflectance of the parallel plate 2142 may be lower than 10%. For example, the reflectance of the parallel plate 2142 may be lower than a few percent. As the parallel plate 2142 having such a low reflectance, bare glass may be used.

For example, in order to reduce the intensity of the processing light EL#1 entering the power meter 2143, the first optical system 214 may allow the processing light EL#1 to enter the power meter 2143 through a plurality of parallel plates 2142. Specifically, the processing light EL#1, which has been reflected a plurality of times by the plurality of parallel plates 2142, respectively, may enter the power meter 2143. In this case, the intensity of the processing light EL#1 reflected a plurality of times by the plurality of parallel plates 2142, respectively, is lower than the intensity of the processing light EL#1 reflected once by a single parallel plate 2142. Therefore, there is a higher possibility that the processing light EL#1 having an intensity that is not high enough to damage the power meter 2143 enters the power meter 2143.

A desired coating processing may be performed on a surface of the parallel plate 2142 (especially, at least one of an incident surface which the processing light EL#1 enters and a reflective surface that reflects the processing light EL#1). For example, an anti-reflection coating processing (AR: Anti Reflection Coating) may be performed on the surface of the parallel plate 2142.

The second optical system 215 includes a collimator lens 2151, a parallel plate 2152, a power meter 2153, and a Galvano scanner 2154. The Galvano scanner 2154 includes a focus control optical system 2155 and a Galvano mirror 2156. However, the second optical system 215 may not include at least one of the collimator lens 2151, the parallel plate 2152, the power meter 2153, and the Galvano scanner 2154. The Galvano scanner 2154 may not include at least one of the focus control optical system 2155 and the Galvano mirror 2156.

The processing light EL#2 emitted from the light source 4#2 enters the collimator lens 2151. The collimator lens 2151 converts the processing light EL#2 that has entered the collimator lens 2151 into collimated light. Incidentally, in a case where the processing light EL#2 emitted from the light source 4#2 is collimated light (namely, the processing light EL#2 that is the collimated light enters the second optical system 215), the second optical system 215 may not include the collimator lens 2151. The processing light EL#2 that has been converted to the collimated light by the collimator lens 2151 enters the parallel plate 2152. A part of the processing light EL#2 that has entered the parallel plate 2152 passes through the parallel plate 2152. Another part of the processing light EL#2 that has entered the parallel plate 2152 is reflected by the parallel plate 2152.

The processing light EL#2 that has passed through the parallel plate 2152 enters the Galvano scanner 2154. Specifically, the processing light EL#2 that has passed through the parallel plate 2152 enters the focus control optical system 2155 of the Galvano scanner 2154.

The focus control optical system 2155 is an optical member that is configured to change a condensed position CP of the processing light EL#2 (in the below-described description, it is referred to as a "condensed position CP#2"). Specifically, the focus control optical system 2155 is configured to change the condensed position CP#2 of the processing light EL#2 along an irradiation direction of the processing light EL#2 with which the build surface MS is irradiated. In the example illustrated in FIG. 3, the irradiation direction of the processing light EL#2 with which the build surface MS is irradiated is a direction whose main component is the Z-axis direction. In this case, the focus control optical system 2155 is configured to change the condensed position CP#2 of the processing light EL#2 along the Z-axis direction. Moreover, since the irradiation optical system 211 irradiates the build surface MS with the processing light EL from a position above the workpiece W, the irradiation direction of the processing light EL#2 is a direction that intersects the build surface MS (for example, the surface of the workpiece W or the structural layer SL). Therefore, the focus control optical system 2155 may be considered to be configured to change the condensed position CP#2 of the processing light EL#2 along the direction that intersects the build surface MS (for example, the surface of the workpiece W or the structural layer SL). The focus control optical system 2155 may be considered to be configured to change the condensed position CP#2 of the processing light EL#2 along a direction of the optical axis AX of the irradiation optical system 211 (typically, the third optical system 216).

Incidentally, the irradiation direction of the processing light EL#2 may mean an irradiation direction of the processing light EL#2 emitted from the third optical system 216. In this case, the irradiation direction of the processing light EL#2 may be the same as a direction along the optical axis of the third optical system 216. The irradiation direction of the processing light EL#2 may be the same as a direction along the optical axis of the terminal optical member, which is positioned at the position closest to the build surface MS, among the optical members of the third optical system 216. The terminal optical member may be the fθ lens 2162 described below. Moreover, in a case where the below-described fθ lens 2162 includes the plurality of optical members, the terminal optical member may be the optical member, which is positioned at the position closest to the build surface MS, among the plurality of optical members of the fθ lens 2162.

The focus control optical system 2155 may include a plurality of lenses that are aligned along the irradiation direction of the processing light EL#2, for example. In this case, the focus control optical system 2155 may change the condensed position CP of the processing light EL#2 by moving at least one of the plurality of lenses along its optical axis direction.

When the focus control optical system 2155 changes the condensed position CP#2 of the processing light EL#2, a positional relationship between the condensed position CP#2 of the processing light EL#2 and the build surface MS changes. Especially, a positional relationship between the condensed position CP#2 of the processing light EL#2 and the build surface MS in the irradiation direction of the processing light EL#2 changes. Therefore, the focus control optical system 2155 may be considered to change the positional relationship between the condensed position CP#2 of the processing light EL#2 and the build surface MS by changing the condensed position CP#2 of the processing light EL#2 by the focus control optical system 2155.

Incidentally, as described above, the Galvano scanner 2154 may not include the focus control optical system 2155. Even in this case, when the positional relationship between the irradiation optical system 211 and the build surface MS in the irradiation direction of the processing light EL#2 changes, the positional relationship between the condensed position CP#2 of the processing light EL#2 and the build surface MS in the irradiation direction of the processing light EL#2 changes. Therefore, even in a case where the Galvano scanner 2154 does not include the focus control optical system 2155, the processing system SYS may change the positional relationship between the condensed position CP#2 of the processing light EL#2 and the build surface MS in the irradiation direction of the processing light EL#2. For example, the processing system SYS may change the positional relationship between the condensed position CP#2 of the processing light EL#2 and the build surface MS in the irradiation direction of the processing light EL#2 by using the head driving system 22 to move the processing head 21 along the irradiation direction of the processing light EL#2. For example, the processing system SYS may change the positional relationship between the condensed position CP#2 of the processing light EL#2 and the build surface MS in the irradiation direction of the processing light EL#2 by using the stage driving system 32 to move the stage 31 along the irradiation direction of the processing light EL#2.

The processing light EL#2 that has been emitted from the focus control optical system 2155 enters the Galvano mirror 2156. The Galvano mirror 2156 changes an emitting direction of the processing light EL#2 emitted from the Galvano mirror 2156 by deflecting the processing light EL#2. Therefore, the Galvano mirror 2156 may be referred to as a deflection optical system. When the emitting direction of the processing light EL#2 emitted from the Galvano mirror 2156 is changed, a position from which the processing head 21 emits the processing light EL#2 is changed. When the position from which the processing head 21 emits the processing light EL#2 is changed, the target irradiation area EA#2 that is irradiated with the processing light EL#2 on the build surface MS moves. Namely, an irradiation position that is irradiated with the processing light EL#2 on the build surface MS moves. Therefore, the Galvano mirror 2156 may be considered to serve as an irradiation position movement apparatus that is configured to move the irradiation position of the processing light EL#2 on the build surface MS.

Especially, when the emitting direction of the processing light EL#2 emitted from the Galvano mirror 2156 is changed, the irradiation position of the processing light EL#2 relative to the processing head 21 that includes the Galvano mirror 2156 is changed. Therefore, the Galvano mirror 2156 may be considered to serve as a position change apparatus that is configured to change the irradiation position of the processing light EL#2 relative to the processing head 21.

The Galvano mirror 2156 includes an X scanning mirror 2156MX, an X scanning motor 2156AX, a Y scanning mirror 2156MY, and a Y scanning motor 2156AY, for example. The processing light EL#2 that has been emitted from the focus control optical system 2155 enters the X scanning mirror 2156MX. The X scanning mirror 2156MX reflects the processing light EL#2 that has entered the X scanning mirror 2156MX toward the Y scanning mirror 2156MY. The Y scanning mirror 2156MY reflects the processing light EL#2 that has entered the Y scanning mirror 2156MY toward the third optical system 216. Incidentally, each of the X scanning mirror 2156MX and the Y scanning mirror 2156MY may be referred to as a Galvano mirror.

The X scanning motor 2156AX swings or rotates the X scanning mirror 2156MX around a rotational axis along the Y-axis. As a result, an angle of the X scanning mirror 2156MX relative to an optical path of the processing light EL#2 entering the X scanning mirror 2156MX is changed. In this case, the build surface MS is scanned with the processing light EL#2 along the X-axis direction due to the swing or the rotation of the X scanning mirror 2156MX. Namely, the target irradiation area EA#2 (namely, the irradiation position of the processing light EL#2) moves along the X-axis direction on the build surface MS.

The Y scanning motor 2156AY swings or rotates the Y scanning mirror 2156MY around a rotational axis along the X-axis. As a result, an angle of the Y scanning mirror 2156MY relative to an optical path of the processing light EL#2 entering the Y scanning mirror 2156MY is changed. In this case, the build surface MS is scanned with the processing light EL#2 along the Y-axis direction due to the swing or the rotation of the Y scanning mirror 2156MY. Namely, the target irradiation area EA#2 (namely, the irradiation position of the processing light EL#2) moves along the Y-axis direction on the build surface MS.

In the present example embodiment, a virtual area in which the Galvano mirror 2156 moves the target irradiation area EA#2 on the build surface MS is referred to as a processing unit area BSA (especially, the processing unit area BSA#2). In this case, the target irradiation area EA#2 may be considered to move on a surface (a first surface) of the build surface MS that overlaps with the processing unit area BSA#2. Specifically, the virtual area in which the Galvano mirror 2156 moves the target irradiation area EA#2 on the build surface MS in a state where the positional relationship between the irradiation optical system 211 and the build surface MS is fixed (namely, is not changed) is referred to as the processing unit area BSA (especially, the processing unit area BSA#2). The processing unit area BSA#2 indicates a virtual area (in other words, a range) in which the processing head 21 actually performs the additive manufacturing by using the processing light EL#2 in a state where the positional relationship between the irradiation optical system 211 and the build surface MS is fixed. The processing unit area BSA#2 indicates a virtual area (in other words, a range) that is actually scanned by the processing head 21 with the processing light EL#2 in a state where the positional relationship between the irradiation optical system 211 and the build surface MS is fixed. The processing unit area BSA#2 indicates an area (in other words, a range) in which the target irradiation area EA#2 actually moves in a state where the positional relationship between the irradiation optical system 211 and the build surface MS is fixed. Therefore, the processing unit area BSA#2 may be regarded as a virtual area that is determined with respect to the processing head 21 (especially, the irradiation optical system 211). Namely, the processing unit area BSA#2 may be regarded as a virtual area positioned at a position that is determined with respect to the processing head 21 (especially, the irradiation optical system 211) on the build surface MS. Incidentally, a maximum area in which the Galvano mirror 2156 is allowed to move the target irradiation area EA#2 on the build surface MS in a state where the positional relationship between the irradiation optical system 211 and the build surface MS is fixed may be referred to as the processing unit area BSA#2.

In this case, the processing system SYS may move the target irradiation area EA#2 in the processing unit area BSA#2 by using the Galvano mirror 2156. Therefore, an operation for deflecting the processing light EL#2 by using the Galvano mirror 2156 may be considered to be equivalent to an operation for moving the target irradiation area EA#2 in the processing unit area BSA#2. Furthermore, as described above, the melt pool MP#2 is formed by irradiating the target irradiation area EA#2 with the processing light EL#2. In this case, the processing system SYS may be considered to move the melt pool MP#2 in the processing unit area BSA#2 by using the Galvano mirror 2156. Therefore, the operation for deflecting the processing light EL#2 by using the Galvano mirror 2156 may be considered to be equivalent to an operation for moving the melt pool MP#2 in the processing unit area BSA#2. Namely, the operation for moving the target irradiation area EA#2 in the processing unit area BSA#2 may be considered to be equivalent to the operation for moving the melt pool MP#2 in the processing unit area BSA#2.

Incidentally, as described above, even when at least one of the processing head 21 and the stage 31 moves, the target irradiation area EA#2 moves on the build surface MS. However, when at least one of the processing head 21 and the stage 31 moves, the relative positional relationship between the Galvano mirror 2156 and the build surface MS changes. As a result, the processing unit area BSA#2 that is determined with respect to the processing head 21 (namely, the processing unit area BSA#2 in which the Galvano mirror 2156 moves the target irradiation area EA#2 on the build surface MS) moves on the build surface MS. Therefore, in the present example embodiment, the operation for moving at least one of the processing head 21 and the stage 31 may be considered to be equivalent to an operation for moving the processing unit area BSA#2 relative to the build surface MS.

A characteristic (for example, the shape, a movement aspect, and so on) of the processing unit area BSA#2 may be the same as a characteristic of the above-described processing unit area BSA#1. A movement aspect (for example, a movement trajectory and so on) of the target irradiation area EA#2 in the processing unit area BSA#2 may be the same as a movement aspect of the target irradiation area EA#1 in the above-described processing unit area BSA#1. Therefore, a detailed description of the characteristic of the processing unit area BSA#2 and the movement aspect (for example, the movement trajectory and so on) of the target irradiation area EA#2 in the processing unit area BSA#2 is omitted, however, one example thereof will be briefly described below. As illustrated in FIG. 4(a), the Galvano mirror 2156 may deflect the processing light EL#2 so that the target irradiation area EA#2 moves along a single scanning direction in the processing unit area BSA#2 under the assumption that the processing unit area BSA#2 is stationary (namely, does not move) on the build surface MS. The processing unit area BSA#2, which is illustrated in FIG. 4(a), may move on the build surface MS along the target movement trajectory MTO, thereby, the target irradiation area EA#2 may move on the build surface MS along a movement trajectory MT#2 illustrated in FIG. 4(b) (for example, a wave-shaped movement trajectory MT#2 that oscillates around the target movement trajectory MT0). As illustrated in FIG. 5(a) and FIG. 5(b), the Galvano mirror 2156 may deflect the processing light EL#2 so that the target irradiation area EA#2 moves along a plurality of scanning directions in the processing unit area BSA#2 under the assumption that the processing unit area BSA#2 is stationary (namely, does not move) on the build surface MS.

Incidentally, an operation for periodically moving the target irradiation area EA#2 on the build surface MS as illustrated in each of FIG. 4(a), FIG. 5(a) and FIG. 5(b) may be referred to as a wobbling operation. In other words, an operation for periodically moving (in other words, deflecting) the processing light EL#2 so that the target irradiation area EA#2 periodically moves on the build surface MS may be referred to as the wobbling operation.

Typically, the processing unit area BSA#1 coincides with the processing unit area BSA#2. Namely, the processing unit area BSA#1 is the same as the processing unit area BSA#2. Therefore, the Galvano mirror 2156 may be considered to deflect the processing light EL#2 so that the target irradiation area EA#2 moves in the processing unit area BSA#1. The Galvano mirror 2146 may be considered to deflect the processing light EL#1 so that the target irradiation area EA#1 moves in the processing unit area BSA#2. However, the processing unit area BSA#1 and the processing unit area BSA#2 may be partially different from each other.

In a case where the build surface MS is irradiated with the processing light EL#2 in a unit of the processing unit area BSA#2, the melt pool MP#2 is formed in at least a part of the processing unit area BSA#2. As a result, the build object is built in the processing unit area BSA#2. Here, as described above, the processing unit area BSA#2 is the area that has a width along a direction that intersects the movement direction of the processing unit area BSA#2 on the build surface MS (specifically, a direction along which the target movement trajectory MT0 extends). In this case, the build object that has a width along the direction intersecting the target movement trajectory MTO of the processing unit area BSA#2 is built on the build surface MS. For example, in the examples illustrated in FIG. 4(a) and FIG. 4(b), the build object that has a width along the X-axis direction and that extends along the Y-axis direction is built. For example, in the examples illustrated in FIG. 5(a) and FIG. 5(c), the build object that has a width along the X-axis direction and that extends along the Y-axis direction is built.

In a case where the build surface MS is irradiated with the processing light EL#2 in a unit of the processing unit area BSA#2, the Galvano mirror 2156 scans the processing unit area BSA#2 with the processing light EL#2. Therefore, there is a lower possibility that an amount of the energy transferred from the processing light EL#2 to the processing unit area BSA#2 varies in the processing unit area BSA#2, compared to a case where the build surface MS is irradiated with the processing light EL#2 without using the Galvano mirror 2156. Namely, it is possible to uniform the amount of the energy transferred from the processing light EL#2 to the processing unit area BSA#2. As a result, the processing system SYS can build the build object on the build surface MS with relatively high build accuracy.

However, the processing system SYS may not irradiate the build surface MS with the processing light EL#2 in a unit of the processing unit area BSA#2. The processing system SYS may irradiate the build surface MS with the processing light EL#2 without using the Galvano mirror 2156. In this case, the target irradiation area EA#2 may move on the build surface MS due to the movement of at least one of the processing head 21 and the stage 31.

Back in FIG. 3, the processing light EL#2 that has been reflected by the parallel plate 2152 enters the power meter 2153. The power meter 2153 is one specific example of an electrical component that is used to control the processing light EL#2. Specifically, the power meter 2153 is configured to detect the intensity of the processing light EL#2 that has entered the power meter 2153. For example, the power meter 2153 may include a light receiving element that detects the processing light EL#2 as light. Alternatively, the amount of the energy generated by the processing light EL#2 is larger as the intensity of the processing light EL#2 is higher. As a result, the amount of heat generated by the processing light EL#2 is larger. Therefore, the power meter 2153 may detect the intensity of the processing light EL#2 by detecting the processing light EL#2 as heat. In this case, the power meter 2153 may include a heat detection element that detects the heat of the processing light EL#2.

As described above, the processing light EL#2 that has been reflected by the parallel plate 2152 enters the power meter 2153. Therefore, the power meter 2153 detects the intensity of the processing light EL#2 that has been reflected by the parallel plate 2152. Since the parallel plate 2152 is positioned on the optical path of the processing light EL#2 between the light source 4#2 and the Galvano mirror 2156, the power meter 2153 may be considered to detect the intensity of the processing light EL#2 propagating in the optical path between the light source 4#2 and the Galvano mirror 2156. In this case, the power meter 2153 can stably detect the intensity of the processing light EL#2 without being affected by the deflection of the processing light EL#2 by the Galvano mirror 2156. However, the position of the power meter 2153 is not limited to the example illustrated in FIG. 3. For example, the power meter 2153 may detect the intensity of the processing light EL#2 propagating in the optical path between the Galvano mirror 2156 and the build surface MS. The power meter 2153 may detect the intensity of the processing light EL#2 propagating in the optical path in the Galvano mirror 2156.

A detected result by the power meter 2153 is output to the control unit 7. The control unit 7 may control (in other words, change) the intensity of the processing light EL#2 based on the detected result by the power meter 2153 (namely, the detected result of the intensity of the processing light EL#2). For example, the control unit 7 may control the intensity of the processing light EL#2 so that the intensity of the processing light EL#2 on the build surface MS is a desired intensity. In order to control the intensity of the processing light EL#2, the control unit 7 may control the light source 4#2 to change the intensity of the processing light EL#2 emitted from the light source 4#2 based on the detected result by the power meter 2153, for example. As a result, the processing system SYS can appropriately build the build object on the build surface MS by irradiating the build surface MS with the processing light EL#2 having an appropriate intensity.

As described above, the processing light EL#2 has an intensity that is capable of melting the build material M. Therefore, there is a possibility that the processing light EL#2 entering the power meter 2153 has an intensity that is capable of melting the build material M. However, if the processing light EL#2 that has an intensity that is capable of melting the build material M enters the power meter 2153, there is a possibility that the power meter 2153 is damaged by the processing light EL#2. Therefore, the processing light EL#2 having an intensity that is not high enough to damage the power meter 2153 may enter the power meter 2153. In other words, the second optical system 215 may reduce the intensity of the processing light EL#2 entering the power meter 2153 so that the processing light EL#2 having an intensity that is not high enough to damage the power meter 2153 enters the power meter 2153.

For example, in order to reduce the intensity of the processing light EL#2 entering the power meter 2153, a reflectance of the parallel plate 2152 relative to the processing light EL#2 may be set to be an appropriate value. Specifically, the intensity of the processing light EL#2 entering the power meter 2153 is lower as the reflectance of the parallel plate 2152 relative to the processing light EL#2 is lower. Therefore, the reflectance of the parallel plate 2152 may be set to a value that is low enough to realize a state where the processing light EL#2 has an intensity that is not high enough to damage the power meter 2153 enters the power meter 2153. For example, the reflectance of the parallel plate 2152 may be lower than 10%. For example, the reflectance of the parallel plate 2152 may be lower than a few percent. As the parallel plate 2152 having such a low reflectance, bare glass may be used.

For example, in order to reduce the intensity of the processing light EL#2 entering the power meter 2153, the second optical system 215 may allow the processing light EL#2 to enter the power meter 2153 through a plurality of parallel plates 2152. Specifically, the processing light EL#2, which has been reflected a plurality of times by the plurality of parallel plates 2152, respectively, may enter the power meter 2153. In this case, the intensity of the processing light EL#2 reflected a plurality of times by the plurality of parallel plates 2152, respectively, is lower than the intensity of the processing light EL#2 reflected once by a single parallel plate 2152. Therefore, there is a higher possibility that the processing light EL#2 having an intensity that is not high enough to damage the power meter 2153 enters the power meter 2153.

A desired coating processing may be performed on a surface of the parallel plate 2152 (especially, at least one of an incident surface which the processing light EL#2 enters and a reflective surface that reflects the processing light EL#2). For example, an anti-reflection coating processing (AR: Anti Reflection Coating) may be performed on the surface of the parallel plate 2152.

The third optical system 216 includes a prism mirror 2161 and the fθ lens 2162.

Each of the processing light EL#1 emitted from the first optical system 214 and the processing light EL#2 emitted from the second optical system 215 enters the prism mirror 2161. The prism mirror 2161 reflects each of the processing lights EL#1 and EL#2 toward the fθ lens 2162. The prism mirror 2161 reflects, toward the same direction (specifically, toward the fθ lens 2162), the processing lights EL#1 and EL#2 that enters the prism mirror 2161 from different directions, respectively.

Incidentally, in a case where each of the processing light EL#1 emitted from the first optical system 214 and the processing light EL#2 emitted from the second optical system 215 can directly enter the fθ lens 2162, the third optical system 216 may not include the prism mirror 2161.

The fθ lens 2162 is an optical system for emitting each of the processing lights EL#1 and EL#2, which have been reflected by the prism mirror 2161, toward the build surface MS. Namely, the fθ lens 2162 is an optical system for irradiating the build surface MS with each of the processing lights EL#1 and EL#2 that have been reflected by the prism mirror 2161. As a result, the build surface MS is irradiated with the processing lights EL#1 and EL#2 that have passed through the fθ lens 2162.

The fθ lens 2162 may be an optical element that is configured to condense each of the processing lights EL#1 and EL#2 on a condensed plane. In this case, the fθ lens 2162 may be referred to as a condensing optical system. The condensed plane of the fθ lens 2162 may be set on the build surface MS, for example. In this case, the third optical system 216 may be considered to include a condensing optical system whose projection characteristic is fθ. However, the third optical system 216 may include a condensing optical system whose projection characteristic is different from fθ. For example, the third optical system 216 may include a condensing optical system whose projection characteristic is f×tanθ. For example, the third optical system 216 may include a condensing optical system whose projection characteristic is f×sinθ.

An optical axis AX of the fθ lens 2162 is an axis along the Z-axis. Therefore, the fθ lens 2162 emits each of the processing lights EL#1 and EL#2 along the Z-axis direction. In this case, the irradiation direction of the processing light EL#1 and the irradiation direction of the processing light EL#2 may be the same direction. Both of the irradiation direction of the processing light EL#1 and the irradiation direction of the processing light EL#2 may be the Z-axis direction. Both of the irradiation direction of the processing light EL#1 and the irradiation direction of the processing light EL#2 may be directions along the optical axis AX of the fθ lens 2162. However, the irradiation direction of the processing light EL#1 and the irradiation direction of the processing light EL#2 may not be the same direction. The irradiation direction of the processing light EL#1 and the irradiation direction of the processing light EL#2 may be directions that are different from each other.

### (2) Operation of Processing System SYS

An additive manufacturing operation performed by the processing system SYS configured in the above manner will be described. The additive manufacturing performed on the workpiece W corresponds to an operation for building the build object so as to add, to the workpiece W, the build object that is integrated with (alternatively, separable from) the workpiece W. In the below-described description, the additive manufacturing for building the three-dimensional build object ST that is the build object having a desired shape will be described, for convenience of description. As described above, the processing system SYS builds the three-dimensional build object ST by performing the additive manufacturing based on the Laser Metal Deposition. Therefore, the processing system SYS may build the three-dimensional build object ST by performing the existing additive manufacturing based on the Laser Metal Deposition. Next, one example of the operation for building the three-dimensional build object ST by using the Laser Metal Deposition will be briefly described.

The processing system SYS builds the three-dimensional build object ST on the workpiece W based on three-dimensional model data (in other words, three-dimensional model information) and the like of the three-dimensional build object ST that should be built. Measured data of the solid object measured by at least one of a non-illustrated measurement apparatus mounted in the processing system SYS and a three-dimensional shape measurement device mounted separately from the processing system SYS may be used as the three-dimensional model data. The processing system SYS successively builds a plurality of layered partial structural objects (it is referred to as the "structural layer" in the below-described description) SL that are arranged along the Z-axis direction in order to build the three-dimensional build object ST, for example. For example, the processing system SYS builds, one by one in sequence, the plurality of structural layers SL based on data related to a plurality of layers that are obtained by slicing the three-dimensional model of the three-dimensional build object ST along the Z-axis direction. As a result, the three-dimensional build object ST that is a layered structural body in which the plurality of structural layers SL are stacked is built. Note that the structural layer SL may not be the build object having a layered shape. Next, a flow of an operation for forming the three-dimensional build object ST by forming the plurality of structural layers SL one by one in sequence will be described.

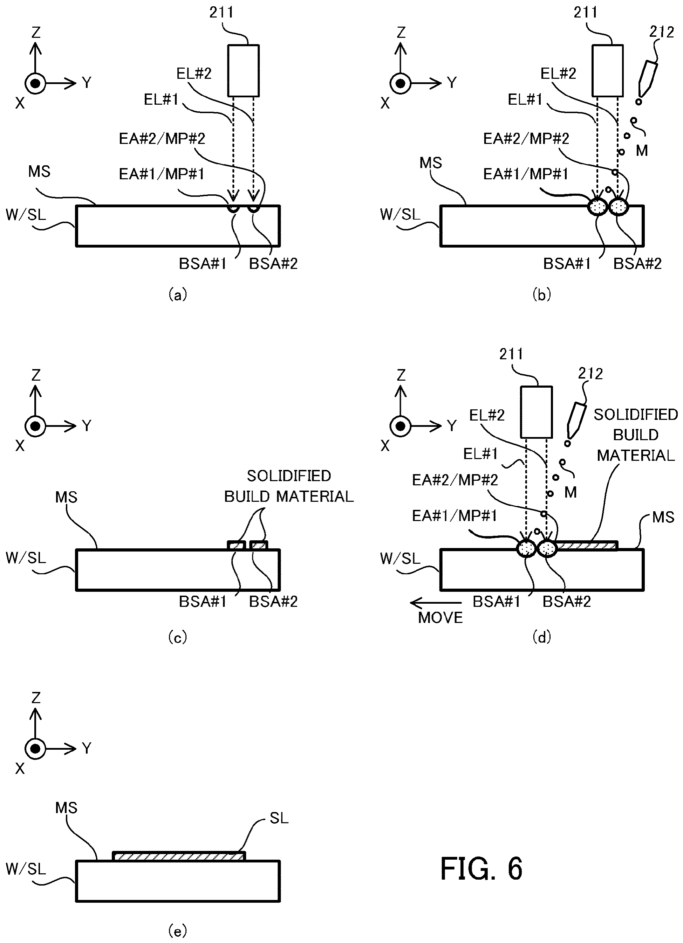

First, with reference to FIG. 6(a) to FIG. 6(e), an operation for building each structural layer SL will be described. The processing system SYS moves at least one of the processing head 21 and the stage 31 under the control of the control unit 7 so that the processing unit areas BSA#1 and BSA#2 are set in a desired area on the build surface MS that corresponds to the surface of the workpiece W or the surface of the already built structural layer SL. Then, the irradiation optical system 211 irradiates the processing unit areas BSA#1 and BSA#2 with the processing lights EL#1 and EL#2, respectively. In this case, the condensed positions CP#1 and CP#2 on which the processing lights EL#1#1 and EL#2 are condensed in the Z-axis direction, respectively, may be positioned on the build surface MS. Alternatively, the condensed positions CP#1 and CP#2 on which the processing lights EL#1#1 and EL#2 are condensed in the Z-axis direction, respectively, may be away from the build surface MS. As a result, as illustrated in FIG. 6(a), the melt pools MP#1 and MP#2 are formed on the build surface MS that is irradiated with the processing lights EL#1 and EL#2, respectively. Furthermore, as illustrated in FIG. 6(b), the processing system SYS supplies the build material M from the material nozzle 212 under the control of the control unit 7. As a result, the build material M is supplied to each of the melt pools MP#1 and MP#2. The build material M supplied to the melt pool MP#1 is molten by the processing light EL#1 with which the melt pool MP#1 is irradiated. Similarly, the build material M supplied to the melt pool MP#2 is molten by the processing light EL#2 with which the melt pool MP#2 is irradiated.

Furthermore, the irradiation optical system 211 moves the target irradiation areas EA#1 and EA#2 in the processing unit areas BSA#1 and BSA#2, respectively, by using the Galvano mirrors 2146 and 2156. Namely, the irradiation optical system 211 scans the processing unit areas BSA#1 and BSA#2 with the processing lights EL#1 and EL#2, respectively, by using the Galvano mirrors 2146 and 2156. After the melt pool MP#1 is no longer irradiated with the processing light EL#1 due to the movement of the target irradiation area EA#1, the build material M molten in the melt pool MP#1 is cooled and solidified (namely, coagulated). Similarly, after the melt pool MP#2 is no longer irradiated with the processing light EL#2 due to the movement of the target irradiation area EA#2, the build material M molten in the melt pool MP#2 is cooled and solidified (namely, coagulated). Furthermore, the melt pools MP#1 and MP#2 move due to the movement of the target irradiation areas EA#1 and EA#2. As a result, as illustrated in FIG. 6(c), the build objects including the solidified build material M are deposited on the build surface MS in the processing unit areas BSA#1 and BSA#2 in which the melt pools MP#1 and MP#2 move.

Incidentally, in FIG. 6(c), for convenience of description, the build object including the build material M solidified in the processing unit area BSA#1 is physically separated from the build object including the build material M solidified in the processing unit area BSA#2. However, the build object including the build material M solidified in the processing unit area BSA#1 may be integrated with the build object including the build material M solidified in the processing unit area BSA#2. Especially in a case where the processing unit areas BSA#1 and BSA#2 coincide with each other (alternatively, partially overlap with each other), the build object including the build material M solidified in the processing unit area BSA#1 may be integrated with the build object including the build material M solidified in the processing unit area BSA#2.

In a period during which the target irradiation areas EA#1 and EA#2 move in the processing unit areas BSA#1 and BSA#2, respectively, the processing system SYS may move at least one of the processing head 21 and the stage 31 so that the processing unit areas BSA#1 and BSA#2 move on the build surface MS. Namely, the processing system SYS may move each of the target irradiation areas EA#1 and EA#2 in the processing unit areas BSA#1 and BSA#2 and move the processing unit areas BSA#1 and BSA#2 on the build surface MS in parallel.

Alternatively, in the period during which the target irradiation areas EA#1 and EA#2 move in the processing unit areas BSA#1 and BSA#2, respectively, the processing system SYS may not move the processing head 21 and the stage 31 to prevent the processing unit areas BSA#1 and BSA#2 from moving on the build surface MS. In this case, after the additive manufacturing (namely, the building) in the processing unit areas BSA#1 and BSA#2 is completed, the processing system SYS may move at least one of the processing head 21 and the stage 31 so that the processing unit areas BSA#1 and BSA#2 are set in another area on the build surface MS . Namely, the processing system SYS may move at least one of the processing head 21 and the stage 31 so that the processing unit areas BSA#1 and BSA#2 move on the build surface MS after the additive manufacturing (namely, the building) in the processing unit areas BSA#1 and BSA#2 is completed. In this case, the processing system SYS may move at least one of the processing head 21 and the stage 31 so that an area on which the processing unit areas BSA#1 and BSA#2 have already been set (namely, an area in which the additive manufacturing has already been performed) on the build surface MS is adjacent to an area on which the processing unit areas BSA#1 and BSA#2 are newly set (namely, an area in which the additive manufacturing is performed next) on the build surface MS. Especially, the processing system SYS may move at least one of the processing head 21 and the stage 31 so that the area on which the processing unit areas BSA#1 and BSA#2 have already been set on the build surface MS does not overlap with the area on which the processing unit areas BSA#1 and BSA#2 are newly set on the build surface MS. However, the processing system SYS may move at least one of the processing head 21 and the stage 31 so that the area on which the processing unit areas BSA#1 and BSA#2 have already been set on the build surface MS partially overlaps with the area on which the processing unit areas BSA#1 and BSA#2 are newly set on the build surface MS.

The processing system SYS repeats a series of build processing including the formation of the melt pool MP#1 by the irradiation with the processing light EL#1 in the processing unit area BSA#1, the formation of the melt pool MP#2 by the irradiation with the processing light EL#2 in the processing unit area BSA#2, the supply of the build material M to the melt pools MP#1 and MP#2, the melting of the supplied build material M, and the solidification of the molten build material M while moving the processing unit areas BSA#1 and BSA#2 along the target movement trajectory MT0, as illustrated in FIG. 6(d). In this case, the build object that has the width along the direction intersecting the target movement trajectory MT0 is built on the build surface MS due to the movement of each of the processing unit areas BSA#1 and BSA#2. For example, in a case where each of the processing unit areas BSA#1 and BSA#2 moves as illustrated in FIG. 4(a) and FIG. 4(b), the build object that has a width along the X-axis direction and that extends along the Y-axis direction is built. For example, in a case where each of the processing unit areas BSA#1 and BSA#2 moves as illustrated in FIG. 5(a) and FIG. 5(c), the build object that has a width along the X-axis direction and that extends along the Y-axis direction is built.

As a result, as illustrated in FIG. 6(e), the structural layer SL corresponding to the build object that is an aggregation of the build material M, which has been solidified after being molten, is built on the build surface MS. Namely, the structural layer SL, which corresponds to an aggregation of the build object that has been built on the build surface MS in a pattern based on the target movement trajectory MT0 of the processing unit areas BSA#1 and BSA#2, is built. Namely, the structural layer SL having a shape based on the target movement trajectory MT0 of the processing unit areas BSA#1 and BSA#2 in a planar view is built.

Incidentally, in a case where the target irradiation area EA#1 is set at the area on which the build object should not be built, the processing system SYS may not irradiate the target irradiation areas EA#1 with the processing light EL#1. Alternatively, the processing system SYS may irradiate the target irradiation areas EA#1 with the processing light EL#1 and stop the supply of the build material M. Alternatively, the processing system SYS may supply the build material M to the target irradiation areas EA#1 and irradiate the target irradiation areas EA#1 with the processing light EL#1 having an intensity by which the melt pool MP is not formed. The same may be applied to a case where the target irradiation area EA#2 is set at the area on which the build object should not be built.

The processing system SYS may irradiate the build material M injected from the material nozzle 212 with the processing light EL (e.g., at least one of EL#1 and EL#2). In this case, the build material M injected from the material nozzle 212 is molten by the processing light EL before reaching the build surface MS. As a result, the molten build material M drips onto the build surface MS.

The processing system SYS may irradiate the build material M injected from the material nozzle 212 with the processing light EL, instead of or in addition to forming the melt pool MP. In a case where the processing system SYS irradiates the build material M injected from the material nozzle 212 with the processing light EL in addition to forming the melt pool MP, the processing system SYS may use a part (e.g., 30%) of the processing light EL to form the melt pool MP, and may irradiate the build material M injected from the material nozzle 212 with a remaining part (e.g., 70%) of the processing light EL (in other words, it may use the remaining part to melt the build material M injected from the material nozzle 212).

The target movement trajectory MT0 of each of the processing unit areas BSA#1 and BSA#2 may be referred to as a processing path (in other words, a tool path). In this case, the control unit 7 may move at least one of the processing head 21 and the stage 31 based on path information indicating the target movement trajectory MT0 (namely, path information indicating the processing path) so that each of the processing unit areas BSA#1 and BSA#2 moves along the target movement trajectory MT0 on the build surface MS.

The path information may include information related to a target value of the width of the build object (in the below-described description, it is referred to as a "target width"), in addition to indicating the target movement trajectory MT0. The target width may be a target value of dimensions/size (i.e., a width) in a direction perpendicular to the target movement trajectory MT0. The target width may be referred to as a line width or a bead width. Specifically, as described above, the build object having the width along the direction intersecting the target movement trajectory MT0 is built on the build surface MS due to the movement of each of the processing unit areas BSA#1 and BSA#2 along the target movement trajectory MT0. For example, in a case where each of the processing unit areas BSA#1 and BSA#2 moves along the Y-axis direction as illustrated in FIG. 7(a), a linear build object that has a width along the X-axis direction and that extends along the Y-axis direction is built on the build surface MS as illustrated in FIG. 7(b). Incidentally, the above-described structural layer SL corresponds to an aggregation of the linear build object illustrated in FIG. 7(b). In this case, the path information may include the information related to the target value (namely, the target width) of a width D of the linear build object, as illustrated in FIG. 7(b). Namely, the path information may include the information related to the width of the linear build object that should be built on the build surface MS. Incidentally, since the target width may be referred to as the bead width, the linear build object may be referred to as a bead.

In this case, the control unit 7 may control the Galvano mirrors 2146 and 2156 based on the line width information so that the target irradiation areas EA#1 and EA#2 move in the processing unit areas BSA#1 and BSA#2, respectively. For example, the control unit 7 may control the Galvano mirrors 2146 and 2156 so that the target irradiation areas EA#1 and EA#2 periodically move inside the width of the line indicated by the line width information, respectively. Namely, the control unit 7 may control the Galvano mirrors 2146 and 2156 so that the target irradiation areas EA#1 and EA#2 do not deviate toward an outside of the width of the line indicated by the line width information, respectively. In other words, the control unit 7 may control the Galvano mirrors 2146 and 2156 so that the target irradiation areas EA#1 and EA#2 periodically move inside the target width of the build object indicated by the line width information, respectively. Namely, the control unit 7 may control the Galvano mirrors 2146 and 2156 so that the target irradiation areas EA#1 and EA#2 do not deviate toward an outside of the target width of the build object indicated by the line width information, respectively.

As a result, the melt pools MP#1 and MP#2 also periodically move inside the width of the line indicated by the line width information. Namely, the melt pools MP#1 and MP#2 do not deviate toward the outside of the width of the line indicated by the line width information. In other words, the melt pools MP#1 and MP#2 periodically move inside the target width of the build object indicated by the line width information. In other words, the melt pools MP#1 and MP#2 do not deviate toward the outside of the target width of the build object indicated by the line width information. Therefore, the processing system SYS can appropriately build the linear build object having the target width indicated by the line width information.

The width of the line (namely, the target width of the build object) indicated by the line width information may be the same as the width of each of the processing unit areas BSA#1 and BSA#2. Alternatively, the width of the line (namely, the target width of the build object) indicated by the line width information may be smaller than the width of each of the processing unit areas BSA#1 and BSA#2. Incidentally, each of a size in the X-axis direction and a size along the Y-axis direction of each of the processing unit areas BSA#1 and BSA#2 may be several millimeters. However, the size of each of the processing unit areas BSA#1 and BSA#2 is not limited to several millimeters.

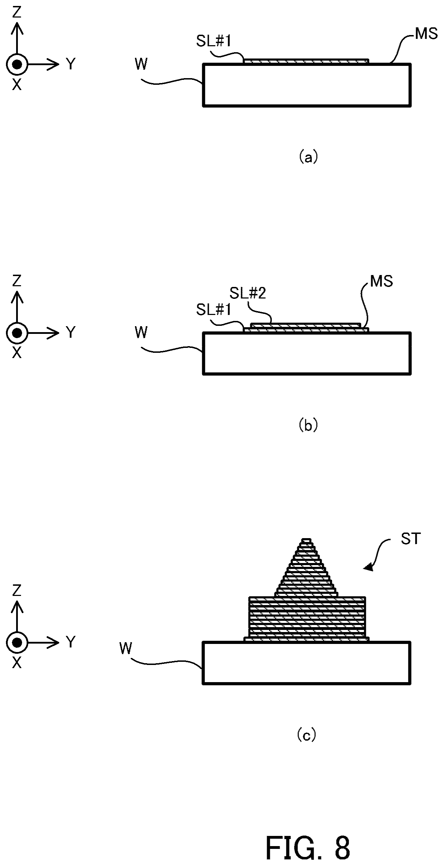

The processing system SYS repeats the operation for building the structural layer SL based on the three-dimensional model data under the control of the control unit 7. Specifically, the control unit 7 first generates slice data by performing a slicing process on the three-dimensional model data by a layer pitch before performing the operation for building the structural layer SL. The processing system SYS performs an operation for building a first structural layer SL#1 on the build surface MS that corresponds to the surface of the workpiece W based on the slice data corresponding to the structural layer SL#1. Specifically, the control unit 7 acquires the path information that is for building the first structural layer SL#1 and that is generated based on the slice data corresponding to the structural layer SL#1. Incidentally, the control unit 7 may generate the path information after or before the processing system SYS starts the additive manufacturing. Then, the control unit 7 controls the processing unit 2 and the stage unit 3 to build the first structural layer SL#1 based on the path information. As a result, as illustrated in FIG. 8(a), the structural layer SL#1 is built on the build surface MS. Then, the processing system SYS sets a surface (namely, an upper surface) of the structural layer SL#1 to be a new build surface MS and builds a second structural layer SL#2 on the new build surface MS. In order to build the structural layer SL#2, first, the control unit 7 controls at least one of the head driving system 22 and the stage driving system 32 so that the processing head 21 moves along the Z-axis direction relative to the stage 31. Specifically, the control unit 7 controls at least one of the head driving system 22 and the stage driving system 32 to move the processing head 21 toward the +Z-axis side and / or to move the stage 31 toward the -Z-axis direction so that the processing unit areas BSA#1 and BSA#2 are set on the surface of the structural layer SL#1 (namely, the new build surface MS). Then, the processing system SYS builds the structural layer SL#2 on the structural layer SL#1 based on the slice data corresponding to the structural layer SL#2, by performing an operation that is the same as the operation for building the structural layer SL#1 under the control of the control unit 7. As a result, as illustrated in FIG. 8(b), the structural layer SL#2 is built. Then, the same operation is repeated until all structural layers SL constituting the three-dimensional build object ST that should be built on the workpiece W are built. As a result, the three-dimensional build object ST is built by a layered structural object in which the plurality of structural layers SL are stacked, as illustrated in FIG. 8(c).

### (3) Method of Generating Processing Control Information

As described above, the control unit 7 may move at least one of the processing head 21 and the stage 31 so that each of the processing unit areas BSA#1 and BSA#2 moves along the target movement trajectory MT0 on the build surface MS, based on the path information. The following describes a method of generating processing control information including the path information for the control unit 7 moving at least one of the processing head 21 and the stage 31 (in other words, for controlling at least one of the processing head 21 and the stage 31).

### (3-1) Data flow

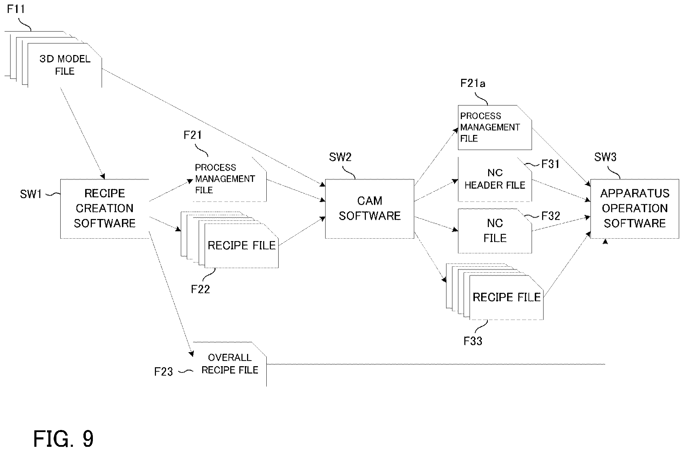

With reference to FIG. 9 to FIG. 11, data flow of the generation of the processing control information from three-dimensional model information indicating the shape of the build object to the generation of the processing control information will be described. The following describes a method of generating the processing control information using recipe creation software SW1, CAM (computer-aided manufacturing) software SW2, and apparatus operation software SW3 illustrated in FIG. 9.

The recipe creation software SW1, the CAM software SW2, and the apparatus operation software SW3 may be included in a single apparatus (e.g., a personal computer) or may be included in different apparatuses. The apparatus including the apparatus operation software SW3 may constitute a part of the processing system SYS (e.g., a part of the control unit 7) or may be a different apparatus from the processing system SYS. The three-dimensional model information may be information indicating a CAD (computer-aided design) model. In this case, the three-dimensional model information may be information in STL file format or STP file format. The three-dimensional model information may be referred to as three-dimensional build object model information as it indicates the shape of the build object.

As an example of the build object, a build object OB that is built by using build materials M1 and M2 that are different from each other is exemplified. The build object may be built by using a single build material or by using three or more build materials.

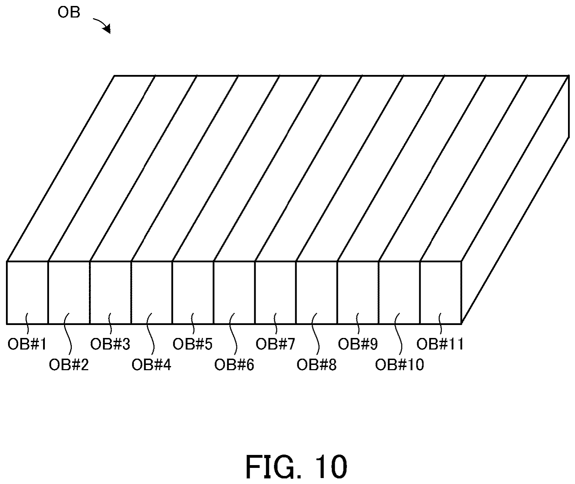

As illustrated in FIG. 10, the build object OB includes 11 parts (specifically, parts OB#1 to OB#11) with different mixing ratios of the build material M1 and the build material M2. The part OB#1 is a part including only the build material M1 (i.e., with a mixing ratio of the build material M1 of 100%). The part OB #2 is a part with a mixing ratio of the build material M1 of 90% and a mixing ratio of the build material M2 of 10%. The part OB #3 is a part with a mixing ratio of the build material M1 of 80% and a mixing ratio of the build material M2 of 20%. The part OB#4 is a part with a mixing ratio of the build material M1 of 70% and a mixing ratio of the build material M2 of 30%. The part OB#5 is a part with a mixing ratio of the build material M1 of 60% and a mixing ratio of the build material M2of40%. The part OB#6 is a part with a mixing ratio of the build material M1 of 50% and a mixing ratio of the build material M2 of 50%. The part OB#7 is a part with a mixing ratio of the build material M1 of 40% and a mixing ratio of the build material M2 of 60%. The part OB#8 is a part with a mixing ratio of the build material M1 of 30% and a mixing ratio of the build material M2 of 70%. The part OB#9 is a part with a mixing ratio of the build material M1 of 20% and a mixing ratio of the build material M2 of 80%. The part OB#10 is a part with a mixing ratio of the build material M1 of 10% and a mixing ratio of the build material M2 of 90%. The part OB#11 is a part including only the build material M2 (i.e., with a mixing ratio of the build material M2 of 100%).

In the present example embodiment, it is assumed that there are 11 pieces of three-dimensional model information (specifically, three-dimensional model information MI#1 to MI#11) respectively corresponding to the parts OB#1 to OB#11. The number of the pieces of three-dimensional model information corresponding to the build object OB may be arbitrarily determined by a user. That is, the number of the pieces of three-dimensional model information corresponding to the build object OB is not limited to 11. A 3D model file F11 in FIG. 9 is a file that stores the three-dimensional model information. The number of 3the D model files F11 may correspond to the number of the pieces of three-dimensional model information. Since the number of the pieces of three-dimensional model information about the build object OB is 11, the number of the 3D model files F11 related to the build object OB may be 11. Note that the number of the 3D model files F11 may differ from the number of the pieces of three-dimensional model information.

The recipe creation software SW1 generates a process management file F21 and a recipe file F22 by reading the 3D model file F11. The recipe creation software SW1 may further generate an overall recipe file F23. Note that the recipe creation software SW1 may not generate the overall recipe file F23.

Here, in a case where one group of 3D model files including a plurality of 3D model files F11 exists for a single build object, the recipe creation software SW1 reads the one group of 3D model files. For example, in a case where one group of 3D model files including eleven 3D model files F11 that respectively store the 3D model information MI#1 to MI#11 exists for the build object OB, the recipe creation software SW1 reads the one group of 3D model files.

The recipe file F22 indicates a build condition of a processing apparatus (e.g., the processing system SYS) when the build object or a part of the build object indicated by the three-dimensional model information stored in the 3D model file F11 is built. The recipe creation software SW1 generates one recipe file F22 for one 3D model file F11.

In a case where the recipe creation software SW1 reads one group of 3D model files, the recipe creation software SW1 generates a plurality of recipe files F22 corresponding to the plurality of 3D model files F11 included in the one group of 3D model files. In this case, among the build conditions of the processing apparatus when the parts of the build object indicated by the pieces of three-dimensional model information respectively stored in the 3D model files F11, the recipe creation software SW1 may generate the recipe files F22 that indicate build conditions specific to the above-mentioned parts. Among the build conditions of the processing apparatus when the parts of the build object indicated by the plurality of pieces of three-dimensional model information respectively stored in the plurality of 3D model files F11, the recipe creation software SW1 may generate the overall recipe file F23 that indicates a build condition common to all the parts. The specific build conditions may include a build speed. In a case where the build object is built by stacking a plurality of layers, the specific build conditions may include a plurality of build speeds respectively corresponding to the plurality of layers. The common build condition may include a heater temperature of the processing apparatus (e.g., the processing system SYS).

The heater temperature refers to the temperature of a heater for heating the stage 31 when the build object is built. The heater temperature may be the target temperature of the heater, the temperature of the stage 31 heated by the heater, the temperature of the build object heated by the heater through the stage 31, or the temperature of the gas in the chamber space 63IN heated by the heater through the stage 31 (in other words, ambient temperature).

The process management file F21 includes data indicating correspondence between the 3D model file F11 and the recipe file F22. The process management file F21 may include information (e.g., file name) for identifying the overall recipe file F23. In a case where the recipe creation software SW1 having read one group of 3D model files generates a plurality of recipe files F22, the process management file F21 includes data indicating correspondence between the plurality of 3D model files F11 included in the one group of 3D model files and the plurality of recipe files F22.

The 3D model file F11 may be referred to as model information as it stores three-dimensional model information indicating a three-dimensional model of the build object. The recipe file F22 may be referred to as condition information as it indicates the build condition of the processing apparatus that builds the build object. Thus, it can be said that the data indicating the correspondence between the 3D model file F11 and the recipe file F22 are data indicating the correspondence between the model information and the condition information. Therefore, it can be said that a data structure related to the process management file F21 includes the data indicating the correspondence between the model information and the condition information. In a case where the recipe creation software SW1 reads one group of 3D model files, it can be said that the data structure related to the process management file F21 includes data indicating correspondence between a plurality of pieces of model information and a plurality of pieces of condition information.

For example, a computer that executes the recipe creation software SW1 (in other words, a computer program) may read the 3D model file F11. The computer may generate the process management file F21 and the recipe file F22 by performing processing specified by the recipe creation software SW1. The computer may further generate the overall recipe file by performing the processing specified by the recipe creation software SW1.

The CAM software SW2 reads the process management file F21. The CAM software SW2 reads the 3D model file F11 and the recipe file F22, based on the data indicating the correspondence between the 3D model file F11 and the recipe file F22 included in the process management file F21.

The CAM software SW2 generates a recipe file F33 based on the recipe file F22. Here, the CAM software SW2 may change at least a part of the build condition indicated by the read recipe file F22 in response to a user input. In a case where at least a part of the build condition indicated by the recipe file F22 is changed in response to the user input, the CAM software SW2 generates the recipe file F33 that indicates a build condition including the changed build condition. Note that in a case where there are a plurality of recipe files F22, the CAM software SW2 may generate a plurality of recipe files F33 respectively corresponding to the plurality of recipe files F22. Thus, the data indicating the correspondence between the 3D model file F11 and the recipe file F22 included in the process management file F21 may be used as information indicating correspondence between the 3D model file F11 and the recipe file F33.

The CAM software SW2 generates the processing control information as a program that commands the operation of the processing apparatus (e.g., the processing system SYS), based on the three-dimensional model information indicated by the 3D model file F11 and the build condition indicated by the recipe file F33. Here, a NC (Numerical Control) program is exemplified as the processing control information. Note that the processing control information is not limited to the NC program.

When generating the processing control information, the CAM software SW2 generates processing path information indicating a processing path for building the build object corresponding to the three-dimensional model information indicated by the 3D model file F11 corresponding to the recipe file F33. The CAM software SW2 stores data that associates the generated processing path information with the build condition indicated by the recipe file F33, in the processing control information.

The CAM software SW2 extracts a variable parameter from the processing control information generated based on the 3D model file F11 and the recipe file F33. Here, the variable parameter may be a parameter related to the build condition of the processing apparatus that builds the build object. The CAM software SW2 outputs a NC header file F31 including the extracted variable parameter. The CAM software SW2 outputs a part of the generated processing control information other than the extracted variable parameter, as a NC file F32. The variable parameter may include at least one of the build speed of building the build object by the processing apparatus and a supply speed by the processing apparatus of supplying the build material for building the build object.

The CAM software SW2 may store information (e.g., file name) for identifying the NC header file F31 and the NC file F32, in the recipe file F33.

The CAM software SW2 adds the information (e.g., file name) for identifying the NC header file F31 and the NC file F32, to the process management file F21. The CAM software SW2 updates the data indicating the correspondence between the 3D model file F11 and the recipe file F22 included in the process management file F21. For example, the CAM software SW2 may update the above-mentioned data by replacing information (e.g., file name) for identifying the recipe file F22 in the data indicating the correspondence between the 3D model file F11 and the recipe file F22 with information (e.g., file name) for identifying the recipe file F33 corresponding to the recipe file F22. The process management file F21 added and updated by the CAM software SW2 will be denoted as a process management file F21a.

The NC header file F31 may be referred to as parameter information as it includes the variable parameter. A program (e.g., a NC program) that commands the operation of the processing apparatus and that is generated based on the three-dimensional model information indicated by the 3D model file F11 and the build condition indicated by the recipe file F22 is information for controlling the processing apparatus, and may therefore be referred to as processing control information. Therefore, it can be said that a data structure related to the process management file F21a to which information (e.g., file name) for identifying the NC header file F31 is added, includes data indicating the parameter information as a part of the processing control information.

For example, a computer that executes the CAM software SW2 (i.e., a computer program) may read the process management file F21. That is, the computer may read the process management file F21 including the data indicating the correspondence between the 3D model file F11 and the recipe file F22. The computer may read the 3D model file F11 and the recipe file F22, based on the process management file F21, by performing processing specified by the CAM software SW2. The computer may generate the NC header file F31 including the variable parameter, as a part of the NC program, based on the three-dimensional model information indicated by the 3D model file F11 and the build condition indicated by the recipe file F33 corresponding to the recipe file F22, by performing the processing specified by the CAM software SW2. The computer may add the information (e.g., file name) for identifying the NC header file F31, to the process management file F21, by performing the processing specified by the CAM software SW2.

The apparatus operation software SW3 reads the process management file F21a. The apparatus operation software SW3 reads the recipe file F33 based on data indicating the correspondence between the 3D model file F11 and the recipe file F33 included in the process management file F21a. The apparatus operation software SW3 reads the overall recipe file F23, the NC header file F31, and the NC file F32, based on information for identifying the overall recipe file F23, the NC header file F31, and the NC file F32 included in the process management file F21a. The apparatus operation software SW3 may change at least a part of the parameter included in the NC header file F31, in response to a user input.

For example, a computer that executes the apparatus operation software SW3 (in other words, a computer program) may read the process management file F21a. The computer may read the recipe file F33, the overall recipe file F23, the NC header file F31, and the NC file F32, based on the process management file F21a, by performing processing specified by the apparatus operation software SW3.

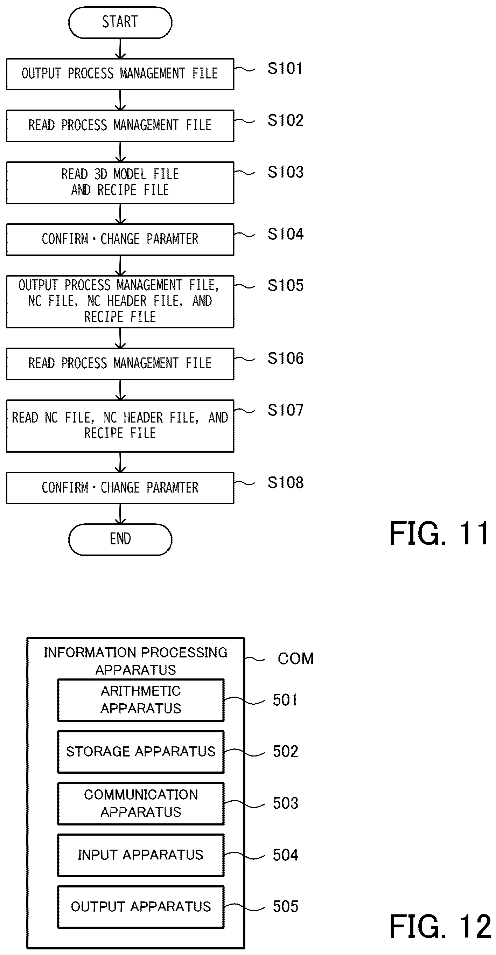

The above-described processing will be described with reference to a flowchart in FIG. 11. In FIG. 11, the computer that executes the recipe creation software SW1 outputs the process management file F21 (step S101). Then, the computer that executes the CAM software SW2 reads the process management file F21 (step S102). The computer that executes the CAM software SW2 reads the 3D model file F11 and the recipe file F22, based on the data indicating the correspondence between the 3D model file F11 and recipe file F22 included in process management file F21 (step S103).

A user of the computer that executes the CAM software SW2 may use the computer to perform at least one of confirmation or change of the parameter related to the build condition indicated by the recipe file F22 (step S104). The computer that executes the CAM software SW2 changes the build condition in accordance with the parameter related to the build condition changed by the user. The computer that executes the CAM software SW2 generates the processing path information indicating the processing path for building the build object. The computer that executes the CAM software SW2 generates the processing control information including the changed build condition and the processing path information.

Thereafter, the computer that executes the CAM software SW2 outputs the process management file F21a, the NC header file F31, the NC file F32, and the recipe file F33 (step S105). The computer that executes the apparatus operation software SW3 reads the process management file F21a (step S106). The computer that executes the apparatus operation software SW3 reads the NC header file F31, the NC file F32, the recipe file F33, and the overall recipe file F23, based on the process management file F21a (step S107).

A user of the computer that executes the apparatus operation software SW3 may use the computer to perform at least one of confirmation or change of at least one of the parameter indicated by the NC header file F31, the parameter related to the build condition indicated by the recipe file F33, and the parameter related to the build condition indicated by the overall recipe file F23 (step S108).

The computer that executes the recipe creation software SW1, the computer that executes the CAM software SW2, and the computer that executes the apparatus operation software SW3 may be the same or different.

As described above, the CAM software SW2 reads the 3D model file F11 and the recipe file F22 based on the process management file F21. The apparatus operation software SW3 reads the recipe file F33, the overall recipe file F23, the NC header file F31, and the NC file F32, based on the process management file F21a.

If at least one of the process management files F21 and F21a does not exist, at least one of the user of the CAM software SW2 and the user of the apparatus operation software SW3 has to manually designate the file (in other words, information) to be read by the software. This user's work becomes more complicated and time-consuming as the number of the 3D model files F11 and the recipe files F22 increases. In addition, there is a possibility of work errors, such as designation errors, during this user's work process.

In a case where there are the process management files F21 and F21a, the user only needs to command the reading of one of the process management files F21 and F21a, so that the software (i.e., one of the CAM software SW2 and the apparatus operation software SW3) automatically reads the file to be read. This may simplify the user's work and may reduce a time required for the work.

In a case where the user changes the parameter included in the processing control information (e.g., the NC program) by using the apparatus operation software SW3, if the NC header file F31 does not exist, the user has to search for a desired parameter from the processing control information. Here, as a size of the build object increases, the processing control information has a larger information amount. Therefore, as the processing control information has a larger information amount, it takes a longer time for the user to search for the desired parameter.

The CAM software SW2 extracts the variable parameter from the processing control information and generates the NC header file F31 including the extracted parameter. This reduces the time required for the user's work, as the user only needs to search for the desired parameter from the parameter included in the NC header file F31.

### (3-2) Building of Variable Bead Width

The path information may include, for example, information about the target value (i.e., target width) of the width D of the linear build object illustrated in FIG. 7(b). Since the target width may be referred to as the bead width, the information about the target width of the linear build object (i.e., the information about the width of the linear build object to be built) may be referred to as bead width information.

As described above, the path information is generated by the computer that executes the CAM software SW2. First, the computer that executes the CAM software SW2 will be described. Then, the bead width information will be described.

Here, an information processing apparatus COM is given as an example of the computer that executes the CAM software SW2. The information processing apparatus COM will be described with reference to FIG. 12. In FIG. 12, the information processing apparatus COM includes an arithmetic apparatus 501, a storage apparatus 502, a communication apparatus 503, an input apparatus 504, and an output apparatus 505.

The arithmetic apparatus 501 may include, for example, at least one of a CPU (Central Processing Unit), a GPU (Graphics Processing Unit), a FPGA (Field Programmable Gate Array), and a TPU (Tensor Processing Unit).

The storage apparatus 502 may include, for example, at least one of a RAM (Random Access Memory), a ROM (Read Only Memory), a hard disk apparatus, a magneto-optical disk apparatus, a SSD (Solid State Drive), and an optical disk array. That is, the storage apparatus 502 may include a non-transitory recording medium. The storage apparatus 502 is configured to store desired data. For example, the storage apparatus 502 may temporarily store a computer program (e.g., the CAM software SW2) to be executed by the arithmetic apparatus 501. The storage apparatus 502 may temporarily store data that are temporarily used by the arithmetic apparatus 501 when the arithmetic apparatus 501 executes the computer program.

The communication apparatus 503 may be configured to communicate with an apparatus external to the information processing apparatus COM. The communication apparatus 503 may perform wired communication or wireless communication. The wired communication is not limited to communication via a network, but conceptually includes communication via a cable such as, for example, a USB (Universal Serial Bus) cable. The wireless communication is not limited to communication via a network, but conceptually includes short-range wireless communication such as, for example, Bluetooth (registered trademark).

The input apparatus 504 is an apparatus that is configured to receive an input of information to the information processing apparatus COM from the outside. The input apparatus 504 may include an operating apparatus (e.g., at least one of a keyboard, a mouse, and a touch panel) that is operable by a user of the information processing apparatus COM. The input apparatus 504 may include a recording medium reading apparatus that is configured to read information recorded on a recording medium that is attachable to or detachable from the information processing apparatus COM, such as, for example, a USB memory. In a case where information is inputted to the information processing apparatus COM via the communication apparatus 503 (in other words, in a case where the information processing apparatus COM acquires information via the communication apparatus 503), the communication apparatus 503 may function as an input apparatus.

The output apparatus 505 is an apparatus that is configured to output information to the outside of the information processing apparatus COM. The output apparatus 505 may output, as the above information, visual information such as characters and images, auditory information such as voice/sound, or tactile information such as vibration. The output apparatus 505 may include, for example, at least one of a display, a speaker, a printer, and a vibration motor. The output apparatus 505 may be configured to output information to a recording medium that is attachable to or detachable from the information processing apparatus COM, such as a USB memory. In a case where the information processing apparatus COM outputs information via the communication apparatus 503, the communication apparatus 503 may function as an output apparatus.

The information processing apparatus COM serving as the computer that executes the CAM software SW2, reads the process management file F21. The information processing apparatus COM reads the 3D model file F11 and the recipe file F22, based on the data indicating the correspondence between the 3D model file F11 and the recipe file F22 included in the process management file F21. The arithmetic apparatus 501 of the information processing apparatus COM may slice the build object corresponding to the three-dimensional model information indicated by the 3D model file F11 (hereinafter referred to as a "3D model of the build object" as appropriate) and may generate a plurality of pieces of slice data respectively indicating cross sections of the plurality of layers forming the build object (i.e., the layered partial structural objects). Therefore, it can be said that the slice data are data indicating the layered partial structural objects (hereinafter referred to as "structural layers" as appropriate). In a case where the build object is formed in a single layer, the arithmetic apparatus 501 may not generate the slice data.

The arithmetic apparatus 501 generates path information indicating paths for building a plurality of structural layers respectively indicated by the plurality of pieces of slice data, based on the plurality of pieces of slice data.

When generating the path information, the arithmetic apparatus 501 controls the output apparatus 505 such that a screen relating to the bead width information is presented to the user. In this case, the screen presented to the user may include bead width information for each of the plurality of layers respectively corresponding to the plurality of pieces of slice data. The user may change the bead width information for each of the plurality of layers, via the input apparatus 504. Here, the user may designate two or more pieces of bead width information for each of the plurality of layers. That is, the user may designate the bead width information such that a part of one of the plurality of layers is built with a bead having a first width, and such that another part of the one layer is built with a bead having a second width that is different from the first width.

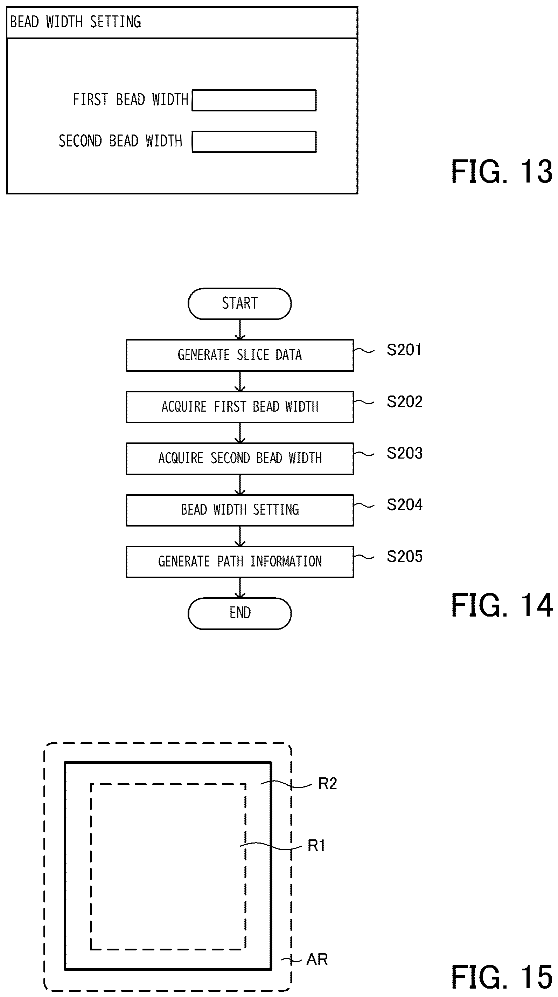

For example, the arithmetic apparatus 501 may control the output apparatus 505 such that a screen (e.g., a dialog box) as illustrated in FIG. 13 is presented to the user, as the screen relating to the bead width information. Note that FIG. 13 illustrates input fields for inputting a first bead width and a second bead width, but a screen including input fields for three or more bead widths may also be presented to the user, as the screen relating to the bead width information.

For example, in a case where the user inputs, for a first layer of the plural layers, first bead width information that is information for building the bead with the first width and second bead width information that is information for building the bead with the second width that is different from the first width via the input apparatus 504, the arithmetic apparatus 501 acquires the first bead width information and the second bead width information. The arithmetic apparatus 501 generates first path information indicating a path for building the bead (in other words, a part of the structural layer corresponding to the first layer) with the first width indicated by the first bead width information, based on a piece of slice data corresponding to the first layer and the first bead width information. The arithmetic apparatus 501 generates second path information indicating a path for building the bead (in other words, another part of the structural layer corresponding to the first layer) with the second width indicated by the second bead width information, based on the piece of slice data corresponding to the first layer and the second bead width information. The arithmetic apparatus 501 generates the processing control information including the first path information and the second path information. At this time, the arithmetic apparatus 501 may generate the processing control information such that the first path information and the second path information are included in a single file.

The operation of the information processing apparatus COM will be described with reference to a flowchart in FIG. 14. The arithmetic apparatus 501 of the information processing apparatus COM may slice the 3D model of the build object and may generate the slice data (step S201). In a case where the build object is formed in a single layer, the arithmetic apparatus 501 may not perform the step S201.

For example, when the user inputs a numerical value in the input field for inputting the first bead width illustrated in the screen in FIG. 13 via the input apparatus 504, the arithmetic apparatus 501 may acquire the first bead width (corresponding to the first width indicated by the first bead width information described above) (step S202). For example, when the user inputs a numerical value in the input field for inputting the second bead width illustrated in the screen in FIG. 13 via the input apparatus 504, the arithmetic apparatus 501 may acquire the second bead width (corresponding to the second width indicated by the second bead width information described above) (step S203).

The arithmetic apparatus 501 sets the bead width, based on the first bead width acquired in the step S202 and the second bead width acquired in the step S203 (step S204). Thereafter, the arithmetic apparatus 501 generates the first path information indicating a path for building the bead with the first bead width and the second path information indicating a path for building the bead with the second bead width (step S205).

In addition to the first path information and the second path information, the arithmetic apparatus 501 may generate path information indicating a path for moving a processing head (e.g., the processing head 21) of the processing apparatus (e.g., the processing system SYS) to a position at which processing for switching the bead width from one of the first bead width and the second bead width to the other is performed. The position at which the processing for switching the bead width is performed, may be a position in a different area from an area in which the build object is built. In this case, the position may be referred to as a retreat position. Therefore, the path information indicating a path for moving the processing head to the position at which the processing for switching the bead width is performed, may be referred to retreat path information.

The retreat path information may include information about an additive build condition, in addition to the information indicating a path for moving the processing head to the position at which the processing for switching the bead width is performed. The additive build condition may include at least one of information indicating the bead width after switching, and information for switching a degree of overlap described later.

The processing apparatus (e.g., the processing system SYS) that operates based on the processing control information including the first path information and the second path information, may build the bead with the first width, based on the first path information included in the processing control information. The processing apparatus may further build the bead with the second width, based on the second path information included in the processing control information. For a method of building the bead, please refer to "(2) Operation of Processing System SYS" described above.

The arithmetic apparatus 501 may generate the first path information and the second path information, by taking into account a time required for changing the bead width. For example, the arithmetic apparatus 501 may generate the first path information and the second path information so as to reduce/control the number of changes in the bead width (for example, so as to minimize the number of changes in the bead width).

As described above, each of the plurality of pieces of slice data indicates a contour line indicating a cross section of one layer of the build object. It can be said that the contour line is information indicating a build shape of a layered structural object of the one layer. It can be also said that the contour line is information indicating a build size of the layered structural object of the one layer. Therefore, it can be said that each of the plurality of pieces of slice data includes information indicating the build shape and build size of the corresponding layer. Thus, it can be said that the first path information is generated based on the first bead width information and at least one of the build shape and the build size obtained from the three-dimensional model information indicated by the 3D model file F11. Similarly, it can be said that the second path information is generated based on the second bead width information and at least one of the build shape and the build size obtained from the three-dimensional model information indicated by the 3D model file F11.

As described above, the information processing apparatus COM reads the 3D model file F11 and the recipe file F22, based on the process management file F21. Here, the process management file F21 read by the information processing apparatus COM is designated by the user. Therefore, it can be said that the 3D model file F11 read based on the process management file F21 is the 3D model file F11 designated or inputted by the user.

The arithmetic apparatus 501 may control the output apparatus 505 such that a screen for designating (or selecting) one layer (e.g., the first layer) from the plurality of layers forming the build object is presented to the user, before the screen relating to the bead width information is presented to the user. In a case where the user designates (or selects) one layer from the plurality of layers via the input apparatus 504 after the screen for designating (or selecting) one layer from the plurality of layers is presented to the user, the arithmetic apparatus 501 may control the output apparatus 505 such that the screen relating to the bead width information about the designated (or selected) one layer is presented to the user. Note that a screen for designating the first bead width information and a screen for designating the second bead width information may be the same screen (see, for example, FIG. 13). That is, the screen relating to the bead width information about one layer (e.g., the first layer) may include a part for designating the first bead width information and a part for designating the second bead width information. Additionally, the screen relating to the bead width information about one layer may include a part for designating three or more pieces of bead width information.

When generating the first path information and the second path information, the arithmetic apparatus 501 may generate the first path information and the second path information such that the bead formed based on the first path information (i.e., the bead with the first width) and the bead formed based on the second path information (i.e., the bead with the second width) are built without a gap in the first layer. Here, the expression, the beads are built without a gap in the first layer, may mean that an area defined by the contour line of the cross section included in the slice data corresponding to the first layer (i.e., an area corresponding to the structural layer) is filled with the beads without a gap.

It can be said that each of the first path information and the second path information is information indicating a movement direction for building the beads by relatively moving the processing head (e.g., the processing head 21) of the processing apparatus (e.g., the processing system SYS) and the table (e.g., the stage 31) on which the build object is placed. Therefore, it can be said that each of the first path information and the second path information is information indicating a movement path of the processing head (e.g., the processing head 21). The movement direction may also be referred to as a scanning direction.

With regard to the movement direction, as illustrated in FIG. 7(b), for example, the beads are built continuously (in other words, without a gap). On the other hand, a length of the bead in a direction that intersects the movement direction (i.e., a width direction) is a length corresponding to the bead width specified by the first path information or the second path information (e.g., refer to the width D in FIG 7(b)). Therefore, in a case where another bead is formed adjacent to one bead, there may be a gap between the one bead and the other bead.

The arithmetic apparatus 501 may generate the first path information and the second path information such that the bead based on the first path information (i.e., the bead with the first width) and the bead based on the second path information (i.e., the bead with the second width) are built without a gap, with regard to the direction that intersects the above-mentioned movement direction (i.e., the width direction).

When the user designates the bead width, the user may designate, via the input apparatus 504, an area for designating the bead width in the first layer. For the area, the user may designate one type of bead width or two or more bead widths. A shape and size of the area for designating the bead width may be arbitrarily determined by the user.

For example, as illustrated in FIG. 15, let us assume that the build shape of the structural layer indicated by the contour line of the cross section related to the first layer (see a solid line in FIG. 15) is rectangular. In this case, the user may designate a first area R1 and a second area R2, as the area for designating the bead width. Note that the second area R2 may be automatically determined when the first area R1 is designated by the user.

In a case where the bead width of the first area R1 is designated by the user as the first width, the arithmetic apparatus 501 may generate first path information indicating a path for building a part of the structural layer corresponding to the first area R1 with the first width. In a case where a gap is generated in the first area R1 when a part of the structural layer corresponding to the first area R1 is to be built by using only the bead with the first width, the arithmetic apparatus 501 may generate the first path information and the second path information such that the building is performed in the first area R1 without a gap, by building at least a part of the first area R1 by using the bead with the first width and the bead with the second width.

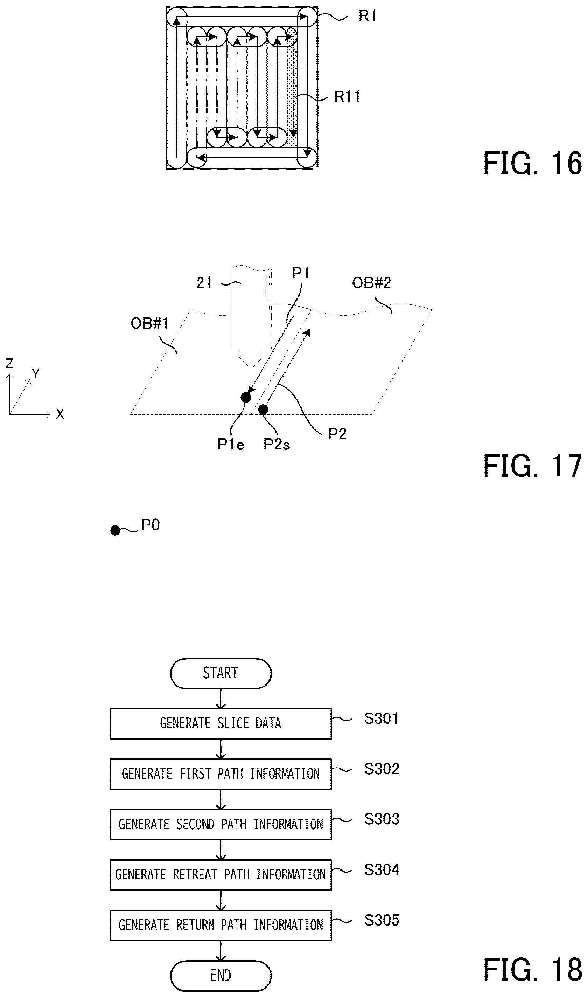

For example, let us assume that the first width is wider than the second width. As illustrated in FIG. 16, in a case where there is a gap in an area R11 when a part of the structural layer corresponding to the first area R1 is to be built by using only the bead with the first width, the arithmetic apparatus 501 may generate the first path information and the second path information such that the building is performed in the first area R1 without a gap, by building the bead with the second width in the area R11.

In a case where a first amount of gap is generated in the first area R1 when a part of the structural layer corresponding to the first area R1 is to be built by using only the bead with the first width, the arithmetic apparatus 501 may generate the first path information and the second path information such that a part of the structural layer corresponding to the first area R1 is built with an amount of gap that is smaller than the first amount, by building at least a part of the first area R1 by using the bead with the first width and the bead with the second width. The "amount of gap that is smaller than the first amount" conceptually includes a case where there is no gap (i.e., the amount of gap is zero).

In order to prevent a gap from being generated, the arithmetic apparatus 501 may generate the path information (e.g., at least one of the first path information and the second path information) such that a part of one bead overlaps a part of another bead adjacent to the one bead. A degree of overlap between two adjacent beads may vary depending on the bead width, or may be constant.

By the way, a possible value for the bead width (in other words, a range in which the bead width is changeable) is determined by the specifications of the processing apparatus (e.g., the processing system SYS). In other words, the possible value for the bead width is limited by the specifications of the processing apparatus. For example, the arithmetic apparatus 501 may acquire apparatus information about the processing apparatus (e.g., the processing system SYS) via the communication apparatus 503. Alternatively, the user may input the apparatus information about the processing apparatus to the information processing apparatus COM via the input apparatus 504. In this case, the arithmetic apparatus 501 may acquire the apparatus information inputted by the user. The arithmetic apparatus 501 may determine the possible value for the bead width, based on the acquired apparatus information. The arithmetic apparatus 501 may determine a maximum value and a minimum value of the bead width, as the possible value for the bead width.

The apparatus information may include optical system information about an optical system of the processing apparatus (e.g., the processing system SYS). The arithmetic apparatus 501 may determine the possible value for the bead width, based on the optical system information. The optical system of the processing apparatus (e.g., the processing system SYS) may include a Galvano scanner (e.g., the Galvano scanner 2144) that is configured to change a condensed position of a processing beam (e.g., the processing light EL). In this case, the optical system information may include first range information indicating a variable range of the condensed position of the processing beam (e.g., the processing light EL) by the Galvano scanner (e.g., the Galvano scanner 2144) provided in the optical system of the processing apparatus (e.g., the processing system SYS). The arithmetic apparatus 501 may determine the possible value for the bead width, based on the first range information. The optical system of the processing apparatus (e.g., the processing system SYS) may be configured to change a spot diameter of the processing beam (e.g., the processing light EL). In this case, the optical system information may include second range information indicating a variable range of the spot diameter of the processing beam (e.g., the processing light EL). The arithmetic apparatus 501 may determine the possible value for the bead width, based on the second range information.

When the user designates the bead width, the user may input a numerical value indicating the bead width via the input apparatus 504, thereby designating the bead width. In this case, the arithmetic apparatus 501 may control the output apparatus 505 such that the screen relating to the bead width information includes the possible value for the bead width described above. Alternatively, the user may select one of a plurality of bead widths set in advance via the input apparatus 504, thereby designating the bead width. For example, in a case where 2 mm, 1 mm, and 0.1 mm are provided as options for the bead width, the user may designate the first width as the bead width by selecting one of 2 mm, 1 mm, and 0.1 mm. The user may designate the second width as the bead width by selecting a value that is different from the first width, from 2 mm, 1 mm, and 0.1 mm.

When the user designates the bead width, the user may input a numerical value indicating the degree of overlap between two adjacent beads via the input apparatus 504, thereby designating the degree of overlap. The user may input a numerical value indicating the degree of overlap for each bead width via the input apparatus 504, thereby designating the degree of overlap. Alternatively, the user may select one of a plurality of degrees of overlap set in advance via the input apparatus 504, thereby designating the degree of overlap. For example, in a case where 0.4 mm, 0.2 mm, and 0.08 mm are provided as options for the degree of overlap, the user may designate the degree of overlap between the beads with the first width by selecting one of the values 0.4 mm, 0.2 mm, and 0.08 mm. The user may designate the degree of overlap between the beads with the second bead width by selecting one of the values 0.4 mm, 0.2 mm, and 0.08 mm. Note that the degree of overlap between the beads with the first bead width may be different from or the same as the degree of overlap between the beads with the second bead width. The user's selection of the degree of overlap between the beads is synonymous with the user's instruction to build the beads in the first layer without a gap.

The arithmetic apparatus 501 may generate the first path information, based on the first width designated by the user and the degree of overlap between the beads with the first width designated by the user, when generating the first path information. The arithmetic apparatus 501 may generate the second path information, based on the second width designated by the user and the degree of overlap between the beads with the second width designated by the user, when generating the second path information.

In a case where the optical system of the processing apparatus (e.g., the processing system SYS) includes the Galvano scanner (e.g., the Galvano scanner 2144) that is configured to change the condensed position of the processing beam (e.g., the processing light EL), the arithmetic apparatus 501 may generate control information for controlling the Galvano scanner based on the path information (e.g., the first path information and the second path information) when generating the processing control information. The arithmetic apparatus 501 may include the generated control information in the processing control information.

It should be noted that the user may not designate the bead width and the degree of overlap. In this case, the arithmetic apparatus 501 may generate the path information, based on a predetermined bead width (e.g., an initial value of the bead width) and a predetermined degree of overlap (e.g., an initial value of the degree of overlap). Alternatively, instead of designating the bead width and the degree of overlap, the user may select a build mode that defines the bead width and the degree of overlap. For example, the build mode may include at least one of a high-speed mode, an intermediate mode, and a high-resolution mode.

The high-speed mode is a mode in which the beads are built with a thick width (e.g., a maximum value of the possible value for the bead). For example, in the high-speed mode, the thick width may be 2 mm and the degree of overlap may be 0.4 mm. When the high-speed mode is selected, the arithmetic apparatus 501 may generate path information for building the structural layer indicated by the slice data while satisfying the condition that the bead width is 2 mm and the degree of overlap is 0.4 mm. At this time, in a case where a gap is generated in the structural layer to be built due to the condition that the bead width is 2 mm and the degree of overlap is 0.4 mm, the arithmetic apparatus 501 may generate path information for building a bead with a width of smaller than 2 mm to fill the gap. In other words, the arithmetic apparatus 501 may generate the path information such that the structural layer is built without a gap.

Here, let us assume that the bead width of 2 mm is the first width and the width of smaller than 2 mm is the second width. The "path information for building the structural layer indicated by the slice data while satisfying the condition that the bead width is 2 mm and the degree of overlap is 0.4 mm" may be referred to as the first path information. The "path information for building the bead with a width of smaller than 2 mm to fill the gap" may be referred to as the second path information.

The intermediate mode is a mode in which the beads are built with an intermediate width (e.g., an intermediate value of the possible value for the bead) in an area corresponding to an outer edge of the structural layer indicated by the slice data (e.g., the second area R2 in FIG. 15), and in which the beads are built with a thick width (e.g., a maximum value of the possible value for the bead) in an area corresponding to a part other than the outer edge of the structural layer (e.g., the first area R1 in FIG. 15). For example, in the intermediate mode, the intermediate width may be 1 mm and the thick width may be 2 mm. Furthermore, the degree of overlap between the beads with the intermediate width may be 0.2 mm, and the degree of overlap between the beads with the thick width may be 0.4 mm.

When the intermediate mode is selected, the arithmetic apparatus 501 may generate path information for building a part of the structural layer corresponding to the area corresponding to the outer edge (e.g., the second area R2 in FIG. 15) while satisfying the condition that the bead width is 1 mm and the degree of overlap is 0.2 mm. At this time, in a case where a gap is generated in a part of the structural layer to be built due to the condition that the bead width is 1 mm and the degree of overlap is 0.2 mm, the arithmetic apparatus 501 may generate path information for building a bead with a width of smaller than 1 mm to fill the gap. Here, let us assume that the bead width of 1 mm is the first width and the width of smaller than 1 mm is the second width. The "path information for building a part of the structural layer corresponding to the area corresponding to the outer edge while satisfying the condition that the bead width is 1 mm and the degree of overlap is 0.2 mm" may be referred to as the first path information. The "path information for building the bead with a width of smaller than 1 mm" may be referred to as the second path information.

When the intermediate mode is selected, the arithmetic apparatus 501 may generate path information for building another part of the structural layer corresponding to the area corresponding to a part other than the outer edge (e.g., the first area R1 in FIG. 15) while satisfying the condition that the bead width is 2 mm and the degree of overlap is 0.4 mm. At this time, in a case where a gap is generated in another part of the structural layer to be built due to the condition that the bead width is 2 mm and the degree of overlap is 0.4 mm, the arithmetic apparatus 501 may generate path information for building a bead with a width of smaller than 2 mm to fill the gap. Here, let us assume that the bead width of 2 mm is the first width and the width of smaller than 2 mm is the second width. The "path information for building another part of the structural layer corresponding to the area corresponding to a part other than the outer edge while satisfying the condition that the bead width is 2 mm and the degree of overlap is 0.4 mm" may be referred to as the first path information. The "path information for building the bead with a width of smaller than 2 mm" may also be referred to as the second path information.

The high-resolution mode is a mode in which the beads are built with a narrow width (e.g., a minimum value of the possible value for the bead) in the area corresponding to the outer edge of the structural layer indicated by the slice data (e.g., the second area R2 in FIG. 15), and in which the beads are built with an intermediate width (e.g., an intermediate value of the possible value for the bead) in the area corresponding to a part other than the outer edge (e.g., the first area R1 in FIG. 15). For example, in the high-resolution mode, the narrow width may be 0.1 mm and the intermediate width may be 1 mm. Additionally, the degree of overlap between the beads with the narrow width may be 0.08 mm, and the degree of overlap between the beads with the intermediate width may be 0.2 mm.

When the high-resolution mode is selected, the arithmetic apparatus 501 may generate path information for building a part of the structural layer corresponding to the area corresponding to the outer edge (e.g., the second area R2 in FIG. 15) while satisfying the condition that the bead widths is 0.1 mm and the degree of overlap is 0.08 mm.

When the high-resolution mode is selected, the arithmetic apparatus 501 may generate path information for building another part of the structural layer corresponding to the area corresponding to a part other than the outer edge (e.g., the first area R1 in FIG. 15) while satisfying the condition that the bead widths is 1 mm and the degree of overlap is 0.2 mm. At this time, in a case where a gap is generated in another part of the structural layer to be built due to the condition that the bead width is 1 mm and the degree of overlap is 0.2 mm, the arithmetic apparatus 501 may generate path information for building a bead with a width of smaller than 1 mm to fill the gap. Here, let us assume that the bead width of 1 mm is the first width and the width of smaller than 1 mm is the second width. The "path information for building another part of the structural layer corresponding to the area corresponding to a part other than the outer edge while satisfying the condition that the bead widths is 1 mm and the degree of overlap is 0.2 mm" may also be referred to as the first path information. The "path information for building the bead with a width of smaller than 1 mm" may be referred to as the second path information.

As the bead width is thicker, the structural layer indicated by the slice data is built faster. Therefore, it can be said that the bead width indicates the build speed of building the build object. In addition, as the bead width is narrower, the structural layer indicated by the slice data has higher build accuracy. Therefore, it can be said that the bead width indicates the build accuracy of the build object. Accordingly, it can be said that the build mode that defines the bead width indicates at least one of the build speed and the build accuracy of the build object.

The operation of the information processing apparatus COM described above may be realized by the arithmetic apparatus 501 reading the CAM software SW2. That is, the operation of the information processing apparatus COM described above may be realized by providing the information processing apparatus COM with the functions provided by the CAM software SW2.

In a case where the width of the bead that can be built by the processing apparatus is fixed, the following method is proposed as a method of building a desired build object. When the bead width is relatively thick, first, a build object that is larger than the structural layer indicated by the slice data is formed. Then, an unnecessary part of the formed build object is removed so that the formed build object approaches the structural layer. In this method, it may be hard to perform cutting processing when a target structural layer has a relatively complex shape. In addition, when a relatively expensive metal material is used as the build material, an amount of the build material used is greater than an amount originally needed, which increases a manufacturing cost. In contrast, when the bead widths is relatively narrow, it is possible to build the structural layer indicated by the slice data without performing the cutting processing. However, due to the relatively narrow bead width, the build speed of building the structural layer is relatively low.

In a case where two or more types of bead widths are selectable (i.e., when the bead width is variable) when the structural layer indicated by the slice data is built, it is possible to build the structural layer indicated by the slice data relatively fast, while reducing/controlling a cutting amount caused by the cutting processing described above. Therefore, it is possible to build the build object, while achieving both a relatively high building speed and relatively high building accuracy, by selecting the bead width. The expression, "reducing/controlling a cutting amount" may include reducing the cutting amount to zero (i.e., not performing the cutting processing).

In addition, in a case where two or more types of bead widths are selectable, it is possible to relatively easily build a build object with a hollow structure including a relatively thick outer wall and a relatively thin inner wall, for example. The build object with the hollow structure may include at least one of an internal flow passage, an air-cooling pipe, a lattice structure, and a honeycomb structure.

### (3-3) Material Switching Processing

For example, as illustrated in the build object OB in FIG. 10, when the build object including two or more parts, each of which build materials differ from other parts, is built by the processing apparatus (e.g., the processing system SYS), processing for switching the build material is performed while the build object is being built. Thus, the computer that executes the CAM software SW2 (e.g., the information processing apparatus COM) may generate information about the processing for switching the build material, as information included in the processing control information.

The following describes the information about the processing for switching the build material, by using the information processing apparatus COM as an example of the computer that executes the CAM software SW2. In the following, the build material is assumed to be a powder-like material (i.e., a powdery material). The build material, however, is not limited to a powdery material, but may also be a wire-like material or a gas-like material.

As described in "(3-2) Building of Variable Bead Width," the path information for building the build object is generated based on a plurality of pieces of slice data generated by slicing the 3D model of the build object. For example, when the build object OB illustrated in FIG. 10 is built, a layered structural object of one layer of the part OB #1 may be built, and then, a layered structural object of one layer of the part OB #2 corresponding to the one layer of the part OB #1 (in other words, with the same height) may be built. For convenience of description, explanations of the parts OB #3 to OB #11 included in the build object OB will be omitted.

The part OB #1 is a part including only the build material M1. The part OB #2 is a part with a mixing ratio of the build material M1 of 90% and a mixing ratio of the build material M2 of 10%. Therefore, a build material for building the part OB#1 is different from a build material for building the part OB#2. Thus, it is necessary to switch the build material (in other words, change the build material) after the one layer of the part OB#1 is built and before the one layer of the part OB#2 is built.

In the processing system SYS (see FIG. 1) as an example of the processing apparatus, the build material from the material supply source 1 is fed to the material nozzle 212 via the mix apparatus 12 and the supply pipe 11. The build material is switched at the material supply source 1. Therefore, a certain amount of time is required, after the build material is switched from a first build material to the second build material and before a second build material is injected from the material nozzle 212. In addition, even if the build material is switched from the first build material to the second build material at the material supply source 1, it is necessary to discharge the first build material that is in the supply pipe 11 and that is not used to build the build object.

Therefore, when the build material is switched, the processing head (e.g., the processing head 21) of the processing apparatus (e.g., the processing system SYS) is moved to a predetermined position that is different from the area in which the build object is built. The information processing apparatus COM may generate information for moving the processing head (e.g., the processing head 21) to the predetermined position, as information about the processing for switching the build material.

For example, with reference to FIG. 17, a description will be given of the operation of the processing head (e.g., the processing head 21) of the processing apparatus (e.g., the processing system SYS) when one layer of the part OB#1 and one layer of the part OB#2 of the build object OB illustrated in FIG. 10 are built.

In FIG. 17, the processing head builds one layer of the part OB#1 by building the bead along a path P1. At this time, the position of the processing head is assumed to be at an end position P1e of the path P1. Thereafter, the processing head moves from the end position P1e to a material switching position P0. After the build material is switched at the material switching position P0, the processing head moves to a starting end position P2s of a path P2. The processing head may move from the material switching position P0 to the end position P1e, and then, may further move from the end position P1e to the starting end position P2s. Alternatively, the processing head may move from the material switching position P0 to the starting end position P2s. Thereafter, the processing head builds one layer of the part OB#2 by building the bead along the path P2.

For example, in order to operate the processing head (e.g., the processing head 21) as described above, the arithmetic apparatus 501 of the information processing apparatus COM may generate processing control information (e.g., an NC program) including first path information indicating the path P1, second path information indicating the path P2, and information for moving the processing head to the material switching position P0. Since the material switching position P0 is a target position of the processing head, the information for moving the processing head may include position information indicating the material switching position P0. Therefore, it can be said that the processing control information including the information for moving the processing head includes the position information indicating the material switching position P0. The material switching position P0 may be a position of an origin of a coordinate system that is defined by an X-axis, a Y-axis and a Z-axis that are orthogonal to one another. In this case, the material switching position P0 may be referred to as a home position. In this case, it can be said that the information for moving the processing head, which includes the position information indicating the material switching position P0, includes information about the home position. The arithmetic apparatus 501 may generate the processing control information such that the first path information, the second path information, and the information for moving the processing head are included in a single file.

The build material for building the part OB#1 (i.e., the build material M1) may be referred to as the first build material. The build material for building the part OB #2 (i.e., a build material with a mixing ratio of the build material M1 of 90% and a mixing ratio of the build material M2 of 10%) may be referred to as the second build material. Since the part OB#1 is built by using the first build material, it can be said that the first path information is path information indicating the path P1 for building the bead by using the first build material. Since the part OB#2 is built by using the second build material, it can be said that the second path information is path information indicating the path P2 for building the bead with the second build material. In addition, it can be said that the material switching position P0 is a position for switching the build material supplied from a material supply port (e.g., the material nozzle 212) of the processing apparatus (e.g., the processing system SYS), from the first build material to the second build material. It can be also said that the material switching position P0 is a position for allowing the processing head to retreat from the area in which the build object (e.g., at least one of the parts OB#1 and OB#2) is built. Therefore, the material switching position P0 may be referred to as a retreat position. The area in which the build object is built may also be referred to as a build area.

The operation of the information processing apparatus COM will be described with reference to a flowchart in FIG. 18. The arithmetic apparatus 501 of the information processing apparatus COM may slice the 3D model of the build object and may generate the slice data (step S301). In a case where the build object is built in a single layer, the arithmetic apparatus 501 may not perform the step S301.

The arithmetic apparatus 501 generates the first path information indicating a first path (e.g., the path P1) for building the bead by using the first build material, for a part built by using the first build material (e.g., the part OB#1) of one layer of the build object indicated by the slice data (step S302).

The arithmetic apparatus 501 generates the second path information indicating a second path (e.g., the path P2) for building the bead by using the second build material, for a part built by using the second build material (e.g., the part OB#2) of the one layer of the build object indicated by the slice data (step S303).

The arithmetic apparatus 501 generates retreat path information indicating a path for moving the processing head (e.g., the processing head 21) of the processing apparatus (e.g., the processing system SYS) to the material switching position P0 for switching from the first build material to the second build material, after the processing apparatus builds the bead based on the first path information and before the processing apparatus builds the bead based on the second path information (step S304).

The arithmetic apparatus 501 generates return path information indicating a path for moving the processing head (e.g., the processing head 21) from the material switching position P0 to a build start position of the bead based on the second path information (step S305). The arithmetic apparatus 501 may generate the retreat path information and the return path information, as at least a part of the information for moving the processing head.

The first build material and the second build material may include stainless steel, copper, aluminum, titanium, and the like. The first build material and the second build material may be different types of materials. For example, the first build material may be copper, and the second build material may be titanium, which is different from copper serving as the first build material.

The first build material and the second build material may be materials with different characteristics. For example, the first build material and the second build material may have different particle sizes. The first build material may have a particle size distribution with a peak at 30 µm, and the second build material may have a particle size distribution with a peak at 100 µm. For example, the first build material and the second build material may be of the same type of material, but may have different particle sizes.

The processing apparatus (e.g., the processing system SYS) that operates based on the processing control information including the first path information, the second path information, and the information for moving the processing head, may build the bead by using the first build material supplied from the material supply port (e.g., the material nozzle 212), based on the first path information included in the processing control information. After building the bead based on the first path information, the processing apparatus may move the processing head (e.g., the processing head 21) to the material switching position P0, based on the information for moving the processing head included in the processing control information. After the build material is switched from the first build material to the second build material, the processing apparatus may build the bead by using the second build material supplied from the material supply port (e.g., the material nozzle 212), based on the second path information included in the processing control information. For the method of building the bead, please refer to "(2) Operation of Processing System SYS" described above.

The information for moving the processing head described above may include at least one of: information for causing the processing apparatus (e.g., the processing system SYS) to acquire a current position of the processing head when the processing head (e.g., the processing head 21) is located at the end position P1e; information for causing the processing apparatus to end a tool tip control mode; information for causing the processing apparatus to move the processing head to the material switching position P0; information for causing the processing apparatus to switch the build material; information for causing the processing apparatus to move the processing head to the stored current position; information for causing the processing apparatus to prepare for building the build object by using the build material after switching; and information for causing the processing apparatus to start the tool tip control mode. At least a part of those pieces of information may be specified by G code. A tool tip may be, for example, a tip of the material supply port (e.g., the material nozzle 212) and the condensed position of the processing beam (e.g., the processing light EL).

The arithmetic apparatus 501 may generate retreat path information indicating a path for the processing head to move to the material switching position P0, as the information for causing the processing apparatus (e.g., the processing system SYS) to move the processing head (e.g., the processing head 21) to the material switching position P0. In this case, the arithmetic apparatus 501 may generate the retreat path information based on the shape of the build object such that the processing head does not come into contact with the build object. The retreat path information may be included in the information for moving the processing head. That is, the arithmetic apparatus 501 may generate the retreat path information as a part of the information for moving the processing head.

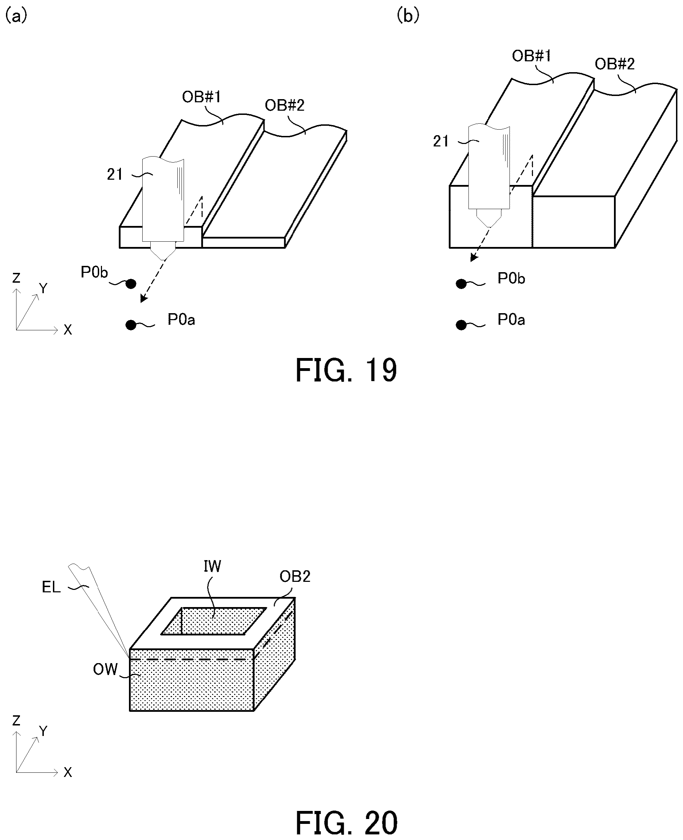

The material switching position P0 may be fixed or variable. For example, as illustrated in FIG. 19, material switching positions P0a and P0b may be set as the material switching positions P0. In FIG. 19, the material switching positions P0a and P0b have different Z-coordinates. Additionally, three or more material switching positions may be set. The plurality of material switching positions may have different coordinates in at least one of their X-coordinates, Y-coordinates, and Z-coordinates.

As illustrated in FIG. 19A, at an initial stage of building the parts OB#1 and OB#2, the material switching position P0a may be selected as the position for switching the build material, as the parts OB#1 and OB#2 have relatively low heights. As illustrated in FIG. 19B, at a stage where the the building of the parts OB#1 and OB#2 progresses, the material switching position P0b may be selected as the position for switching the build material, as the parts OB#1 and OB#2 have relatively high heights. That is, when a plurality of material switching positions (e.g., the material switching positions P0a and P0b) are set, the arithmetic apparatus 501 may select the material switching position closest to a build end position (e.g., the end position P1e) of the part OB#1, from the plurality of material switching positions. In this case, the arithmetic apparatus 501 may generate retreat path information indicating a path for the processing head to move to the selected material switching position, as the retreat path information. With this configuration, it is possible to reduce a time required for the processing for switching the build material.

The plurality of material switching positions may not be set in advance. In this case, the arithmetic apparatus 501 may set the material switching position, based on outer dimensions of the build object immediately, before starting the processing for switching the build material. In this case, the arithmetic apparatus 501 may set the material switching position at a position that is outside the build area and that is closest to the build end position (e.g., the end position P1e) of the part OB#1, based on the outer dimensions. That is, the arithmetic apparatus 501 may arbitrarily set the material switching position, based on the outer dimensions.

By the way, the processing head (e.g., the processing head 21) of the processing apparatus (e.g., the processing system SYS) may be inclined relative to the table (e.g., the stage 31) on which the build object is placed, due to a change in posture of the processing head. In addition, the processing head may be inclined relative to the table, due to a change in posture of the table. That is, the processing head may be inclined relative to the table, due to a change in the posture of at least one of the processing head and the table. Therefore, the arithmetic apparatus 501 may generate retreat path information indicating a path for the processing head to move to the material switching position (e.g., the material switching position P0), based on relative inclination between the processing head and the table.

As described above, the arithmetic apparatus 501 may generate the retreat path information based on the shape of the build object such that the processing head does not come into contact with the build object. Therefore, the arithmetic apparatus 501 may generate the retreat path information based on at least one of the shape of the build object and the relative inclination between the processing head and the table.

In a case where the processing head is inclined relative to the table due to the bead being built by using the first build material in a state in which the posture of the processing head is changed from a reference posture (for example, in a case where the processing head is inclined relative to the table at the end position P1e), the arithmetic apparatus 501 may generate first posture change information for causing the processing apparatus to change the posture of the processing head to the reference posture. In this case, the arithmetic apparatus 501 may generate the processing control information such that the posture of the processing head is changed to the reference posture based on the first posture change information and such that the processing head is then moved to the material switching position based on the retreat path information. The reference posture of the processing head may be defined as the posture of the processing head relative to the table. The first posture change information may be included in the information for moving the processing head. That is, the arithmetic apparatus 501 may generate the first posture change information as a part of the information for moving the processing head.

As mentioned above, the processing head may be inclined relative to the table due to the change in the posture of the table. Therefore, the first posture change information may include, in addition to or instead of the information for changing the posture of the processing head to the reference posture, information for changing the posture of the table, which is inclined (in other words, tilted) relative to the horizontal, to the reference posture (for example, the horizontal).

The arithmetic apparatus 501 may generate material switching information for causing the processing apparatus (e.g., the processing system SYS) to switch the build material from the first build material to the second build material after the processing head moves to the material switching position (e.g., the material switching position P0), as the information for causing the processing apparatus to switch the build material. The material switching information may be included in the information for moving the processing head. That is, the arithmetic apparatus 501 may generate the material switching information as a part of the information for moving the processing head.

As described above, when switching the build material, it is necessary to discharge the build material in a pipe (e.g., the supply pipe 11) (i.e., the build material that is not used to build the build object). If the build material in the pipe is not discharged properly, the quality of the build object built after the build material is switched may deteriorate. Therefore, the arithmetic apparatus 501 may generate standby information for causing the processing head (e.g., the processing head 21) to stand by at the material switching position (e.g., material switching position P0) for a predetermined time. The standby information may be included in the material switching information. That is, the arithmetic apparatus 501 may generate the standby information as a part of the material switching information.

For example, the first build material may be supplied from a first feeder (corresponding to the material supply source 1) through a pipe (e.g., the supply pipe 11). The second build material may be supplied from a second feeder through the above-mentioned pipe. The first feeder and the second feeder may be included in the same housing or may be included in different housings. When the build material is switched from the first build material to the second build material, a time required to discharge the first build material in the pipe varies depending on a feeding speed of the second feeder feeding out the second build material. Therefore, a time during which the processing head stands by at the material switching position (the predetermined time described above) may vary depending on the feeding speed of the second feeder feeding out the second build material.

In a case where the feeding speed of the second feeder feeding out the second build material has a fixed value and is known, the arithmetic apparatus 501 may include, in the above-mentioned standby information, information indicating the feeding speed of the second feeder feeding out the second build material and information for causing the processing apparatus to calculate a standby time based on the feeding speed. In a case where the feeding speed of the second feeder feeding out the second build material has a variable value, the arithmetic apparatus 501 may include, in the above-mentioned standby information, information for causing the processing apparatus to acquire the feeding speed of the second feeder feeding out the second build material and information for causing the processing apparatus to calculate the standby time based on the feeding speed. The arithmetic apparatus 501 may generate information for instructing the processing apparatus to change from the first feeder to the second feeder, as a part of the material switching information for switching the build material from the first build material to the second build material.

With this configuration, it is possible to appropriately determine the standby time of the processing head at the material switching position. Therefore, when the build material is switched from the first build material to the second build material, it is possible to appropriately discharge the first build material in the pipe. This makes it possible to improve the quality of the build object built after the build material is switched.

In a case where the material switching position (e.g., the material switching position P0) is located above the table (e.g., the stage 31) of the processing apparatus (e.g., the processing system SYS), the build material discharged from the material supply port (e.g., the material nozzle 212) at the time of switching the build material may be deposited on the table. In order to remove the build material deposited on the table, the arithmetic apparatus 501 may generate information for causing the processing apparatus to remove the build material deposited on the table. In this case, the deposited build material may be removed by being purged with purge gas (e.g., the purge gas supplied from the supply port 62 into the chamber space 63IN). The deposited build material may be removed by the build material being shaken off the table, due to the table being rotated around an axis parallel to the X-axis.

The arithmetic apparatus 501 may generate return path information indicating a path for the processing head (e.g., the processing head 21) to move from the material switching position (e.g., the material switching position P0) to the build start position of the bead (e.g., the starting end position P2s), as the information for causing the processing apparatus (e.g., the processing system SYS) to move the processing head from the material switching position to the build start position of the bead. The return path information may be included in the information for moving the processing head. That is, the arithmetic apparatus 501 may generate the return path information as a part of the information for moving the processing head.

In a case where the processing head is inclined relative to the table due to the bead being built by using the first build material in the state in which the posture of the processing head is changed from the reference posture (for example, in a case where the processing head is inclined relative to the table at the end position P1e), the arithmetic apparatus 501 may acquire the posture of the processing head when the bead is built by using the first build material (for example, the posture of the processing head at the end position P1e). Then, in a case where the posture of the processing head is changed to the reference posture before the processing head moves to the material switching position (e.g., the material switching position P0) based on the retreat path information, the arithmetic apparatus 501 may generate second posture change information for changing the posture of the processing head from the reference posture to the posture of the processing head when the bead is built by using the first build material.

In this case, the arithmetic apparatus 501 may generate the processing control information such that the processing head is moved to the build start position based on the return path information and such that the posture of the processing head is then changed from the reference posture to the posture of the processing head when the bead is built by using the first build material, based on the second posture change information. The second posture change information may be included in the information for moving the processing head. That is, the arithmetic apparatus 501 may generate the second posture change information as a part of the information for moving the processing head. It can be said that the posture of the processing head when the bead is built by using the first build material is the posture after the processing apparatus (e.g., the processing system SYS) builds the bead based on the first path information.

The retreat path information may include the information about the additive build condition, in addition to the information indicating a path for moving the processing head (e.g., the processing head 21) to the material switching position (e.g., the material switching position P0). The information about the additive build condition may include the information for switching the build material.

The arithmetic apparatus 501 may generate information for causing the processing apparatus (e.g., the processing system SYS) to start to switch the build material from the first build material to the second build material, while the processing head (e.g., the processing head 21) is moving from the build area to the material switching position (e.g., the material switching position P0). With this configuration, it is possible to reduce the standby time of the processing head at the material switching position, as compared with a case where the switching of the build material from the first build material to the second build material is started after the processing head arrives at the material switching position. This makes it possible to reduce a time required for building the build object (e.g., the build object OB).

By the way, in a case where the build material is a powdery material, the build material discharged from the material supply port (e.g., the material nozzle 212) due to the switching of the build material may be deposited on at least a part of the build area (specifically, at least one of on the top of the already built build object and at least a part of an area in which the build object is to be built in the future). For example, in a case where the processing apparatus starts to switch the build material from the first build material to the second build material while the processing head is moving from the build area to the material switching position, the build material is likely to be deposited in at least a part of the build area.

The arithmetic apparatus 501 may generate imaging information for causing the processing apparatus (e.g., the processing system SYS) to image the build area by using an imaging apparatus (e.g., the imaging unit 8). The arithmetic apparatus 501 may generate determination information for causing the processing apparatus to determine whether or not the build material is deposited based on an image including the build area imaged by the imaging apparatus. The arithmetic apparatus 501 may generate removal information for causing the processing apparatus to remove the deposited build material, when it is determined that the build material is deposited. The deposited build material may be removed by being purged with purge gas (e.g., the purge gas supplied from the supply port 62 into the chamber space 63IN).

For example, the arithmetic apparatus 501 may generate the processing control information such that the build material is switched from the first build material to the second build material based on the material switching information described above and such that an operation based on the imaging information, the determination information, and the removal information is then performed before the processing head moves, based on the return path information described above. The imaging information, the determination information, and the removal information may be included in the information for moving the processing head. That is, the arithmetic apparatus 501 may generate the imaging information, the determination information, and the removal information, as a part of the information for moving the processing head.

The operation of the information processing apparatus COM described above may be realized by the arithmetic apparatus 501 reading the CAM software SW2. That is, the operation of the information processing apparatus COM described above may be realized by providing the information processing apparatus COM with the functions provided by the CAM software SW2.

### (3-4) Flattening

As described in FIG. 8, in build processing for building the three-dimensional build object ST in which a plurality of structural layers are stacked, the three-dimensional structural object ST is not flattened. In other words, in a case where flattening is to be performed on the three-dimensional build object ST, the flattening needs to be performed separately from the build processing. Incidentally, after at least one of a build object having a relatively complex structure and a build object having a hollow structure (e.g., a pipe) is built, it is hard to perform the flattening on the build object in some cases. Therefore, the computer that executes the CAM software SW2 (e.g., the information processing apparatus COM) may generate information about the flattening (i.e., flattening processing), as a part of the processing control information.

Hereinafter, the information about the flattening will be described by using the information processing apparatus COM as an example of the computer that executes the CAM software SW2. Here, the flattening refers to processing for flattening a build object by melting a part of the build object with a processing beam (i.e., a beam applied to the build material when the build object is built) or a melting beam that is different from the processing beam. Such flattening may be at least one of remelting processing and ablation processing. As the flattening, one of the remelting processing and the ablation processing may be performed, or both the remelting processing and the ablation processing may be performed. A detailed description of the flattening including the remelting processing and the ablation processing will be omitted, as various existing aspects may be applicable to the flattening.

In the following, path information indicating a path for supplying the build material and building the bead will be referred to as build path information. Furthermore, path information indicating a path for performing the flattening on the build object will be referred to as melting path information.

The arithmetic apparatus 501 may slice the build object corresponding to the three-dimensional model information indicated by the 3D model file F11 and may generate a plurality of pieces of slice data respectively indicating cross sections of a plurality of layers (i.e., a plurality of layered structural objects) that form the build object. In a case where the build object is formed in a single layer, the arithmetic apparatus 501 may not generate the slice data.

As described in FIG. 8, the three-dimensional build object ST is built by stacking the plurality of structural layers SL. At the time of building one structural layer (e.g., the structural layer SL#1), a part (so-called a "burr") protruding from the contour line of the cross section indicated by the slice data (see the thick line in FIG. 15) may be generated. For example, the flattening may be performed to remove the protruding part. In this case, the flattening is performed such that the shape of one structural layer approaches (typically, matches) the contour line of the cross section indicated by the slice data related to the one structural layer when the one structural layer is viewed from above.

When the one structural layer is viewed from above, an area in which the flattening is performed may be an area adjacent to an area corresponding to the one structural layer (e.g., an area AR in FIG. 15) out of the cross section indicated by the slice data related to the one structural layer. As illustrated in FIG. 8, the one structural layer has a thickness (i.e., a length in the Z-axis direction). In the actual flattening, the processing beam or the melting beam is applied onto a side surface of the one structural layer. Thus, it can be said that the area in which the flattening is performed is a side surface area of the one structural layer.

Therefore, it can be said that in the build object (e.g., the three-dimensional build object ST) built by stacking a plurality of structural layers, the area in which the flattening is performed is the side surface area of the build object. For example, in the case of a build object OB2 having a hollow structure illustrated in FIG. 20, the area in which the flattening is performed may include an outer side surface area OW and an inner side surface area IW of the build object OB2. In the build object OB2 having a hollow structure, the area in which the flattening is performed may be only one of the outer side surface area OW and the inner side surface area IW.

The area in which the flattening is performed is an area in which a part of the build object is melted by the processing beam or the melting beam. Therefore, the he area in which the flattening is performed may be referred to as a melting area.

The arithmetic apparatus 501 may set the melting area, based on the contour line of the cross section (i.e., the contour line of the layered structural object) included in each of the plurality of pieces of slice data and the three-dimensional model information indicated by the 3D model file F11. As a result, the arithmetic apparatus 501 may acquire melting area information indicating the melting area. The thickness of one structural layer (i.e., one layered structural object) is uniquely determined from a slice interval when the slice data are generated. Therefore, the arithmetic apparatus 501 is allowed to identify the side surface area of one structural layer related to one piece of slice data, based on the three-dimensional model information indicated by the 3D model file F11. The arithmetic apparatus 501 may set the identified side surface area as at least a part of the melting area.

In a case where the three-dimensional model information indicated by the 3D model file F11 is information indicating a CAD model, the user may designate the melting area in advance on the CAD model. In a case where the three-dimensional model information indicated by the 3D model file F11 is information indicating a CAD model, the user may designate the melting area by touching or clicking on a GUI (Graphical User Interface) displaying a three-dimensional shape based on the CAD model. The user may designate the melting area from at least one of a camera image captured from all directions of the build object that is built and a live image of the build object that is built.

The melting area may be set, not by the user, but by the information processing apparatus COM (specifically, the arithmetic apparatus 501) automatically. For example, in a case where a bent pipe is built as the build object, timing of melting a part of the build object may be automatically set such that a target position in the melting area is irradiated with the processing beam or the melting beam for melting a part of the build object, before it becomes hard for the target position to be irradiated with the processing beam or the melting beam due to the shape of the pipe.

The arithmetic apparatus 501 may generate melting path information indicating a path (see, for example, a broken line in FIG. 20) for applying the processing beam or the melting beam, which is to be applied for the flattening, based on the melting area. At this time, the arithmetic apparatus 501 may generate the melting path information indicating a path for applying the processing beam or the melting beam so as to trace an outer shape of the layered structural object that is built, based on the melting area. In other words, the arithmetic apparatus 501 may generate the melting path information such that the surface of the built layered structural object is irradiated with the processing beam or the melting beam, based on the melting area. The expression "so as to trace the outer shape of the layered structural object" means that a spot of the processing beam or the melting beam of a predetermined size moves on the surface (e.g., a side surface) of the layered structural object, or that a focal position of the processing beam or the melting beam moves on the surface (e.g., a side surface) of the layered structural object.

The CAM software SW2 may include in advance information about the spot diameter of at least one of the processing beam and the melting beam related to the flattening. The information about the spot diameter may include a distance from a reference plane of the optical system (e.g., the irradiation optical system 211) of the processing apparatus (e.g., the processing system SYS) to a processing point (i.e., a point on a target object to be flattened). The distance may be referred to as a laser spot distance. The arithmetic apparatus 501 may generate the melting path information based on the melting area and the information about the spot diameter. The arithmetic apparatus 501 may set an irradiation angle of the processing beam or the melting beam, when generating the melting path information. In this case, it can be said that the melting path information includes irradiation angle information that specifies the irradiation angle.

The arithmetic apparatus 501 may generate processing control information (e.g., an NC program) including the build path information and the melting path information such that at least a part of the build object (e.g., the three-dimensional build object ST) is built based on the build path information and such that the flattening is then performed on the at least a part of the build object that is built, based on the melting path information. The arithmetic apparatus 501 may generate the processing control information such that the build path information and the melting path information are included in a single file. By building at least a part of the build object based on the build path information, another part is added to the already built part. Therefore, building at least a part of the build object based on the build path information may be referred to as additive manufacturing. The flattening (i.e., the flattening processing) performed based on the melting path information is processing performed in addition to the additive manufacturing, and may therefore be referred to as additional processing.

The processing control information generated such that the flattening is performed based on the melting path information after at least a part of the build object is built based on the build path information, specifies the execution order of the build processing for building at least a part of the build object and the flattening. Therefore, it can be said that the processing control information includes timing information indicating timing of performing the flattening based on the melting path information.

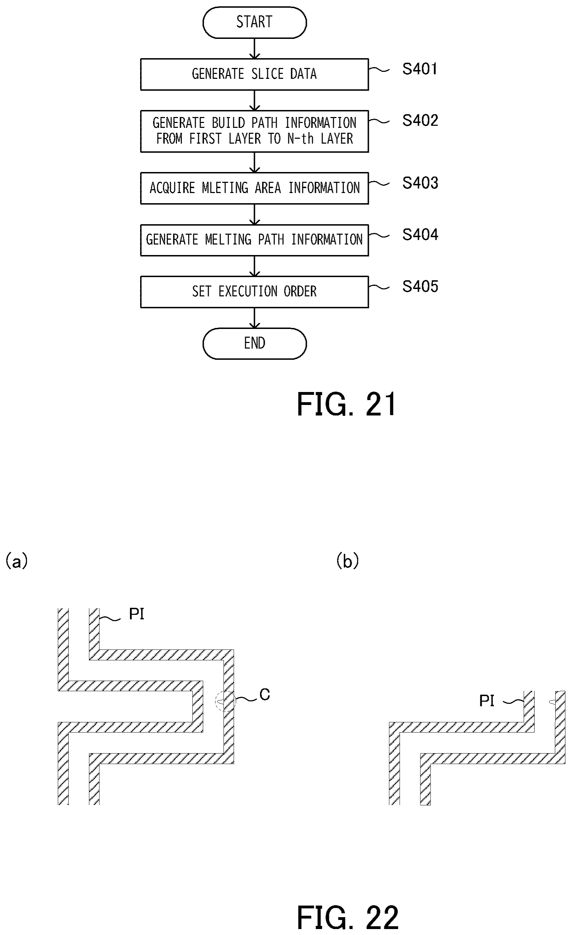

The operation of the information processing apparatus COM will be described with reference to a flowchart in FIG. 21. The arithmetic apparatus 501 of the information processing apparatus COM may slice the 3D model of the build object and may generate the slice data (step S401). In a case where the build object is formed in a single layer, the arithmetic apparatus 501 may not perform the step S401.

Here, let us assume that N pieces of slice data are generated in the step S401. The arithmetic apparatus 501 generates the build path information for building a first layer to an N-th layer of the build object indicated by the N pieces of slice data, respectively (step S402).

The arithmetic apparatus 501 acquires the melting area information indicating the melting area (step S403). The arithmetic apparatus 501 generates the melting path information indicating a path for applying the processing beam or the melting beam, which is to be applied for the flattening, based on the melting area indicated by the melting area information (step S404). In the step S404, the arithmetic apparatus 501 may generate a plurality of pieces of melting path information.

Then, the arithmetic apparatus 501 sets the execution order of the building performed based on the build path information generated in the step S402 and the flattening performed based on the melting path information generated in the step S404 (step S405). For example, in the step S405, the arithmetic apparatus 501 may set the execution order such that the first layer to the N-th layer of the build object are built based on the build path information and such that the flattening is then performed based on the melting path information. For example, in the step S405, the arithmetic apparatus 501 may set the execution order such that a part of the build object is built based on a part of a plurality of pieces of build path information and such that the flattening is then performed on the part of the build object that is built, based on the melting path information.

In addition to the build path information and the melting path information, the arithmetic apparatus 501 may generate path information indicating a path for moving the processing head to a position at which the processing apparatus (e.g., the processing system SYS) performs processing for switching between a mode for operating the processing head (e.g., the processing head 21) based on the build path information and a mode for operating the processing head based on the melting path information. In this case, the processing head may move along the path indicated by the generated path information described above, before moving along the path indicated by the melting path information, after moving along the path indicated by the build path information. In addition, the processing head may move along the path indicated by the generated path information described above, before moving along the path indicated by the build path information, after moving along the path indicated by the melting path information.

The processing apparatus (e.g., the processing system SYS) that operates based on the processing control information including the build path information and the melting path information, may supply the build material from the material supply port (e.g., the material nozzle 212) and may build at least a part of the build object, at a position that is irradiated with the processing beam (e.g., the processing light EL) by a beam irradiation apparatus (e.g., the irradiation optical system 211), based on the build path information included in the processing control information. The processing apparatus may further apply the processing beam or the melting beam from the beam irradiation apparatus, without supplying the build material from the material supply port, based on the melting path information included in the processing control information and may perform the flattening (i.e., the flattening processing) on at least a part of the build object that is built, based on the melting path information included in the processing control information. For the method of building the bead, please refer to "(2) Operation of Processing System SYS" described above.

The arithmetic apparatus 501 may generate first beam information that specifies at least one of the spot diameter and power of the processing beam (e.g., the processing light EL) when the processing apparatus (e.g., the processing system SYS) builds the bead (i.e., at least a part of the build object) based on the build path information. In this case, the processing apparatus may control the light source (e.g., light source 4) based on the first beam information such that the build material is irradiated with the processing beam specified by the first beam information. In addition, the arithmetic apparatus 501 may generate second beam information that specifies at least one of the spot diameter and power of the processing beam or the melting beam when the processing apparatus (e.g., the processing system SYS) performs the flattening on at least a part of the build object based on the melting path information. In this case, the processing apparatus may control the light source based on the second beam information such that at least a part of the build object is irradiated with the processing beam or the melting beam specified by the second beam information. The spot diameter specified by the first beam information may be different from the spot diameter specified by the second beam information. The power specified by the first beam information may be different from the power specified by the second beam information. The processing control information may include at least one of the first beam information and the second beam information. That is, the arithmetic apparatus 501 may generate at least one of the first beam information and the second beam information, as a part of the processing control information. The processing control information may include head speed information about a movement speed of the processing head (e.g., the processing head 21) of the processing apparatus (e.g., the processing system SYS). That is, the arithmetic apparatus 501 may generate the head speed information as a part of the processing control information.

The arithmetic apparatus 501 may generate the processing control information including the build path information and the melting path information such that a part of the build object is built based on first build path information, such that the flattening is then performed on the part of the build object that is built, based on first melting path information, such that another part of the built object is then built based on second build path information, and such that the flattening is then performed on the other part of the built object that is built, based on second melting path information.

As described in FIG. 8, the build object (e.g., the three-dimensional build object ST) is built in order from a lower structural layer (e.g., the structural layer SL#1) and is built by stacking a plurality of structural layers that are built. Therefore, when the flattening is performed on a part of the build object after the part of the build object is built, if no measures are taken, there is a possibility that the flattening cannot be performed properly due to a part of the optical system (e.g., the irradiation optical system 211) of the processing apparatus (e.g., the processing system SYS) coming into contact with a part of the build object.

In the case of a relatively complex pipe PI, as that illustrated in FIG. 22(a), it is hard to perform the flattening on an inside of the pipe enclosed by a dotted circle C, after the pipe PI is built as in a state illustrated in FIG. 22(a). The flattening of the inside of the pipe enclosed by the dotted circle C may be performed in a state illustrated in FIG. 22(b), for example.

In view of the above, the arithmetic apparatus 501 may generate the processing control information including the build path information and the melting path information such that a layered structural object of an i-th layer indicated by an i-th piece of slice data to a layered structural object of an j-th layer indicated by a j-th piece of slice data are built based on the build path information, and such that the flattening process is then performed on the layered structural objects of the i-th layer to the j-th layer based on the melting path information generated based on the i-th piece of slice data to the j-th piece of slice data. Here, "i" is smaller than "j."

For example, the arithmetic apparatus 501 may determine the j-th layer based on the height of the layered structural objects of the i-th layer to the j-th layer and the laser spot distance (i.e., the distance from the reference plane of the optical system of the processing apparatus to the processing point). For example, the arithmetic apparatus 501 may determine the j-th layer such that the height of the layered structural objects of the i-th layer to the j-th layer does not exceed a value obtained by multiplying a height dz of a layered structural object of one layer by a predetermined constant.

The arithmetic apparatus 501 may determine the j-th layer as follows. The arithmetic apparatus 501 may determine whether or not the flattening is prevented for at least a part of the layered structural object of a k-th layer due to the build shape of a layered structural object of a k+1-th layer indicated by a k+1-th piece of slice data. When it is determined that the flattening is prevented for at least a part of the layered structural object of the k-th layer due to the build shape of the layered structural object of the k+1-th layer, the arithmetic apparatus 501 may determine the k-th layer as the j-th layer. The user may designate the j-th layer via the input apparatus 504.

The operation of the information processing apparatus COM described above may be realized by the arithmetic apparatus 501 reading the CAM software SW2. That is, the operation of the information processing apparatus COM described above may be realized by providing the information processing apparatus COM with the functions provided by the CAM software SW2.

As described above, by the arithmetic apparatus 501 generating the processing control information (e.g., the NC program) including the build path information and the melting path information, a single processing apparatus (e.g., the processing system SYS) is allowed to perform the build processing for building the build object and the flattening for the build object that is built. For example, in the case of a build object having a hollow structure (e.g., a pipe), the building of a part of the build object and the flattening of the built part are alternately performed. This especially makes it possible to build the build object while flattening the inner wall of the build object having a hollow structure (i.e., a part that is hardly flatten after the building of the build object is completed), which is extremely advantageous in practical use.

### (3-5) Measurement Path Information

The processing apparatus (e.g., the processing system SYS) may be include a measuring device/instrument. The measuring device may mean a device for measuring at least one of geometric accuracy (e.g., height, XY dimensions), surface roughness, defects, porosity (i.e., fine bubble-like holes) and flaw detection of the build object. The geometric accuracy or the like is an index for determining whether or not the build object is built as intended (e.g., as indicated by the three-dimensional model information illustrated in the 3D model file F11). Therefore, the measuring device may be referred to as a product inspection apparatus. The measuring device may mean a device for measuring temperature of the build object (which may be referred to as "workpiece temperature"). In this case, the measuring device may be referred to as a temperature detection apparatus. The measuring device may mean a device for observing a melt pool (e.g., the melt pool MP). The measuring device may mean a device for realizing real-time observation (in other words, live view) of an inside (e.g., the chamber space 63IN) of the processing apparatus (e.g., the processing system SYS). In these cases, the measuring device may be referred to as an observation apparatus.

The measuring device may be at least one of a laser scanner and an imaging apparatus. The laser scanner may be a three-dimensional scanner. The imaging apparatus may be a stereo camera. The measuring device is disposed in the processing apparatus so as to be movable in the inside (e.g., the chamber space 63IN) of the processing apparatus. For example, the measuring device may be placed in a housing (e.g., the head housing 213) for containing the processing head (e.g., the processing head 21). In this case, the measuring device moves together with the processing head. Alternatively, the measuring device may be placed in a member for moving the measuring device, wherein the member is different from the housing for containing the processing head. The member for moving the measuring device may be referred to as a measurement-only head. In this case, the measuring device and the processing head move independently of each other.

The computer that executes the CAM software SW2 (e.g., the information processing apparatus COM) may generate information about measurement by the measuring device, as a part of the processing control information. The following describes the information about the measurement, by using the information processing apparatus COM as an example of the computer that executes the CAM software SW2. In the following, path information indicating a path for supplying the build material and building the bead will be referred to as build path information. Furthermore, path information indicating a path for the measuring device to measure the build object will be referred to as measurement path information.

In a case where the measuring device moves together with the processing head (e.g., the processing head 21), the build path information and the measurement path information may be included in a single file. Even when the measuring device and the processing head move independently of each other, the build path information (i.e., information for moving the processing head) and the measurement path information (i.e., information for moving the measurement-only head) may be included in a single file. As described above, the measuring device may measure the geometric accuracy or the like of the build object. The geometric accuracy or the like may be obtained by measuring a structural part from the outside thereof. For example, as described in FIG. 8, the three-dimensional build object ST is built by stacking the plurality of structural layers SL. As illustrated in FIG. 8, one structural layer (e.g., the structural layer SL#1) has a thickness (i.e., a length in the Z-axis direction). When one structural layer is built, the measuring device is allowed to measure a side surface and an upper surface of the one structural layer. Therefore, in a case where the three-dimensional structural object ST formed by stacking the plurality of structural layers SL is built, the measuring device is allowed to measure the side surface and the upper surface of the three-dimensional structural object ST. In the case of a build object having a hollow structure, if there is an opening on the upper surface of the build object (see, for example, the build object OB2 illustrated in FIG. 20), the measuring device is allowed to measure an outer wall (i.e., an outer side surface), an inner wall (i.e., an inner side surface), and the upper surface of the build object.

The side surface (including the outer side surface and the inner side surface) and the upper surface of the build object are the surface of the build object. Thus, it can be said that the measuring device measures the surface of the build object. Therefore, an area in which the measurement is performed by the measuring device, may include a surface area of the build object. The inner wall of the build object is a surface of an inside of the build object. Therefore, the measuring device measuring the inner wall of the build object can be rephrased as the measuring device measuring the inside of the build object. The area in which the measurement is performed by the measuring device, may be referred to as a measurement area. For example, in the case of the build object OB2 having a hollow structure illustrated in FIG. 20, the measurement area may include the outer side surface area OW and the inner side surface area IW of the build object OB2. In the build object OB2 having a hollow structure, the measurement area may be only one of the outer side surface area OW and the inner side surface area IW.

The arithmetic apparatus 501 may slice the build object corresponding to the three-dimensional model information indicated by the 3D model file F11 and may generate a plurality of pieces of slice data respectively indicating cross sections of a plurality of layers (i.e., a plurality of layered structural objects) that form the build object. In a case where the build object is formed in a single layer, the arithmetic apparatus 501 may not generate the slice data.

The arithmetic apparatus 501 may set the measurement area, based on the contour line of the cross section (i.e., the contour line of the layered structural object) included in each of the plurality of pieces of slice data and the three-dimensional model information indicated by the 3D model file F11. As a result, the arithmetic apparatus 501 may acquire measurement area information indicating the measurement area. The thickness of one structural layer (i.e., one layered structural object) is uniquely determined from a slice interval when the slice data are generated. Therefore, the arithmetic apparatus 501 is allowed to identify the side surface area of one structural layer related to one piece of slice data, based on the three-dimensional model information indicated by the 3D model file F11. The arithmetic apparatus 501 may set the identified side surface area as at least a part of the measurement area. That is, the measurement area may be set, not by the user, but by the information processing apparatus COM (specifically, the arithmetic apparatus 501) automatically.

In a case where the three-dimensional model information indicated by the 3D model file F11 is information indicating a CAD model, the user may designate the measurement area in advance on the CAD model. In a case where the three-dimensional model information indicated by the 3D model file F11 is information indicating a CAD model, the user may designate the measurement area by touching or clicking on a GUI displaying a three-dimensional shape based on the CAD model. The user may designate the measurement area from at least one of a camera image captured from all directions of the build object that is built and a live image of the build object that is built.

The arithmetic apparatus 501 may generate measurement path information indicating a path for the measuring device to measure the build object, based on the measurement area. The surface of the build object can be rephrased as an outer shape of the build object. The build object to be built is a build object corresponding to the three-dimensional model information (in other words, indicated by the three-dimensional model information) indicated by the 3D model file F11. Therefore, it can be said that the three-dimensional model information includes information about the outer shape of the build object. As mentioned above, the measurement area may include the surface area of the build object. Therefore, it can be said that the measurement path information is generated based on information about an outer shape of the three-dimensional model information indicating the build object.

The measuring device has a distance range in which the build object is appropriately measurable. Such a distance range may be referred to as a stand-off distance. The arithmetic apparatus 501 may generate the measurement path information based on the measurement area and the stand-off distance. The CAM software SW2 may include information about the stand-off distance of the measuring device in advance.

The arithmetic apparatus 501 may generate processing control information (e.g., an NC program) including the build path information and the measurement path information such that at least a part of the build object (e.g., the three-dimensional build object ST) is built based on the build path information and such that the measuring device then measures the at least a part of the built object that is built, based on the measurement path information. The arithmetic apparatus 501 may generate the processing control information such that the build path information and the measurement path information are included in a single file.

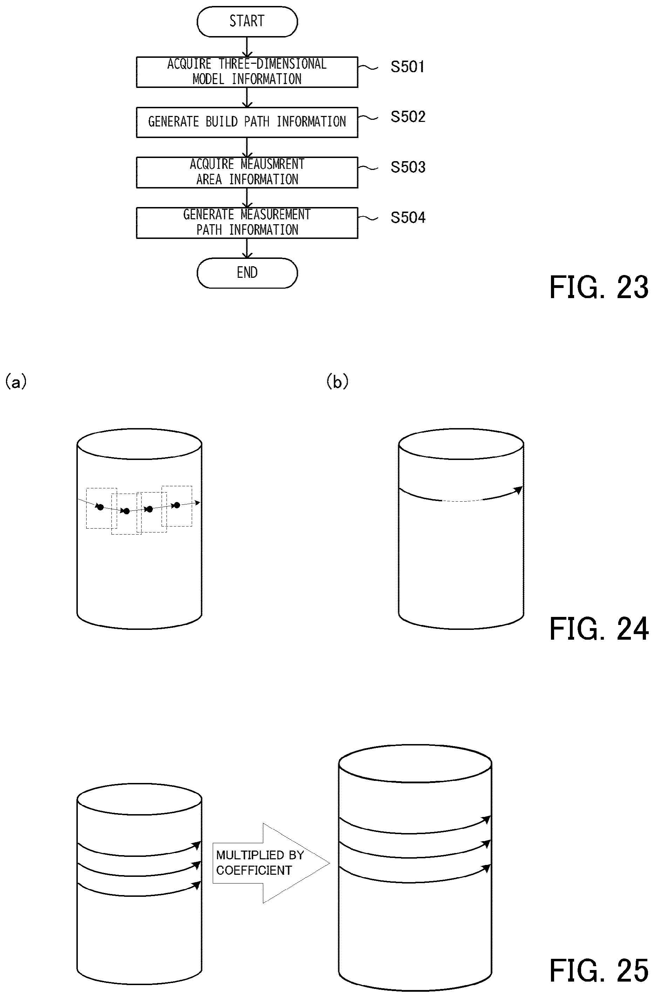

The operation of the information processing apparatus COM will be described with reference to a flowchart in FIG. 23. The arithmetic apparatus 501 of the information processing apparatus COM acquires the three-dimensional model information indicated by the 3D model file F11 (step S501).

The arithmetic apparatus 501 may slice the build object (i.e., the 3D model of the build object) corresponding to the three-dimensional model information acquired in the step S501 and may generate the slice data. In a case where the build object is formed in a single layer, the arithmetic apparatus 501 may not generate the slice data. The arithmetic apparatus 501 may generate the build path information based on the slice data (step S502). In a case where the slice data are not generated, the arithmetic apparatus 501 may generate the build path information based on the 3D model of the build object.

The arithmetic apparatus 501 acquires the measurement area information indicating the measurement area (step S503). The arithmetic apparatus 501 generates the measurement path information indicating a path for the measuring device to measure the build object, based on the measurement area indicated by the measurement area information (step S504). In the step S504, the arithmetic apparatus 501 may generate a plurality of pieces of measurement path information.

In addition to the build path information and the measurement path information, the arithmetic apparatus 501 may generate path information indicating a path for moving the processing head to a position at which the processing apparatus (e.g., the processing system SYS) performs processing for switching between a mode for operating the processing head (e.g., the processing head 21) based on the build path information and a mode for operating the measuring device based on the measurement path information. In this case, the processing head may move along the path indicated by the generated path information described above, after the processing head moves along the path indicated by the build path information and before the measuring device moves along the path indicated by the measurement path information. In addition, the measuring device may move along the path indicated by the generated path information described above, after the measuring device moves along the path indicated by the measurement path information and before the processing head moves along the path indicated by the build path information.

The processing apparatus (e.g., the processing system SYS) that operates based on the processing control information including the build path information and the measurement path information, may supply the build material from the material supply port (e.g., the material nozzle 212) and may build at least a part of the build object, at a position that is irradiated with the processing beam (e.g., the processing light EL) by the beam irradiation apparatus (e.g., the irradiation optical system 211), based on the build path information included in the processing control information. The processing apparatus may further measure at least a part of the build object that is built, by using the measuring device, based on the measurement path information included in the processing control information.

In a case where the measuring device is an imaging apparatus (e.g., a camera), the arithmetic apparatus 501 may generate the measurement path information such that the imaging apparatus is temporarily stopped at an imaging position on the path for measuring the build object (i.e., a position at which the imaging apparatus images the build object). In this case, the measurement path information may include movement information for moving the imaging apparatus along the path for measuring the build object, stop information for temporarily stopping the imaging apparatus, and imaging information for causing the imaging apparatus to image the build object.

Specifically, the arithmetic apparatus 501 may generate the measurement path information such that the imaging apparatus moves based on first movement information, then stops based on first stop information, then images the build object based on first imaging information, and then moves based on second movement information.

FIG. 24(a) illustrates an example of the path indicated by the measurement path information when the measuring device is an imaging apparatus. In FIG. 24(a), an arrow indicates the path. In FIG. 24(a), a black circle indicates a position at which the imaging apparatus is temporarily stopped. In FIG. 24(a), a dotted square indicates an imaging range of the imaging apparatus.

The stop information may include information indicating the position at which the imaging apparatus is temporarily stopped. In this case, the stop information may be referred to as position information. The position at which the imaging apparatus is temporarily stopped, may be determined based on information about the imaging range of the imaging apparatus (e.g., an angle of view). For example, when the angle of view of the imaging apparatus is relatively wide, an interval between a first position at which the imaging apparatus is temporarily stopped and a second position at which the imaging apparatus is temporarily stopped after the first position, may be relatively wide. For example, when the angle of view of the imaging apparatus is relatively narrow, the interval between the first position at which the imaging apparatus is temporarily stopped and the second position at which the imaging apparatus is temporarily stopped after the first position, may be relatively narrow. In either case, the arithmetic apparatus 501 may determine the position at which the imaging apparatus is temporarily stopped such that a part of an image captured by the imaging apparatus at the first position overlaps with a part of an image captured by the imaging apparatus at the second position.

The arithmetic apparatus 501 may determine a movement speed of the imaging apparatus serving as the measuring device when the imaging apparatus moves along the path for measuring the build object. In this case, the arithmetic apparatus 501 may determine the number of images captured by the imaging apparatus, based on the movement speed. The arithmetic apparatus 501 may reduce the number of images, as the movement speed increases. In other words, the arithmetic apparatus 501 may increase the number of images, as the movement speed decreases. In this case, the arithmetic apparatus 501 may determine the position at which the imaging apparatus is temporarily stopped, based on the number of images captured by the imaging apparatus. The arithmetic apparatus 501 may include at least one of speed information indicating the movement speed and image number information indicating the number of images captured by the imaging apparatus, in the measurement path information.

In a case where the imaging apparatus is a single two-dimensional camera, the arithmetic apparatus 501 may generate measurement data by connecting a plurality of images, based on the position at which the imaging apparatus is temporarily stopped (i.e., the imaging position). In a case where the imaging apparatus is a stereo camera, the arithmetic apparatus 501 may first generate a plurality of pieces of point cloud data, based on images captured by the imaging apparatus at a plurality of positions at which the imaging apparatus is temporarily stopped. The arithmetic apparatus 501 may then generate measurement data by connecting the plurality of pieces of point cloud data, based on the position at which the imaging apparatus is temporarily stopped (i.e., the imaging position). Alternatively, the arithmetic apparatus 501 may generate the measurement data by connecting the plurality of point cloud data by best fit processing. The arithmetic apparatus 501 may store the measurement data in the storage apparatus 502. The arithmetic apparatus 501 may control the output apparatus 505 to present the measurement data to the user.

In a case where the measuring device is a laser scanner, the arithmetic apparatus 501 may generate the measurement path information such that a movement speed of the laser scanner is temporarily reduced in a measurement range on the path for measuring the build object (i.e., a range in which the laser scanner measures the build object). In this case, the measurement path information may include movement information for moving the laser scanner along the path for measuring the build object, range information indicating a range in which the movement speed of the laser scanner is temporarily reduced, and measurement information for causing the laser scanner to measure the build object.

FIG. 24(b) illustrates an example of the path indicated by the measurement path information when the measuring device is a laser scanner. In FIG. 24(b), an arrow indicates the path. A part of the arrow indicated by a broken line corresponds to the range in which the movement speed of the laser scanner is temporarily reduced.

In a case where the measuring device is a laser scanner, the arithmetic apparatus 501 may generate measurement data by connecting pieces of point cloud data serving as measurement results of the laser scanner, based on a position at which the laser scanner measures the build object. The arithmetic apparatus 501 may store the measurement data in the storage apparatus 502. The arithmetic apparatus 501 may control the output apparatus 505 to present the measurement data to the user.

The arithmetic apparatus 501 may store the measurement path information generated as described above, in the storage apparatus 502, in association with the three-dimensional model information indicated by the 3D model file F11. For example, let us assume that measurement path information MP#1 associated with three-dimensional model information indicated by a 3D model file F11#1 is stored in the storage apparatus 502. In a case where three-dimensional model information indicated by a 3D model file F11#2, which is different from the 3D model file F11#1, is the same as the three-dimensional model information indicated by the 3D model file F11#1, the arithmetic apparatus 501 may use the measurement path information MP#1 stored in the storage apparatus 502, as measurement path information indicating a path for the measuring device to measure a build object related to the three-dimensional model information indicated by the 3D model file F11#2.

Alternatively, in a case where the three-dimensional model information indicated by the 3D model file F11#2 is similar to the three-dimensional model information indicated by the 3D model file F11#1, the arithmetic apparatus 501 may generate measurement path information indicating a path for the measuring device to measure the build object related to the three-dimensional model information indicated by the 3D model file F11#2, by multiplying a path indicated by the measurement path information MP#1 stored in the storage apparatus 502 by a predetermined coefficient (see FIG. 19). The predetermined coefficient may be determined based on a similarity ratio between the three-dimensional model information indicated by the 3D model file F11#1 and the three-dimensional model information indicated by the 3D model file F11#2.

The arithmetic apparatus 501 may generate the processing control information including the build path information and the measurement path information such that a part of the build object is built based on first build path information, such that the measuring device then measures the part of the build object that is built, based on first measurement path information, such that another part of the build object is then built based on second build path information, and such that the measuring device then measures the other part of the build object that is built, based on second measurement path information.

In a case where the measuring device is an imaging apparatus, the arithmetic apparatus 501 may generate, at each time when a layered structural object of one layer is formed, information for causing the imaging apparatus to image the cross section of the layered structural object that is built. The processing control information may include information for causing the imaging apparatus to image the cross section of the layered structural object that is built. That is, the arithmetic apparatus 501 may generate information for causing the imaging apparatus to image the cross section of the layered structural object that is built, as a part of the processing control information. A plurality of cross-sectional images obtained by the imaging apparatus imaging respective cross sections of a plurality of layered structural objects, may be stored in the storage apparatus 502 after stitching processing is performed.

The arithmetic apparatus 501 may generate the processing control information including the build path information and the measurement path information such that the measuring device measures a part of the build object that is already built and such that another part of the build object is built based on the build path information. In this case, the measurement path information may include condition information indicating a condition for the measuring device to start the measurement. The condition information may include at least one of an elapsed time from a part of the build object having been built and the temperature of the part of the build object. With this configuration, it is possible for the measuring device to measure a part of the build object, while reducing/controlling an influence of a change in the temperature of the part of the build object. The processing apparatus may include a reflective temperature sensor. In this case, the processing apparatus may determine whether or not the temperature of the part of the build object indicated by the condition information is satisfied, based on an output of the reflective temperature sensor.

The processing apparatus (e.g., the processing system SYS) may include an ultrasonic measuring device as another measuring device, in addition to at least one of the laser scanner and the imaging apparatus serving as one measuring device. In this case, the arithmetic apparatus 501 may generate measurement path information indicating a path for at least one of the laser scanner and the imaging apparatus serving as one measuring device to measure the build object, and measurement path information indicating a path for the ultrasonic measuring device serving as the other measuring device to measure the build object. In this case, by the one measuring device and the other measuring device measuring the build object, it is possible to measure a surface shape and an internal defect of the build object, simultaneously.

The processing apparatus (e.g., the processing system SYS) may include a surface roughness measuring device as another measuring device, in addition to at least one of the laser scanner and the imaging apparatus serving as one measuring device. In this case, the arithmetic apparatus 501 may generate the measurement path information indicating a path for at least one of the laser scanner and the imaging apparatus serving as one measuring device to measure the build object, and measurement path information indicating a path for the surface roughness measuring device serving as the other measuring device to measure the build object.

In addition to the build path information and the measurement path information, the arithmetic apparatus 501 may generate processing control information including the melting path information (see "(3-4) Flattening"). In this case, the arithmetic apparatus 501 may generate the processing control information such that at least a part of the build object is built based on the build path information, such that the measuring device then measures the at least a part of the build object, based on the first measurement path information, such that the flattening is then performed on the at least a part of the build object, based on the melting path information, and such that the measuring device then measures a flattened part based on the second measurement path information. In this case, the user can confirm an effect of the flattening, by comparing the measurement data obtained by the measuring device measuring at least a part of the build object based on the first measurement path information, with the measurement data obtained by the measuring device measuring the flattened part based on the second measurement path information.

As described in "(3-2) Building of Variable Bead Width," the build path information may include the first path information indicating a path for building the bead with the first width and the second path information indicating a path for building the bead with the second width. Furthermore, at least one of the first path information and the second path information may include information indicating the degree of overlap between two adjacent beads. In this case, the arithmetic apparatus 501 may generate the processing control information such that at least a part of the build object (e.g., a layered structural object of one layer) is built based on at least one of the first path information and the second path information included in the build path information and such that the measuring device then measures at least a part of the build object based on the measurement path information. In this case, the user can confirm at least one of a finish condition of the bead bult based on at least one of the first path information and the second path information, and unevenness of a surface of the bead that is built, from the measurement data obtained by the measuring device measuring at least a part of the build object based on the measurement path information.

The operation of the information processing apparatus COM described above may be realized by the arithmetic apparatus 501 reading the CAM software SW2. That is, the operation of the information processing apparatus COM described above may be realized by providing the information processing apparatus COM with the functions provided by the CAM software SW2.

As described above, by the arithmetic apparatus 501 generating the processing control information (e.g., the NC program) including the build path information and the measurement path information, a single processing apparatus (e.g., the processing system SYS) is allowed to perform the build processing for building the build object and measurement processing for measuring the build object that is built.

For example, in a comparative example in which a processing apparatus performs the build processing and a measurement apparatus that is different from the processing apparatus performs the measurement processing, the following user's work is required when the measurement processing is performed on a built part during the building of the build object. Namely, the user waits until the temperature of the above-mentioned built part reaches a predetermined temperature or lower, and then, the user removes the built part from the processing apparatus and attaches it to the measurement apparatus. Then, after the measurement processing by the measurement apparatus is completed, the user removes the above-mentioned built part from the measurement apparatus and reattaches it to the processing apparatus.

In contrast, if the arithmetic apparatus 501 generates the processing control information including the build path information and the measurement path information, the above-mentioned user's work is not required. Therefore, it is possible to reduce a time required for the measurement processing. Consequently, it is possible to reduce the time required for building the build object. In addition, it is not necessary to reattach the above-mentioned built part to the processing apparatus, and it is thus possible to prevent mounting errors caused by the reattachment.

### <Supplementary Notes>

Regarding the above-described example embodiment, the following Supplementary notes are further disclosed.

### (Supplementary Note 1)

A processing method to be used by an additive manufacturing apparatus to build a build object including a plurality of layers, the processing method including:
building a bead with a first width, based on first path information indicating a path for building the build object with the first width in a first layer of the plurality of layers; and
building a bead with a second width that is different from the first width, based on second path information indicating a path for building the build object with the second width in the first layer.

### (Supplementary Note 2)

The processing method according to Supplementary Note 1, wherein the first path information and the second path information are generated such that a bead formed based on the first path information and a bead formed based on the second path information are built without a gap in the first layer.

### (Supplementary Note 3)

The processing method according to Supplementary Note 1 or 2, wherein the first path information and the second path information are generated such that a bead based on the first path information and a bead based on the second path information are formed without a gap, with regard to a direction that intersects a scanning direction for building a bead by relatively scanning a processing head of the additive manufacturing apparatus and a table on which the build object is placed, in building in the first layer.

### (Supplementary Note 4)

The processing method according to any one of Supplementary Notes 1 to 3, wherein in a case where a gap is generated in a first area in the first layer by performing building using only the bead with the first width in the first area, the first path information and the second path information are generated such that the building is performed in the first area without a gap, by building at least a part of the first area by using the bead with the first width and the bead with the second width.

### (Supplementary Note 5)

The processing method according to any one of Supplementary Notes 1 to 4, wherein in a case where a first amount of gap is generated in a first area in the first layer by performing building using only the bead with the first width in the first area, the first path information and the second path information are generated such that the building is performed with an amount of gap that is smaller than the first amount, by building at least a part of the first area by using the bead with the first width and the bead with the second width.

### (Supplementary Note 6)

The processing method according to Supplementary Note 5, wherein
each of the first path information and the second path information is generated based on information about at least one of a build shape and a build size obtained from 3D model information indicating a shape of the build object.

### (Supplementary Note 7)

The processing method according to any one of Supplementary Notes 1 to 6, wherein the first path information and the second path information are included in a single file.

### (Supplementary Note 8)

The processing method according to any one of Supplementary Notes 1 to 7, wherein
the first path information and the second path information are generated based on 3D model information indicating a shape of the build object.

### (Supplementary Note 9)

The processing method according to any one of Supplementary Notes 1 to 8, wherein
the first path information and the second path information are generated based on a first degree of overlap between adjacent paths with the first width and a second degree of overlap between adjacent paths with the second width.

### (Supplementary Note 10)

The processing method according to any one of Supplementary Notes 1 to 9, wherein
the first path information and the second path information are generated based on a build mode indicating at least one of a build speed and build accuracy of building the build object.

### (Supplementary Note 11)

The processing method according to any one of Supplementary Notes 1 to 10, wherein possible values of the first width and the second width are determined, based on apparatus information about the additive manufacturing apparatus.

### (Supplementary Note 12)

The processing method according to any one of Supplementary Notes 1 to 11, wherein the possible values of the first width and the second width are possible maximum values and possible minimum values of the first width and the second width.

### (Supplementary Note 13)

The processing method according to Supplementary Note 11 or 12, wherein
the additive manufacturing apparatus includes an optical system for emitting a processing beam,
the apparatus information includes optical system information about the optical system, and
the possible values of the first width and the second width are determined based on the optical system information included in the apparatus information.

### (Supplementary Note 14)

The processing method according to Supplementary Note 13, wherein
the optical system includes a Galvano scanner that is configured to change a condensed position of the processing beam,
the optical system information includes range information indicating a variable range of the condensed position by the Galvano scanner, and
the possible values of the first width and the second width are determined based on the range information.

### (Supplementary Note 15)

The processing method according to Supplementary Note 14, wherein
each of the first path information and the second path information is path information indicating a movement path of the processing head including at least the optical system, and
control information for controlling the Galvano scanner is generated based on the first path information and the second path information.

### (Supplementary Note 16)

The processing method according to Supplementary Note 13, wherein
the optical system is configured to change a spot diameter of the processing beam,
the optical system information includes information indicating a variable range of the spot diameter of the processing beam, and
the possible values of the first width and the second width are determined based on the information indicating the variable range of the spot diameter of the processing light.

### (Supplementary Note 17)

The processing method according to any one of Supplementary Notes 1 to 16, wherein the additive manufacturing apparatus is a direct energy deposition (DED)-type additive manufacturing apparatus.

### (Supplementary Note 18)

A processing method to be used by an additive manufacturing apparatus to build a build object, the additive manufacturing apparatus including a processing head including a material supply port for supplying a build material for building the build object, the processing method including:
building a bead by supplying a first build material from the material supply port, based on first path information indicating a first path for building a bead by using the first build material;
building the bead by supplying a second build material that is different from the first build material, from the material supply port, based on second path information indicating a second path for building a bead by using the second build material, and
moving the processing head to a position for changing the build material supplied from the material supply port from the first build material to the second build material, based on information for moving the processing head, after a bead based on the first path information is built and before a bead based on the second path information is built.

### (Supplementary Note 19)

The processing method according to Supplementary Note 18, wherein the first path information, the second path information, and the information for moving the processing head are included in a single file.

### (Supplementary Note 20)

The processing method according to Supplementary Note 18 or 19, wherein the information for moving the processing head includes retreat position information indicating a position for the processing head to retreat from a build area.

### (Supplementary Note 21)

The processing method according to Supplementary Note 20, wherein
the retreat position information includes information indicating a plurality of retreat positions, and
the processing method includes moving the processing head to a retreat position closest to a build end position of the bead based on the first path information, among the plurality of retreat positions.

### (Supplementary Note 22)

The processing method according to Supplementary Note 21, wherein the information for moving the processing head further includes retreat path information about a retreat path that is a path for the processing head to move to the position indicated by the retreat position information.

### (Supplementary Note 23)

The processing method according to Supplementary Note 22, wherein the retreat path information is generated based on at least one of a shape of the build object and relative inclination between the processing head and a table on which the build object is placed.

### (Supplementary Note 24)

The processing method according to Supplementary Note 23, wherein
the information for moving the processing head further includes first posture change information for changing a relative posture of the processing head relative to the table to a reference posture, in a case where the relative posture of the processing head relative to the table is different from the reference posture, and
the processing method includes moving the processing head based on the retreat path information or the retreat position information, after the relative posture of the processing head relative to the table is changed to the reference posture.

### (Supplementary Note 25)

The processing method according to any one of Supplementary Notes 21 to 24, wherein the information for moving the processing head further includes return path information indicating a path for the processing head to return to a build start position of the bead based on the second path information from the position indicated by the retreat position information, after the build material is switched from the first build material to the second build material.

### (Supplementary Note 26)

The processing method according to Supplementary Note 25, wherein the information for moving the processing head includes second posture change information for changing a relative posture of the processing head relative to the table, after completion of movement based on the return path information of the processing head returning to a position for starting to build the bead based on the second path information.

### (Supplementary Note 27)

The processing method according to Supplementary Note 26, wherein the posture indicated by the second posture information is a posture after the additive manufacturing apparatus builds the bead based on the first path information.

### (Supplementary Note 28)

The processing method according to any one of Supplementary Notes 20 to 27, further including switching the build material supplied by the material supply port from the first build material to the second build material after the processing head retreats from the build area to a retreat area based on the retreat position information.

### (Supplementary Note 29)

The processing method according to any one of Supplementary Notes 20 to 28, wherein the information for moving the processing head includes information about a home position.

### (Supplementary Note 30)

The processing method according to any one of Supplementary Notes 18 to 29,wherein
the processing method further includes switching the build material supplied from the material supply port from the first build material to the second build material, based on material switching information for switching the build material supplied from the material supply port from the first build material to the second build material, and
the material switching information includes at least one of information for giving an instruction to change from a first feeder that supplies the first build material to a second feeder that supplies the second build material, information about a standby time for switching from the first build material to the second build material, and information about a feeding speed of feeding the second build material.

### (Supplementary Note 31)

A processing method to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the processing method including:
performing additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam; and
irradiating a melting area with the processing beam or a melting beam that is different from the processing beam by the beam irradiation apparatus, based on second path information indicating a path for irradiating the melting area with the processing beam or the melting beam, wherein the melting area is at least a part of a portion added by the additive manufacturing apparatus and is melted by being irradiated with the processing beam or the melting beam without supplying the build material.

### (Supplementary Note 32)

The processing method according to Supplementary Note 31, wherein the first path information and the second path information are included in a single file.

### (Supplementary Note 33)

The processing method according to Supplementary Note 31 or 32, wherein the at least a part of the portion added by the additive manufacturing apparatus is a surface of the added portion.

### (Supplementary Note 34)

The processing method according to Supplementary Note 33, wherein the second path information includes irradiation angle information that specifies an irradiation angle of the processing beam relative to the surface.

### (Supplementary Note 35)

The processing method according to Supplementary Note 33 or 34, including irradiating the melting area with the processing beam or the melting beam by the beam irradiation apparatus, based on timing information indicating timing of processing of the surface based on the second path information.

### (Supplementary Note 36)

The processing method according to Supplementary Note 35, wherein
the first path information includes information about paths of a plurality of layers that constitute the build object, and
the timing information indicates timing before building of the plurality of layers is completed.

### (Supplementary Note 37)

The processing method according to Supplementary Note 36, wherein
the plurality of layers include a first layer and a second layer that is upper than the first layer, and
the timing information indicates timing before building of the second layer, in a case where the building of the second layer prevents processing of at least a part of the surface of the first layer.

### (Supplementary Note 38)

The processing method according to any one of Supplementary Notes 31 to 37, wherein the second path information is generated based on information about an outer shape of a three-dimensional model indicating a build object to be built by the additive manufacturing apparatus.

### (Supplementary Note 39)

The processing method according to any one of Supplementary Notes 31 to 38, wherein
at least one of a spot diameter and power of the processing beam or the melting beam, in processing based on the second path information is different from a spot diameter and power of the processing beam in processing based on the first path information.

### (Supplementary Note 40)

A processing method to be used by an additive manufacturing apparatus to build a build object, the additive manufacturing apparatus including a processing head, which includes a beam irradiation apparatus that applies a processing beam for building the build object and a material supply port for supplying a build material to a position that is irradiated with the processing beam, the processing method including:
performing additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam; and
moving a measurement apparatus that measures a measurement area for performing measurement of at least one of a surface and an inside of a build object built by the additive manufacturing apparatus, based on second path information indicating a path for moving the measurement apparatus.

### (Supplementary Note 41)

The processing method according to Supplementary Note 40, wherein the first path information and the second path information are included in a single file.

### (Supplementary Note 42)

The processing method according to Supplementary Note 40 or 41, wherein the measurement is performed by at least one of a laser scanner and an imaging apparatus.

### (Supplementary Note 43)

The processing method according to Supplementary Note 42, wherein the imaging apparatus is a stereo camera including two imaging units.

### (Supplementary Note 44)

The processing method according to any one of Supplementary Notes 40 to 43, wherein the second path information is generated based on an outer shape of a three-dimensional model indicating the build object.

### (Supplementary Note 45)

The processing method according to any one of Supplementary Notes 40 to 44, wherein the second path information is generated based on a stand-off distance related to the measurement.

### (Supplementary Note 46)

The processing method according to any one of Supplementary Notes 40 to 45, wherein the second path information includes position information indicating a position at which the measurement is temporarily stopped.

### (Supplementary Note 47)

The processing method according to any one of Supplementary Notes 40 to 46, wherein the second path information includes range information indicating a range in which a movement speed of the measurement is temporarily reduced.

### (Supplementary Note 48)

The processing method according to Supplementary Note 42, wherein in a case where the measurement is performed by an imaging apparatus, the second path information includes image number information indicating a number of images captured by the imaging apparatus.

### (Supplementary Note 49)

The processing method according to Supplementary Note 48, wherein
the second path information includes speed information indicating a movement speed of the measurement, and
the number of images indicated by the image number information varies depending on the movement speed indicated by the speed information.

### (Supplementary Note 50)

The processing method according to any one of Supplementary Notes 40 to 49, including:
storing the second path information, and
in a case where a three-dimensional model of another build object is identical to the three-dimensional model of the build object, setting the stored second path information to be another piece of second path information indicating a path to be traced during measurement of at least a part of the other build object.

### (Supplementary Note 51)

The processing method according to any one of Supplementary Notes 40 to 50, including:
storing the second path information, and
in a case where a three-dimensional model of another build object is similar to the three-dimensional model of the build object, generating another piece of second path information indicating a path to be traced during measurement of at least a part of the other build object, by multiplying a path indicated by the stored second path information by a predetermined coefficient.

### (Supplementary Note 52)

An additive manufacturing apparatus that builds a build object including a plurality of layers, the additive manufacturing apparatus including:
a processing head; and
a control apparatus that controls the processing head,
wherein the control apparatus
controls the processing head to build a bead with a first width, based on first path information indicating a path for building the build object with the first width in a first layer of the plurality of layers; and
controls the processing head to build a bead with a second width that is different from the first width, based on second path information indicating a path for building the build object with the second width in the first layer.

### (Supplementary Note 53)

The additive manufacturing apparatus according to Supplementary Note 52, wherein the first path information and the second path information are generated such that a bead formed based on the first path information and a bead formed based on the second path information are built without a gap in the first layer.

### (Supplementary Note 54)

The additive manufacturing apparatus according to Supplementary Note 52 or 53, wherein the first path information and the second path information are generated such that a bead based on the first path information and a bead based on the second path information are formed without a gap, with regard to a direction that intersects a scanning direction for building a bead by relatively scanning a processing head of the additive manufacturing apparatus and a table on which the build object is placed, in building in the first layer.

### (Supplementary Note 55)

The additive manufacturing apparatus according to any one of Supplementary Notes 52 to 54, wherein in a case where a gap is generated in a first area in the first layer by performing building using only the bead with the first width in the first area, the first path information and the second path information are generated such that the building is performed in the first area without a gap, by building at least a part of the first area by using the bead with the first width and the bead with the second width.

### (Supplementary Note 56)

The additive manufacturing apparatus according to any one of Supplementary Notes 52 to 55, wherein in a case where a first amount of gap is generated in a first area in the first layer by performing building using only the bead with the first width in the first area, the first path information and the second path information are generated such that the building is performed with an amount of gap that is smaller than the first amount, by building at least a part of the first area by using the bead with the first width and the bead with the second width.

### (Supplementary Note 57)

The additive manufacturing apparatus according to Supplementary Note 56, wherein
each of the first path information and the second path information is generated based on information about at least one of a build shape and a build size obtained from 3D model information indicating a shape of the build object.

### (Supplementary Note 58)

The additive manufacturing apparatus according to any one of Supplementary Notes 52 to 57, wherein the first path information and the second path information are included in a single file.

### (Supplementary Note 59)

The additive manufacturing apparatus according to any one of Supplementary Notes 52 to 58, wherein
the first path information and the second path information are generated based on 3D model information indicating a shape of the build object.

### (Supplementary Note 60)

The additive manufacturing apparatus according to any one of Supplementary Notes 52 to 59, wherein
the first path information and the second path information are generated based on a first degree of overlap between adjacent paths with the first width and a second degree of overlap between adjacent paths with the second width.

### (Supplementary Note 61)

The additive manufacturing apparatus according to any one of Supplementary Notes 52 to 60, wherein
the first path information and the second path information are generated based on a build mode indicating at least one of a build speed and build accuracy of building the build object.

### (Supplementary Note 62)

The additive manufacturing apparatus according to any one of Supplementary Notes 52 to 61, wherein possible values of the first width and the second width are determined, based on apparatus information about the additive manufacturing apparatus.

### (Supplementary Note 63)

The additive manufacturing apparatus according to any one of Supplementary Notes 52 to 62, wherein the possible values of the first width and the second width are possible maximum values and possible minimum values of the first width and the second width.

### (Supplementary Note 64)

The additive manufacturing apparatus according to Supplementary Note 62 or 63, wherein
the additive manufacturing apparatus includes an optical system for emitting a processing beam,
the apparatus information includes optical system information about the optical system, and
the possible values of the first width and the second width are determined based on the optical system information included in the apparatus information.

### (Supplementary Note 65)

The additive manufacturing apparatus according to Supplementary Note 64, wherein
the optical system includes a Galvano scanner that is configured to change a condensed position of the processing beam,
the optical system information includes range information indicating a variable range of the condensed position by the Galvano scanner, and
the possible values of the first width and the second width are determined based on the range information.

### (Supplementary Note 66)

The additive manufacturing apparatus according to Supplementary Note 65, wherein
each of the first path information and the second path information is path information indicating a movement path of the processing head including at least the optical system, and
control information for controlling the Galvano scanner is generated based on the first path information and the second path information.

### (Supplementary Note 67)

The additive manufacturing apparatus according to Supplementary Note 64, wherein
the optical system is configured to change a spot diameter of the processing beam,
the optical system information includes information indicating a variable range of the spot diameter of the processing beam, and
the possible values of the first width and the second width are determined based on the information indicating the variable range of the spot diameter of the processing beam.

### (Supplementary Note 68)

The additive manufacturing apparatus according to any one of Supplementary Notes 52 to 67, wherein the additive manufacturing apparatus is a direct energy deposition (DED)-type additive manufacturing apparatus.

### (Supplementary Note 69)

An additive manufacturing apparatus including:
a processing head including a material supply port for supplying a build material for building a build object; and
a control apparatus that controls the processing head,
wherein the control apparatus
controls the processing head to build a bead by supplying a first build material from the material supply port, based on first path information indicating a first path for building a bead by using the first build material,
controls the processing head to build a bead by supplying a second build material that is different from the first build material, from the material supply port, based on second path information indicating a second path for building a bead by using the second build material, and
moves the processing head to a position for changing the build material supplied from the material supply port from the first build material to the second build material, based on information for moving the processing head, after a bead based on the first path information is built and before a bead based on the second path information is built.

### (Supplementary Note 70)

The additive manufacturing apparatus according to Supplementary Note 69, wherein the first path information, the second path information, and the information for moving the processing head are included in a single file.

### (Supplementary Note 71)

The additive manufacturing apparatus according to Supplementary Note 69 or 70, wherein the information for moving the processing head includes retreat position information indicating a position for the processing head to retreat from a build area.

### (Supplementary Note 72)

The additive manufacturing apparatus according to Supplementary Note 71, wherein
the retreat position information includes information indicating a plurality of retreat positions, and
the control apparatus moves the processing head to a retreat position closest to a build end position of the bead based on the first path information, among the plurality of retreat positions.

### (Supplementary Note 73)

The additive manufacturing apparatus according to Supplementary Note 72, wherein the information for moving the processing head further includes retreat path information about a retreat path that is a path for the processing head to move to the position indicated by the retreat position information.

### (Supplementary Note 74)

The additive manufacturing apparatus according to Supplementary Note 73, wherein the retreat path information is generated based on at least one of a shape of the build object and relative inclination between the processing head and a table on which the build object is placed.

### (Supplementary Note 75)

The additive manufacturing apparatus according to Supplementary Note 74, wherein
the information for moving the processing head further includes first posture change information for changing a relative posture of the processing head relative to the table to a reference posture, in a case where the relative posture of the processing head relative to the table is different from the reference posture, and
the control apparatus moves the processing head based on the retreat path information or the retreat position information, after the relative posture of the processing head relative to the table is changed to the reference posture.

### (Supplementary Note 76)

The additive manufacturing apparatus according to any one of Supplementary Notes 72 to 75, wherein the information for moving the processing head further includes return path information indicating a path for the processing head to return to a build start position of the bead based on the second path information from the position indicated by the retreat position information, after the build material is switched from the first build material to the second build material.

### (Supplementary Note 77)

The additive manufacturing apparatus according to Supplementary Note 76, wherein the information for moving the processing head includes second posture change information for changing a relative posture of the processing head relative to the table, after completion of movement based on the return path information of the processing head returning to a position for starting to build the bead based on the second path information.

### (Supplementary Note 78)

The additive manufacturing apparatus according to Supplementary Note 77, wherein the posture indicated by the second posture information is a posture after the additive manufacturing apparatus builds the bead based on the first path information.

### (Supplementary Note 79)

The additive manufacturing apparatus according to any one of Supplementary Notes 71 to 78, the control apparatus controls the processing head to switch the build material supplied by the material supply port from the first build material to the second build material after the processing head retreats from the build area to a retreat area based on the retreat position information.

### (Supplementary Note 80)

The additive manufacturing apparatus according to any one of Supplementary Notes 71 to 79, wherein the information for moving the processing head includes information about a home position.

### (Supplementary Note 81)

The additive manufacturing apparatus according to any one of Supplementary Notes 69 to 80,wherein
the control apparatus controls the processing head to switch the build material supplied from the material supply port from the first build material to the second build material, based on material switching information for switching the build material supplied from the material supply port from the first build material to the second build material, and
the material switching information includes at least one of information for giving an instruction to change from a first feeder that supplies the first build material to a second feeder that supplies the second build material, information about a standby time for switching from the first build material to the second build material, and information about a feeding speed of feeding the second build material.

### (Supplementary Note 82)

An additive manufacturing apparatus including:
a processing head, which includes at least a beam irradiation apparatus that applies a processing beam for building a build object and a material supply port for supplying a build material to a position that is irradiated with the processing beam; and
a control apparatus that controls the processing head,
wherein the control apparatus
controls the processing head to perform additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam, and
controls the processing head to irradiate a melting area with the processing beam or a melting beam that is different from the processing beam by the beam irradiation apparatus, based on second path information indicating a path for irradiating the melting area with the processing beam or the melting beam, wherein the melting area is at least a part of a portion added by the additive manufacturing apparatus and is melted by being irradiated with the processing beam or the melting beam without supplying the build material.

### (Supplementary Note 83)

The additive manufacturing apparatus according to Supplementary Note 82, wherein the first path information and the second path information are included in a single file.

### (Supplementary Note 84)

The additive manufacturing apparatus according to Supplementary Note 82 or 83, wherein the at least a part of the portion added by the additive manufacturing apparatus is a surface of the added portion.

### (Supplementary Note 85)

The additive manufacturing apparatus according to Supplementary Note 84, wherein the second path information includes irradiation angle information that specifies an irradiation angle of the processing beam relative to the surface.

### (Supplementary Note 86)

The additive manufacturing apparatus according to Supplementary Note 84 or 85, wherein the control apparatus controls the processing head such that the melting area is irradiated with the processing beam or the melting beam by the beam irradiation apparatus, based on timing information indicating timing of processing of the surface based on the second path information.

### (Supplementary Note 87)

The additive manufacturing apparatus according to Supplementary Note 86, wherein
the first path information includes information about paths of a plurality of layers that constitute the build object, and
the timing information indicates timing before building of the plurality of layers is completed.

### (Supplementary Note 88)

The additive manufacturing apparatus according to Supplementary Note 87, wherein
the plurality of layers include a first layer and a second layer that is upper than the first layer, and
the timing information indicates timing before building of the second layer, in a case where the building of the second layer prevents processing of at least a part of the surface of the first layer.

### (Supplementary Note 89)

The additive manufacturing apparatus according to any one of Supplementary Notes 82 to 88, wherein the second path information is generated based on information about an outer shape of a three-dimensional model indicating a build object to be built by the additive manufacturing apparatus.

### (Supplementary Note 90)

The additive manufacturing apparatus according to any one of Supplementary Notes 82 to 89, wherein
at least one of a spot diameter and power of the processing beam or the melting beam, in processing based on the second path information is different from a spot diameter and power of the processing beam in processing based on the first path information.

### (Supplementary Note 91)

An additive manufacturing apparatus including:
a processing head, which includes a beam irradiation apparatus that applies a processing beam for building a build object and a material supply port for supplying a build material to a position that is irradiated with the processing beam; and
a control apparatus that controls the processing head,
wherein the control apparatus
controls the processing head to perform additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam, and
moves a measurement apparatus that measures a measurement area for performing measurement of at least one of a surface and an inside of a build object built by the additive manufacturing apparatus, based on second path information indicating a path for moving the measurement apparatus.

### (Supplementary Note 92)

The additive manufacturing apparatus according to Supplementary Note 91, wherein the first path information and the second path information are included in a single file.

### (Supplementary Note 93)

The additive manufacturing apparatus according to Supplementary Note 91 or 92, wherein the measurement is performed by at least one of a laser scanner and an imaging apparatus.

### (Supplementary Note 94)

The additive manufacturing apparatus according to Supplementary Note 93, wherein the imaging apparatus is a stereo camera including two imaging units.

### (Supplementary Note 95)

The additive manufacturing apparatus according to any one of Supplementary Notes 91 to 94, wherein the second path information is generated based on an outer shape of a three-dimensional model indicating the build object.

### (Supplementary Note 96)

The additive manufacturing apparatus according to any one of Supplementary Notes 91 to 95, wherein the second path information is generated based on a stand-off distance related to the measurement.

### (Supplementary Note 97)

The additive manufacturing apparatus according to any one of Supplementary Notes 91 to 96, wherein the second path information includes position information indicating a position at which the measurement is temporarily stopped.

### (Supplementary Note 98)

The additive manufacturing apparatus according to any one of Supplementary Notes 91 to 97, wherein the second path information includes range information indicating a range in which a movement speed of the measurement is temporarily reduced.

### (Supplementary Note 99)

The additive manufacturing apparatus according to Supplementary Note 93, wherein in a case where the measurement is performed by an imaging apparatus, the second path information includes image number information indicating a number of images captured by the imaging apparatus.

### (Supplementary Note 100)

The additive manufacturing apparatus according to Supplementary Note 99, wherein
the second path information includes speed information indicating a movement speed of the measurement, and
the number of images indicated by the image number information varies depending on the movement speed indicated by the speed information.

### (Supplementary Note 101)

The additive manufacturing apparatus according to any one of Supplementary Notes 91 to 100, including:
a storage apparatus that stores the second path information, wherein
in a case where a three-dimensional model of another build object is identical to the three-dimensional model of the build object, the control apparatus sets the stored second path information to be another piece of second path information indicating a path to be traced during measurement of at least a part of the other build object.

### (Supplementary Note 102)

The additive manufacturing apparatus according to any one of Supplementary Notes 91 to 101, including:
a storage apparatus that stores the second path information, and
in a case where a three-dimensional model of another build object is similar to the three-dimensional model of the build object, the control apparatus generates another piece of second path information indicating a path to be traced during measurement of at least a part of the other build object, by multiplying a path indicated by the stored second path information by a predetermined coefficient,

### (Supplementary Note 103)

A processing method to be used by an additive manufacturing apparatus to build a build object including a plurality of layers, the processing method including:
building a bead with a first width, based on first path information indicating a path for building a build object with the first width in a first layer of the plurality of layers; and
building a bead with a second width that is different from the first width, based on second path information indicating a path for building a build object with the second width in the first layer.

### (Supplementary Note 104)

A processing method to be used by an additive manufacturing apparatus to build a build object, the additive manufacturing apparatus including a processing head including a material supply port for supplying a build material for building the build object, the processing method including:
building a bead by supplying a first build material from the material supply port, based on first path information indicating a first path for building a bead by using the first build material;
building the bead by supplying a second build material that is different from the first build material, from the material supply port, based on second path information indicating a second path for building a bead by using the second build material, and
moving the processing head to a position that is different from a build start position of a bead based on the second path information, based on information for moving the processing head, after the additive manufacturing apparatus builds a bead based on the first path information and before the additive manufacturing apparatus builds the bead based on the second path information.

### (Supplementary Note 105)

A processing method to be used by an additive manufacturing apparatus to build a build object, the additive manufacturing apparatus including a processing head, which includes a beam irradiation apparatus that applies a first processing beam for building the build object and a material supply port for supplying a build material to a position that is irradiated with the first processing beam, the processing method including:
performing additive manufacturing by supplying the build material from the material supply port to the position that is irradiated with the first processing beam by the beam irradiation apparatus, based on first path information indicating a path for performing the additive manufacturing by supplying the build material to the position that is irradiated with the first processing beam; and
irradiating an additional processing area with the processing beam or a second processing beam that is different from the first processing beam by the beam irradiation apparatus, based on second path information indicating a path for irradiating the additional processing area with the first processing beam or the second processing beam, wherein the additional processing area is at least a part of a portion added by the additive manufacturing apparatus and is irradiated with the first processing beam or the second processing beam without supplying the build material, thereby to perform processing.

### (Supplementary Note 106)

The processing method according to Supplementary Note 105, wherein processing in the additional processing area based on the second path information includes at least one of melting processing, ablation processing, and peening processing.

### (Supplementary Note 107)

An additive manufacturing apparatus including:
a processing head that builds a build object including a plurality of layers; and
a control apparatus that controls the processing head,
wherein the control apparatus
controls the processing head to build a bead with a first width, based on first path information indicating a path for building the build object with the first width in a first layer of the plurality of layers; and
controls the processing head to build a bead with a second width that is different from the first width, based on second path information indicating a path for building the build object with the second width in the first layer.

### (Supplementary Note 108)

An additive manufacturing apparatus including:
a processing head including a material supply port for supplying a build material for building a build object; and
a control apparatus that controls the processing head,
wherein the control apparatus
controls the processing head to build a bead by supplying a first build material from the material supply port, based on first path information indicating a first path for building a bead by using the first build material,
controls the processing head to build a bead by supplying a second build material that is different from the first build material, from the material supply port, based on second path information indicating a second path for building a bead by using the second build material, and
moves the processing head to a position that is different from a build start position of a bead based on the second path information, based on information for moving the processing head, after the additive manufacturing apparatus builds a bead based on the first path information and before the additive manufacturing apparatus builds the bead based on the second path information.

### (Supplementary Note 109)

An additive manufacturing apparatus including:
a processing head, which includes a beam irradiation apparatus that applies a first processing beam for building a build object and a material supply port for supplying a build material to a position that is irradiated with the first processing beam; and
a control apparatus that controls the processing head,
wherein the control apparatus
controls the processing head to perform additive manufacturing by supplying the build material from the material supply port to the position that is irradiated with the first processing beam by the beam irradiation apparatus, based on first path information indicating a path for performing the additive manufacturing by supplying the build material to the position that is irradiated with the first processing beam, and
controls the processing head to irradiate an additional processing area with the processing beam or a second processing beam that is different from the first processing beam by the beam irradiation apparatus, based on second path information indicating a path for irradiating the additional processing area with the first processing beam or the second processing beam, wherein the additional processing area is at least a part of a portion added by the additive manufacturing apparatus and is irradiated with the first processing beam or the second processing beam without supplying the build material, thereby to perform processing.

### (Supplementary Note 110)

The processing method according to Supplementary Note 96, wherein processing in the additional processing area based on the second path information includes at least one of melting processing, ablation processing, and peening processing.

### (Supplementary Note 111)

A processing method to be used by an additive manufacturing apparatus to build a build object, the processing method including:
building a bead with a first width, based on first path information indicating a path for building the build object with the first width; and
building a bead with a second width that is different from the first width, based on second path information indicating a path for building the build object with the second width.

### (Supplementary Note 112)

A processing method to be used by an additive manufacturing apparatus to build a build object, the additive manufacturing apparatus including a processing head including a material supply port for supplying a build material for building the build object, the processing method including:
building a bead by supplying a first build material from the material supply port, based on first path information indicating a first path for building a bead by using the first build material;
building a bead by supplying a second build material that is different from the first build material from the material supply port, based on second path information indicating a second path for building a bead by using the second build material; and
moving the processing head, based on information for moving the processing head, after a bead based on the first path information is built and before a bead based on the second path information is built.

### (Supplementary Note 113)

A processing method to be used by an additive manufacturing apparatus to build a build object, the additive manufacturing apparatus including a processing head, which includes a beam irradiation apparatus that applies a first processing beam for building the build object and a material supply port for supplying a build material to a position that is irradiated with the first processing beam, the processing method including:
performing additive manufacturing by supplying the build material from the material supply port to the position that is irradiated with the first processing beam by the beam irradiation apparatus, based on first path information indicating a path for performing the additive manufacturing by supplying the build material to the position that is irradiated with the first processing beam; and
performing additional processing by the beam irradiation apparatus applying the first processing beam or a second processing beam that is different from the first processing beam, based on second path information indicating a path for the additional processing to be performed by applying the first processing beam or the second processing beam.

### (Supplementary Note 114)

A processing method to be used by an additive manufacturing apparatus to build a build object, the additive manufacturing apparatus including a processing head, which includes a beam irradiation apparatus that applies a processing beam for building the build object and a material supply port for supplying a build material to a position that is irradiated with the processing beam, the processing method including:
performing additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam; and
performing measurement of at least one of a surface and an inside of a build object, based on second path information indicating a path for performing the measurement.

### (Supplementary Note 115)

An additive manufacturing apparatus including:
a processing head that builds a build object; and
a control apparatus that controls the processing head,
wherein the control apparatus
controls the processing head to build a bead with a first width, based on first path information indicating a path for building the build object with the first width; and
controls the processing head to build a bead with a second width that is different from the first width, based on second path information indicating a path for building the build object with the second width.

### (Supplementary Note 116)

An additive manufacturing apparatus including:
a processing head including a material supply port for supplying a build material for building a build object; and
a control apparatus that controls the processing head,
wherein the control apparatus
controls the processing head to build a bead by supplying a first build material from the material supply port, based on first path information indicating a first path for building a bead by using the first build material,
controls the processing head to build a bead by supplying a second build material that is different from the first build material, from the material supply port, based on second path information indicating a second path for building a bead by using the second build material, and
moves the processing head, based on information for moving the processing head, after a bead based on the first path information is built and before a bead based on the second path information is built.

### (Supplementary Note 117)

An additive manufacturing apparatus including:
a processing head, which includes a beam irradiation apparatus that applies a first processing beam for building a build object and a material supply port for supplying a build material to a position that is irradiated with the first processing beam; and
a control apparatus that controls the processing head,
wherein the control apparatus
controls the processing head to perform additive manufacturing by supplying the build material from the material supply port to the position that is irradiated with the first processing beam by the beam irradiation apparatus, based on first path information indicating a path for performing the additive manufacturing by supplying the build material to the position that is irradiated with the first processing beam, and
controls the processing head to perform additional processing by the beam irradiation apparatus applying the first processing beam or a second processing beam that is different from the first processing beam, based on second path information indicating a path for the additional processing to be performed by applying the first processing beam or the second processing beam.

### (Supplementary Note 118)

An additive manufacturing apparatus including:
a processing head, which includes a beam irradiation apparatus that applies a processing beam for building a build object and a material supply port for supplying a build material to a position that is irradiated with the processing beam; and
a control apparatus that controls the processing head,
wherein the control apparatus
controls the processing head to perform additive manufacturing by supplying the build material from the material supply port to the position that is irradiated with the processing beam by the beam irradiation apparatus, based on first path information indicating a path for performing the additive manufacturing by supplying the build material to the position that is irradiated with the processing beam; and
controls the processing head to perform measurement of at least one of a surface and an inside of a build object, based on second path information indicating a path for performing the measurement.

### (Supplementary Note 119)

An additive manufacturing apparatus that uses processing control information generated by a data generation method for generating the processing control information to be used by the additive manufacturing apparatus to build a build object, the data generation method including: setting first bead width information, which is information for building a bead with a first width; setting second bead width information, which is information for building a bead with a second width that is different from the first width; and generating the processing control information including first path information indicating a path for building the build object with the first width, and second path information indicating a path for building the build object with the second width, based on the first bead width information and the second bead width information, the additive manufacturing apparatus including:
a processing head; and
a control apparatus that controls the processing head,
wherein the control apparatus
controls the processing head to build a bead with the first width, based on the first path information included in the processing control information, and
controls the processing head to build a bead with the second width, based on the second path information included in the processing control information.

### (Supplementary Note 120)

An additive manufacturing apparatus that uses processing control information generated by a data generation method for generating the processing control information to be used by the additive manufacturing apparatus to build a build object, the additive manufacturing apparatus including a processing head including at least a material supply port for supplying a build material for building the build object, the data generation method including: generating the processing control information including first path information indicating a first path for building a bead by using a first build material, second path information indicating a second path for building a bead by using a second build material that is different from the first build material, and information for moving the processing head, after the additive manufacturing apparatus builds a bead based on the first path information and before the additive manufacturing apparatus builds a bead based on the second path information, the additive manufacturing apparatus including:
a processing head including a material supply port for supplying a build material; and
a control apparatus that controls the processing head,
wherein the control apparatus
controls the processing head to build a bead by supplying the first build material from the material supply port, based on the first path information included in the processing control information,
controls the processing head to build a bead by supplying the second build material from the material supply port, based on the second path information included in the processing control information, and
moves the processing head to a position that is different from a build start position of a bead based on the second path information, based on the information for moving the processing head, which is included in the processing control information, after a bead based on the first path information is built and before the bead based on the second path information is built.

### (Supplementary Note 121)

An additive manufacturing apparatus that uses processing control information generated by a data generation method for generating the processing control information to be used by the additive manufacturing apparatus to build a build object, the additive manufacturing apparatus including a processing head, which includes at least a beam irradiation apparatus that applies a first processing beam for building the build object and a material supply port for supplying a build material to a position that is irradiated with the first processing beam, the data generation method including: generating the processing control information including first path information indicating a path for performing additive manufacturing by supplying the build material to the position that is irradiated with the first processing beam, and second path information indicating a path for additional processing to be performed by applying the first processing beam or a second processing beam that is different from the first processing beam, the additive manufacturing apparatus including:
a processing head, which includes a beam irradiation apparatus that applies a first processing beam for building a build object and a material supply port for supplying a build material; and
a control apparatus that controls the processing head,
wherein the control apparatus
controls the processing head to perform additive manufacturing by supplying the build material from the material supply port to a position that is irradiated with the first processing beam by the beam irradiation apparatus, based on the first path information included in the processing control information, and
controls the processing head to perform additional processing by the beam irradiation apparatus applying the first processing beam or a second processing beam that is different from the first processing beam, based on the second path information included in the processing control information.

### (Supplementary Note 122)

An additive manufacturing apparatus that uses processing control information generated by a data generation method for generating the processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method including: generating the processing control information including first path information indicating a path for performing additive processing by supplying the build material to the position that is irradiated with the first processing beam, and second path information indicating a path for performing measurement of at least one of a surface and an inside of a build object, the additive manufacturing apparatus including:
a processing head, which includes a beam irradiation apparatus that applies a processing beam for building a build object and a material supply port for supplying a build material; and
a control apparatus that controls the processing head,
wherein the control apparatus
controls the processing head to perform additive manufacturing by supplying the build material from the material supply port to a position that is irradiated with the processing beam by the beam irradiation apparatus, based on the first path information included in the processing control information, and
controls the processing head to perform measurement of at least one of a surface and an inside of the build object, based on the second path information included in the processing control information.

The present invention is allowed to be changed, if desired, without departing from the essence or spirit of the invention which can be read from the claims and the entire specification, and a data generation method, a data structure, a processing method and an additive manufacturing apparatus, which involve such changes, are also intended to be within the technical scope of the present invention.

### Description of Reference Codes

- SYS: processing system
- 2: processing unit
- 21: processing head
- 211: irradiation optical system
- 212: material nozzle
- 22: head driving system
- 31: stage
- 8: imaging unit
- COM: information processing apparatus
- 501: arithmetic apparatus
- 502: storage apparatus
- 503: communication apparatus
- 504: input apparatus
- 505: output apparatus

## Claims

1. A data generation method for generating processing control information to be used by an additive manufacturing apparatus to build a build object including a plurality of layers, the data generation method comprising:
acquiring first bead width information, which is information for building a bead with a first width and which is inputted by a user;
acquiring second bead width information, which is information for building a bead with a second width that is different from the first width and which is inputted by the user; and
generating the processing control information including first path information indicating a path for building the build object with the first width in a first layer of the plurality of layers, and second path information indicating a path for building the build object with the second width in the first layer, based on the first bead width information and the second bead width information.

2. The data generation method according to claim 1, wherein the first path information and the second path information are generated such that a bead formed based on the first path information and a bead formed based on the second path information are built without a gap in the first layer.

3. The data generation method according to claim 1 or 2, wherein the first path information and the second path information are generated such that a bead based on the first path information and a bead based on the second path information are formed without a gap, with regard to a direction that intersects a scanning direction for building a bead by relatively scanning a processing head of the additive manufacturing apparatus and a table on which the build object is placed, in building in the first layer.

4. The data generation method according to any one of claims 1 to 3, wherein in a case where a gap is generated in a first area in the first layer by performing building using only the bead with the first width in the first area, the first path information and the second path information are generated such that the building is performed in the first area without a gap, by building at least a part of the first area by using the bead with the first width and the bead with the second width.

5. The data generation method according to any one of claims 1 to 4, wherein in a case where a first amount of gap is generated in a first area in the first layer by performing building using only the bead with the first width in the first area, the first path information and the second path information are generated such that the building is performed with an amount of gap that is smaller than the first amount, by building at least a part of the first area by using the bead with the first width and the bead with the second width.

6. The data generation method according to claim 5, further comprising acquiring 3D model information indicating a shape of the build object, which is inputted by the user, wherein
each of the first path information and the second path information is generated based on information about at least one of a build shape and a build size obtained from the 3D model information, the first bead width information, and the second bead width information.

7. The data generation method according to any one of claims 1 to 6, wherein the processing control information is generated such that the first path information and the second path information are included in a single file.

8. The data generation method according to any one of claims 1 to 7, further comprising acquiring 3D model information indicating a shape of the build object, wherein
the first path information and the second path information are generated based on the 3D model information, the first bead width information, and the second bead width information.

9. The data generation method according to any one of claims 1 to 8, wherein
the first width is designated by the user selecting one width from a plurality of widths, and
the second width is designated by the user selecting one width that is different from the first width, from the plurality of widths.

10. The data generation method according to any one of claims 1 to 8, wherein the first width and the second width are designated by the user inputting a numerical value.

11. The data generation method according to any one of claims 1 to 10, comprising:
acquiring a first degree of overlap between adjacent paths with the first width, which is inputted by the user;
acquiring a second degree of overlap between adjacent paths with the second width, which is inputted by the user, wherein
the first path information and the second path information are generated based on the first degree of overlap and the second degree of overlap.

12. The data generation method according to claim 11, wherein
the first degree of overlap is designated by the user selecting one degree of overlap from a plurality of degrees of overlap, and
the second degree of overlap is designated by the user selecting one degree of overlap that is different from the first degree of overlap, from the plurality of degrees of overlap.

13. The data generation method according to claim 11 or 12, wherein the first degree of overlap and the second degree of overlap are designated by the user inputting a numerical value.

14. The data generation method according to any one of claims 1 to 13, further comprising acquiring a build mode, which indicates at least one of a build speed and build accuracy of building the build object and which is inputted by the user, wherein
the first path information and the second path information are generated based on the build mode.

15. The data generation method according to any one of claims 1 to 14, further comprising:
acquiring apparatus information about the additive manufacturing apparatus; and
determining possible values of the first width and the second width, based on the apparatus information.

16. The data generation method according to any one of claims 1 to 15, wherein the possible values of the first width and the second width are possible maximum values and possible minimum values of the first width and the second width.

17. The data generation method according to claim 15 or 16, wherein
the additive manufacturing apparatus includes an optical system for emitting a processing beam,
the apparatus information includes optical system information about the optical system, and
the possible values of the first width and the second width are determined based on the optical system information included in the apparatus information.

18. The data generation method according to claim 17, wherein
the optical system includes a Galvano scanner that is configured to change a condensed position of the processing beam,
the optical system information includes range information indicating a variable range of the condensed position by the Galvano scanner, and
the possible values of the first width and the second width are determined based on the range information.

19. The data generation method according to claim 18, wherein
each of the generated first path information and the generated second path information is path information indicating a movement path of the processing head including at least the optical system,
the data generation method further comprises generating control information for controlling the Galvano scanner based on the first path information and the second path information, and
the processing control information includes the control information for controlling the Galvano scanner.

20. The data generation method according to claim 17, wherein
the optical system is configured to change a spot diameter of the processing beam,
the optical system information includes information indicating a variable range of the spot diameter of the processing beam, and
the possible values of the first width and the second width are determined based on the information indicating the variable range of the spot diameter of the processing beam.

21. The data generation method according to any one of claims 1 to 20, wherein the additive manufacturing apparatus is a DED-type additive manufacturing apparatus.

22. The data generation method according to any one of claims 1 to 21, further comprising displaying a screen for designating a layer serving as a target of the first layer, from the plurality of layers, wherein
the first path information and the second path information are information about the layer designated as the target of the first layer.

23. The data generation method according to claim 22, wherein a screen for designating the first bead width information and a screen for designating the second bead width information are a same screen.

24. A data generation method for generating processing control information to be used by an additive manufacturing apparatus to build a build object, the additive manufacturing apparatus including a processing head including at least a material supply port for supplying a build material for building the build object, the data generation method comprising:
generating the processing control information including
first path information indicating a first path for building a bead by using a first build material,
second path information indicating a second path for building a bead by using a second build material that is different from the first build material, and
information for moving the processing head to a position for changing the build material supplied from the material supply port from the first build material to the second build material, after the additive manufacturing apparatus builds a bead based on the first path information and before the additive manufacturing apparatus builds a bead based on the second path information.

25. The data generation method according to claim 24, wherein the processing control information is generated such that the first path information, the second path information, and the information for moving the processing head are included in a single file.

26. The data generation method according to claim 24 or 25, wherein the information for moving the processing head includes retreat position information indicating a position for the processing head to retreat from a build area.

27. The data generation method according to claim 26, wherein
the retreat position information includes information indicating a plurality of retreat positions, and
the processing head moves to a retreat position closest to a build end position of the bead based on the first path information, among the plurality of retreat positions.

28. The data generation method according to claim 27, wherein the processing control information further includes retreat path information indicating a retreat path that is a path for the processing head to move to the position indicated by the retreat position information.

29. The data generation method according to claim 28, wherein the retreat path information is generated based on at least one of a shape of the build object and relative inclination between the processing head and a table on which the build object is placed.

30. The data generation method according to claim 29, wherein
the processing control information further includes first posture change information for changing a relative posture of the processing head relative to the table to a reference posture, in a case where the relative posture of the processing head relative to the table is different from the reference posture, and
movement of the processing head based on the retreat path information or the retreat position information is performed after the relative posture of the processing head relative to the table is changed to the reference posture.

31. The data generation method according to any one of claims 27 to 30, wherein the processing control information further includes return path information indicating a path for the processing head to return to a build start position of the bead based on the second path information from the position indicated by the retreat position information, after the build material is switched from the first build material to the second build material.

32. The data generation method according to claim 31, wherein the processing control information includes second posture change information for changing a relative posture of the processing head relative to the table, after completion of movement based on the return path information of the processing head returning to a position for starting to build the bead based on the second path information.

33. The data generation method according to claim 32, wherein the posture indicated by the second posture change information is a posture after the additive manufacturing apparatus builds the bead based on the first path information.

34. The data generation method according to any one of claims 26 to 33, wherein the processing control information further includes switching the build material supplied by the material supply port from the first build material to the second build material after the processing head retreats from the build area to a retreat area based on the retreat position information.

35. The data generation method according to any one of claims 26 to 34, wherein the information for moving the processing head includes information about a home position.

36. The data generation method according to any one of claims 24 to 35, wherein
the processing control information further includes material switching information for switching the build material supplied from the material supply port from the first build material to the second build material, and
the material switching information includes at least one of information for giving an instruction to change from a first feeder that supplies the first build material to a second feeder that supplies the second build material, information about a standby time for switching from the first build material to the second build material, and information about a feeding speed of feeding the second build material.

37. A data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method comprising:
acquiring information, which is inputted by a user, about a melting area that is at least a part of a portion added by the additive manufacturing apparatus and that is melted by being irradiated with the processing beam or a melting beam that is different from the processing beam without supplying the build material; and
generating the processing control information including first path information indicating a path for performing additive manufacturing by supplying the build material to the position that is irradiated with the processing beam, and second path information indicating a path for irradiating the melting area with the processing beam or a melting beam that is different from the processing beam.

38. The data generation method according to claim 37, wherein the processing control information is generated such that the first path information and the second path information are included in a single file.

39. The data generation method according to claim 37 or 38, wherein the at least a part of the portion added by the additive manufacturing apparatus is a surface of the added portion.

40. The data generation method according to claim 39, wherein the second path information includes irradiation angle information that specifies an irradiation angle of the processing beam relative to the surface.

41. The data generation method according to claim 39 or 40, wherein the processing control information includes timing information indicating timing of processing of the surface based on the second path information.

42. The data generation method according to claim 41, wherein
the first path information includes information about paths of a plurality of layers that constitute the build object, and
the timing information indicates timing before building of the plurality of layers is completed.

43. The data generation method according to claim 42, wherein
the plurality of layers include a first layer and a second layer that is upper than the first layer, and
the timing information indicates timing before building of the second layer, in a case where the building of the second layer prevents processing of at least a part of the surface of the first layer.

44. The data generation method according to any one of claims 37 to 43, wherein the second path information is generated based on information about an outer shape of a three-dimensional model indicating a build object to be built by the additive manufacturing apparatus.

45. The data generation method according to any one of claims 37 to 44, wherein
the processing control information includes processing beam information indicating at least one of a spot diameter and power of the processing beam, in processing based on the first path information and processing based on the second path information, and
at least one of the spot diameter and power of the processing beam indicated by the processing beam information in the processing based on the second path information is different from the spot diameter and power of the processing beam indicated by the processing beam information in the processing based on the first path information.

46. A data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method comprising:
acquiring information, which is inputted by a user, about a measurement area for performing measurement of at least one of a surface and an inside of a build object built by the additive manufacturing apparatus; and
generating the processing control information including first path information indicating a path for performing additive manufacturing by supplying the build material to the position that is irradiated with the processing beam, and second path information indicating a path for moving a measurement apparatus that measures the measurement area.

47. The data generation method according to claim 46, wherein the processing control information is generated such that the first path information and the second path information are included in a single file.

48. The data generation method according to claim 46 or 47, wherein the measurement is performed by at least one of a laser scanner and an imaging apparatus.

49. The data generation method according to claim 48, wherein the imaging apparatus is a stereo camera including two imaging units.

50. The data generation method according to any one of claims 46 to 49, wherein the second path information is generated based on an outer shape of a three-dimensional model indicating the build object.

51. The data generation method according to any one of claims 46 to 50, wherein the second path information is generated based on a stand-off distance related to the measurement.

52. The data generation method according to any one of claims 46 to 51, wherein the second path information includes position information indicating a position at which the measurement is temporarily stopped.

53. The data generation method according to any one of claims 46 to 52, wherein the second path information includes range information indicating a range in which a movement speed of the measurement is temporarily reduced.

54. The data generation method according to claim 48, wherein in a case where the measurement is performed by an imaging apparatus, the second path information includes image number information indicating a number of images captured by the imaging apparatus.

55. The data generation method according to claim 54, wherein
the second path information includes speed information indicating a movement speed of the measurement, and
the number of images indicated by the image number information varies depending on the movement speed indicated by the speed information.

56. The data generation method according to any one of claims 46 to 55, comprising:
storing the second path information, and
in a case where a three-dimensional model of another build object is identical to the three-dimensional model of the build object, setting the stored second path information to be another piece of second path information indicating a path to be traced during measurement of at least a part of the other build object.

57. The data generation method according to any one of claims 46 to 56, comprising:
storing the second path information, and
in a case where a three-dimensional model of another build object is similar to the three-dimensional model of the build object, generating another piece of second path information indicating a path to be traced during measurement of at least a part of the other build object, by multiplying a path indicated by the stored second path information by a predetermined coefficient,

58. A data structure, comprising first data indicating correspondence between model information indicating a three-dimensional model of a build object and condition information indicating a build condition of a processing apparatus that builds the build object.

59. The data structure according to claim 58, further comprising second data indicating parameter information including a variable parameter, as a part of processing control information for controlling the processing apparatus, which is generated based on the three-dimensional model indicated by the model information and the build condition indicated by the condition information associated with the model information.

60. The data structure according to claim 58 or 59, wherein the first data indicate correspondence between a plurality of pieces of model information respectively indicating three-dimensional models of a plurality of build objects, and a plurality of pieces of condition information of the processing apparatus that builds the plurality of build objects.

61. A data structure, comprising second data indicating correspondence between processing path information indicating a processing path for building a build object and condition information indicating a build condition of a processing apparatus that builds the build object.

62. A data generation method comprising:
reading management information including first data indicating correspondence between model information indicating a three-dimensional model of a build object and condition information indicating a build condition of a processing apparatus that builds the build object;
reading the model information and the condition information indicated by the first data included in the management information; and
generating parameter information including a variable parameter, as a part of processing control information for controlling the processing apparatus, based on the three-dimensional model indicated by the model information and the build condition indicated by the condition information associated with the model information.

63. The data generation method according to claim 62, wherein the parameter information includes, as the variable parameter, a build speed of building the build object by the processing apparatus.

64. The data generation method according to claim 62 or 63, wherein the parameter information includes, as the variable parameter, a supply speed by the processing apparatus of supplying a build material for building the build object.

65. The data generation method according to any one of claims 62 to 64, comprising adding second data indicating the parameter information, to the management information.

66. A data generation method for generating processing control information to be used by an additive manufacturing apparatus to build a build object including a plurality of layers, the data generation method comprising:
acquiring first bead width information, which is information for building a bead with a first width and which is inputted by a user;
automatically setting second bead width information, which is information for building a bead with a second width that is different from the first width; and
generating the processing control information including first path information indicating a path for building the build object with the first width in a first layer of the plurality of layers, and second path information indicating a path for building the build object with the second width in the first layer, based on the first bead width information and the second bead width information.

67. A data generation method for generating processing control information to be used by an additive manufacturing apparatus to build a build object, the additive manufacturing apparatus including a processing head including at least a material supply port for supplying a build material for building the build object, the data generation method comprising:
generating the processing control information including
first path information indicating a first path for building a bead by using a first build material,
second path information indicating a second path for building a bead by using a second build material that is different from the first build material, and
information for moving the processing head to a position that is different from a build start position of a bead based on the second path information, after the additive manufacturing apparatus builds a bead based on the first path information and before the additive manufacturing apparatus builds the bead based on the second path information.

68. A data generation method for generating processing control information to be used by an additive manufacturing apparatus to build a build object, the additive manufacturing apparatus including a processing head, which includes at least a beam irradiation apparatus that applies a first processing beam for building the build object and a material supply port for supplying a build material to a position that is irradiated with the first processing beam, the data generation method comprising:
acquiring information about an additional processing area in which at least a part of a portion added by the additive manufacturing apparatus is processed by being irradiated with the first processing beam or a second processing beam that is different from the first processing beam without supplying the build material; and
generating the processing control information including first path information indicating a path for performing additive manufacturing by supplying the build material to the position that is irradiated with the first processing beam, and second path information indicating a path for irradiating the additional processing area with the first processing beam or the second processing beam that is different from the first processing beam.

69. The data generation method according to claim 68, wherein processing of the part of the portion added by the additive manufacturing apparatus based on the second path information includes at least one of melting processing, ablation processing, and peening processing.

70. A data generation method for generating processing control information to be used by an additive manufacturing apparatus to build a build object, the data generation method comprising:
setting first bead width information, which is information for building a bead with a first width;
setting second bead width information, which is information for building a bead with a second width that is different from the first width; and
generating the processing control information including first path information indicating a path for building the build object with the first width, and second path information indicating a path for building the build object with the second width, based on the first bead width information and the second bead width information.

71. A data generation method for generating processing control information to be used by an additive manufacturing apparatus to build a build object, the additive manufacturing apparatus including a processing head including at least a material supply port for supplying a build material for building the build object, the data generation method comprising:
generating the processing control information including
first path information indicating a first path for building a bead by using a first build material,
second path information indicating a second path for building a bead by using a second build material that is different from the first build material, and
information for moving the processing head, after the additive manufacturing apparatus builds a bead based on the first path information and before the additive manufacturing apparatus builds a bead based on the second path information.

72. A data generation method for generating processing control information to be used by an additive manufacturing apparatus to build a build object, the additive manufacturing apparatus including a processing head, which includes at least a beam irradiation apparatus that applies a first processing beam for building the build object and a material supply port for supplying a build material to a position that is irradiated with the first processing beam, the data generation method comprising:
generating the processing control information including first path information indicating a path for performing additive manufacturing by supplying the build material to the position that is irradiated with the first processing beam, and second path information indicating a path for additional processing to be performed by applying the first processing beam or a second processing beam that is different from the first processing beam.

73. A data generation method for generating processing control information to be used by an additive manufacturing apparatus to build a build object, the additive manufacturing apparatus including a processing head, which includes at least a beam irradiation apparatus that applies a processing beam for building the build object and a material supply port for supplying a build material to a position that is irradiated with the processing beam, the data generation method comprising:
generating the processing control information including first path information indicating a path for performing additive processing by supplying the build material to the position that is irradiated with the first processing beam, and second path information indicating a path for performing measurement of at least one of a surface and an inside of a build object.

74. A processing method using the processing control information generated by the data generation method according to claim 70, the processing method comprising:
building a bead with the first width, based on the first path information included in the processing control information; and
building a bead with the second width, based on the second path information included in the processing control information.

75. A processing method using the processing control information generated by the data generation method according to claim 71, the processing method comprising:
building a bead by using the first build material supplied from the material supply port, based on the first path information included in the processing control information;
building a bead by using the second build material supplied from the material supply port, based on the second path information included in the processing control information; and
moving the processing head based on the information for moving the processing head, which is included in the processing control information, after the bead based on the first path information is built and before the bead based on the second path information is built.

76. A processing method using the processing control information generated by the data generation method according to claim 72, the processing method comprising:
performing the additive manufacturing by supplying the build material from the material supply port to the position that is irradiated with the first processing beam by the beam irradiation apparatus, based on the first path information included in the processing control information; and
performing the additional processing by the beam irradiation apparatus applying the first processing beam or the second processing beam, based on the second path information included in the processing control information.

77. A processing method using the processing control information generated by the data generation method according to claim 73, the processing method comprising:
performing the additive manufacturing by supplying the build material from the material supply port to the position that is irradiated with the processing beam by the beam irradiation apparatus, based on the first path information included in the processing control information; and
performing the measurement of at least one of the surface and the inside of the build object, based on the second path information included in the processing control information.
